# EUROPEAN PATENT SPECIFICATION

(11) **EP 4 384 561 B1**
(45) Date of publication and mention of the grant of the patent: **30.07.2025**
(21) Application number: 22761000.3
(22) Date of filing: 10.08.2022
(51) Int. Cl.: C08F 283/06, C08L 51/08, C11D 3/37, C11D 3/00

(54) **BIODEGRADABLE GRAFT POLYMERS**
BIOLOGISCH ABBAUBARE PFROPFPOLYMERE
POLYMÈRES GREFFÉS BIODÉGRADABLES

(30) Priority: 12.08.2021 EP 21191080; 12.08.2021 EP 21191106
(43) Date of publication of application: 19.06.2024
(73) Proprietor: BASF SE, 67056 Ludwigshafen am Rhein (DE)
(72) Inventor: MUELLER, Jan Ole, 67056 Ludwigshafen (DE); BENLAHMAR, Ouidad, 67056 Ludwigshafen (DE); WEISS, Thomas, 67056 Ludwigshafen (DE); EBERT, Sophia, 67056 Ludwigshafen (DE); HUELSKOETTER, Frank, Cincinnati, Ohio 45202 (US); SI, Gang, Newcastle upon Tyne, NE12 9BZ (GB); GORCZYNSKA COSTELLO, Katarzyna, Newcastle upon Tyne, NE12 9BZ (GB); MCLUCKIE, Kate Moira, Cincinnati, Ohio 45202 (US)
(74) Representative: BASF IP Association
(86) International application number: PCT/EP2022/072402
(87) International publication number: WO 2023/017062

(56) References cited:
- EP-A1- 0 285 935
- WO-A1-91/19778
- US-A1- 2019 390 142

## Description

The present invention relates to novel graft polymers comprising a copolymer backbone (A) as a graft base having polymeric sidechains (B) grafted thereon. The polymeric sidechains (B) are obtainable by polymerization of at least one vinyl ester monomer (B1) and optionally a further monomer (B2), wherein - if present - the weight ratio of monomer (B2) to monomer (B1) is less than 0.5. The copolymer backbone (A) copolymer backbone is obtainable by polymerization of at least two monomers selected from the group of ethylene oxide, 1,2-propylene oxide, 1,2-butylene oxide, 2,3-butylene oxide, 1,2-pentene oxide or 2,3-pentene oxide, wherein the distribution of the alkylene oxide moieties within the copolymer backbone is in random order, and wherein the molecular weight of the copolymer backbone Mₙ in g/mol is within 500 to 7000. The present invention further relates to a process for obtaining such a graft polymer, preferably being carried out by free-radical polymerization. Furthermore, the present invention relates to the use of such a graft polymer within, for example, fabric and home care products. Another subject-matter of the present invention are fabric and home care products as such, containing such a graft polymer.

Various states have already introduced initiatives to ban microplastics especially in cosmetic products. Beyond this ban of insoluble microplastic there is an intense dialog on future requirements for soluble polymers used in consumer products. It is therefore highly desirable to identify new better biodegradable ingredients for such applications. This problem is predominantly serious for polymers produced by radical polymerization based on carbon-only backbones (a backbone not containing heteroatoms such as oxygen), since a carbon-only backbone is particularly difficult to degrade for microorganisms. Even radically produced graft polymers of industrial importance with a polyethylene glycol backbone show only limited biodegradation in wastewater. However, the polymers described by the current Invention are preferably produced by radical graft polymerization and provide enhanced biodegradation properties compared to the state-of-the-art.

WO 2007/138053 discloses amphiphilic graft polymers based on water-soluble polyalkylene oxides (A) as a graft base and side chains formed by polymerization of a vinyl ester component (B), said polymers having an average of less than one graft site per 50 alkylene oxide units and mean molar masses M of from 3 000 to 100 000. However, WO 2007/138053 does not contain any disclosure in respect of the biodegradability of the respective graft polymers disclosed therein; as backbones only "water-soluble polyalkylene oxides" are specified.

WO 03/042262 relates to graft polymers comprising (A) a polymer graft skeleton with no mono-ethylenic unsaturated units and (B) polymer sidechains formed from co-polymers of two different mono-ethylenic unsaturated monomers (B1) and (B2), each comprising a nitrogen-containing heterocycle, whereby the proportion of the sidechains (B) amounts to 35 to 55 wt.-% of the total polymer. However, the graft polymers according to WO 03/042262 are not based on vinyl ester monomers within the respective polymer sidechains grafted onto the backbone. Beyond that, WO 03/042262 does not have any disclosure in connection with the biodegradability of the graft polymers disclosed therein.

US-A 5,318,719 relates to a novel class of biodegradable water-soluble graft copolymers having building, anti-filming, dispersing and threshold crystal inhibiting properties comprising (a) an acid functional monomer and optionally (b) other water-soluble, monoethylenically unsaturated monomers copolymerizable with (a) grafted to a biodegradable substrate comprising polyalkylene oxides and/or polyalkoxylated materials. However, US-A 5,318,719 requires that the respective sidechain of said graft polymers mandatorily comprises a high amount of acid-functional monomers such as acrylic acid or methacrylic acid. Such type of acid monomers are not useful within the context of the present invention.

US 2019/0390142 relates to fabric care compositions that include a graft copolymer, which may be composed of (a) a polyalkylene oxide, such as polyethylene oxide (PEG); (b) N-vinylpyrrolidone(VP); and (c) a vinyl ester, such as vinyl acetate. However, US 2019/0390142 does not disclose a backbone as presently required, nor any biodegradability; all examples disclose only polyethylene oxides as backbone .

Unpublished patent application PCT/EP2021/053446 relates to graft polymers comprising a block copolymer backbone (A) as a graft base having polymeric sidechains (B) grafted thereon. The polymeric sidechains (B) are obtainable by polymerization of at least one vinyl ester monomer (B1) and optionally N-vinylpyrrolidone as optional further monomer (B2). Most preferably, the block copolymer backbone (A) is a triblock copolymer of polyethylene oxide (PEG) and polypropylene oxide (PPG). However, the backbone as presently required is not disclosed.

WO2020/005476 discloses a fabric care composition comprising a graft copolymer and a so-called treatment adjunct, the graft copolymer comprising a polyalkylene oxide as backbone based on ethylene oxide, propylene oxide, or butylene oxide, preferably poly ethylene oxide, and N-vinylpyrrolidone and vinyl ester as grafted side chains on the backbone and with backbone and both monomers in a certain ratio. Explicitly disclosed however are only poly ethylene oxides as backbone.

WO2020/264077 discloses cleaning compositions containing a combination of enzymes with a polymer such composition being suitable for removal of stains from soiled material.

This publication discloses a so-called "suspension graft copolymer" which is selected from the group consisting of poly (vinylacetate)-g-poly (ethylene glycol), poly(vinylpyrrolidone)-poly(vinyl acetate)-g-poly(ethylene glycol), and combinations thereof. The backbone however is not as required by the present invention.

WO0018375 discloses pharmaceutical compositions comprising a graft polymers obtained by polymerization of at least one vinyl ester of aliphatic C1-C24-carboxylic acids in the presence of polyethers, with the vinyl ester preferably being vinyl acetate. In the most preferred version the graft polymer is prepared from grafting vinyl acetate on PEG of Mw 6000 g/mol and thereafter hydrolyzing the vinyl acetate to the alcohol (which would then resemble a polymer being obtained from the hypothetical monomer "vinyl alcohol"). Main use is the formation of coatings and films on solid pharmaceutical dosage forms such as tablets etc.

As polymer backbones in WO0018375 poly ethers having a number average molecular weight in the range below 500000, preferably in the range from 300 to 100000, particularly preferably in the range from 500 to 20000, very particularly preferably in the range from 800 to 15000 g/mol are disclosed. It is further mentioned as advantageous to use homopolymers of ethylene oxide or copolymers with an ethylene oxide content of from 40 to 99% by weight and thus a content of ethylene oxide units in the ethylene oxide polymers preferably being employed from 40 to 100 mol %. Suitable as comonomers for these copolymers are said to be propylene oxide, butylene oxide and/or isobutylene oxide, with suitable examples being said to be copolymers of ethylene oxide and propylene oxide, copolymers of ethylene oxide and butylene oxide, and copolymers of ethylene oxide, propylene oxide and at least one butylene oxide. The ethylene oxide content in the copolymers is stated to be preferably from 40 to 99 mol %, the propylene oxide content from 1 to 60 mol % and the butylene oxide content in the copolymers from 1 to 30 mol %. Not only straight-chain but also branched homo- or copolymers are said to be usable as grafting base for the grafting.

Exemplified however are in WO0018375 only PEG 6000 and 9000, a "polyethylene glycol/polypropylene glycol block copolymer" (with average molecular weight "about 8000") and "polyglycerol" (with average molecular weight "2200") (all in g/mol). Five examples only employ vinyl acetate, and only one example employs vinylacetate and methyl methacrylate as monomers. No other monomers are exemplified. All examples employ as final step the hydrolysis of the polymerized vinyl acetate monomer.

Hence, no polymer is being produced and characterized in WO0018375 containing non-hydrolyzed vinyl acetate as claimed in the present invention.

Also, no specific graft polymer is being disclosed nor claimed in WO0018375 being made from poly alkylene oxide polymers other than PEG as polymer backbone

The disclosure as such focuses on different compositions comprising only PEGs, grafted with vinyl acetate and then hydrolyzed to vinyl alcohols for use as film-forming polymers in pharmaceutical applications.

Also not disclosed in WO0018375 is the use of such polymers as disclosed herein for detergent and cleaning or fabric care applications. No such application or uses are mentioned at all in this disclosure.

### Object of the Invention

The object of the present invention is to provide novel graft polymers. Furthermore, these novel graft polymers should have beneficial properties in respect of biodegradability and/or their washing behavior, when being employed within compositions such as cleaning compositions.

This object is achieved by a graft polymer comprising
(A) a copolymer backbone as a graft base, wherein said copolymer backbone (A) is obtainable by polymerization of at least two monomers selected from the group of ethylene oxide, 1,2-propylene oxide, 1,2-butylene oxide, 2,3-butylene oxide, 1,2-pentene oxide or 2,3-pentene oxide,
   a. wherein the distribution of the alkylene oxide moieties within the copolymer backbone is in random order, and
   b. wherein the molecular weight of the copolymer backbone Mₙ in g/mol is within 500 to 7000, and
(B) polymeric sidechains grafted onto the copolymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1,
   comprising in percent by weight in relation to the total weight of the graft polymer 25 to 85%, of the copolymer backbone (A),
      And
   15 to 75%, of the polymeric sidechains (B).

The graft polymers according to the present invention may be used, for example, within cleaning compositions and/or fabric and home care products. They lead to an at least comparable and preferably even improved anti redeposition and cleaning performance within such compositions or products, for example in respect of redeposition of soils and removing of stains, compared to corresponding polymers or graft polymers according to the prior art. Beyond that, the graft polymers according to the present invention lead to an improved biodegradability when being employed within such compositions or products, for example within cleaning compositions and/or fabric and home care products.

Graft polymers with enhanced biodegradation according to the current invention can be used advantageously in washing and cleaning compositions, where they support the removal of hydrophobic soils from textile or hard surfaces by the surfactants and thus improve the washing and cleaning performances of the formulations. Moreover, they bring about better dispersion of the removed soil in the washing or cleaning liquor and prevent its redeposition onto the surfaces of the washed or cleaned materials.

As used herein, the articles "a" and "an" when used in a claim, are understood to mean one or more of what is claimed or described. As used herein, the terms "include(s)" and "including" are meant to be non-limiting.

The compositions of the present disclosure can "comprise" (i.e. contain other ingredients), "consist essentially of" (comprise mainly or almost only the mentioned ingredients and other ingredients in only very minor amounts, mainly only as impurities), or "consist of" (i.e. contain only the mentioned ingredients and in addition may contain only impurities not avoidable in an technical environment, preferably only the ingredients) the components of the present disclosure.

Similarly, the terms "substantially free of...." or" substantially free from..." or "(containing/comprising) essentially no...." may be used herein; this means that the indicated material is at the very minimum not deliberately added to the composition to form part of it, or, preferably, is not present at analytically detectable levels. It is meant to include compositions whereby the indicated material is present only as an impurity in one of the other materials deliberately included. The indicated material may be present, if at all, at a level of less than 1%, or even less than 0.1%, or even more less than 0.01%, or even 0%, by weight of the composition.

The term "about" as used herein encompasses the exact number "X" mentioned as e.g. "about X%" etc., and small variations of X, including from minus 5 to plus 5 % deviation from X (with X for this calculation set to 100%), preferably from minus 2 to plus 2 %, more preferably from minus 1 to plus 1 %, even more preferably from minus 0,5 to plus 0,5 % and smaller variations. Of course, if the value X given itself is already "100%" (such as for purity etc.) then the term "about" clearly can and thus does only mean deviations thereof which are smaller than "100".

The phrase "fabric care composition" is meant to include compositions and formulations designed for treating fabric. Such compositions include but are not limited to, laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, unit dose formulation, delayed delivery formulation, detergent contained on or in a porous substrate or nonwoven sheet, and other suitable forms that may be apparent to one skilled in the art in view of the teachings herein and detailed herein below when describing the compositions. Such compositions may be used as a pre-laundering treatment, a post- laundering treatment, or may be added during the rinse or wash cycle of the laundering operation, and as further detailed herein below when describing the use and application of the inventive graft polymers and compositions comprising such graft polymers.

Unless otherwise noted, all component or composition levels are in reference to the active portion of that component or composition, and are exclusive of impurities, for example, residual solvents or by-products, which may be present in commercially available sources of such components or compositions.

All temperatures herein are in degrees Celsius (°C) unless otherwise indicated. Unless otherwise specified, all measurements herein are conducted at 20°C and under the atmospheric pressure. In all embodiments of the present disclosure, all percentages are by weight of the total composition, unless specifically stated otherwise. All ratios are weight ratios, unless specifically stated otherwise.

### Graft Polymer

Thus, the first subject-matter of the present invention relates to a graft polymer
(A) a copolymer backbone as a graft base, wherein said copolymer backbone (A) is obtainable by polymerization of at least two monomers selected from the group of ethylene oxide, 1,2-propylene oxide, 1,2-butylene oxide, 2,3-butylene oxide, 1,2-pentene oxide or 2,3-pentene oxide,
   a. wherein the distribution of the alkylene oxide moieties within the copolymer backbone is in random order, and
   b. wherein the molecular weight of the copolymer backbone Mn in g/mol is within 500 to 7000, preferably not more than 6000, more preferably not more than 5000, even more preferably not more than 4500, even more preferably not more than 4000, even more preferably not more than 3500, even more preferably not more than 3000, and most preferably not more than 2500, and preferably at least 1000, more preferably at least 1200,
   and
(B) polymeric sidechains grafted onto the copolymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1,
   comprising in percent by weight in relation to the total weight of the graft polymer 25 to 85%, preferably 30 to 80%, more preferably 35 to 80%, even more preferably 40 to 75%, and most preferably 55 to 75%, of the copolymer backbone (A),
      And
   15 to 75%, preferably 20 to 70%, more preferably 20 to 65 %, even more preferably 25 to 60%, most preferably 25 to 45%, of the polymeric sidechains (B).

The ratio of the random copolymer backbone (A) versus the polymeric side chains (B) within the graft polymers as exemplified in the present invention may not be limited to specific values; any ratio known to a person skilled in the art can in principle be employed. However, good results are obtained when using the ratios as detailed before.

Copolymer backbones (A) as such are known to a person skilled in the art as well as methods for producing such copolymers backbones, e.g., in EP362688. Such methods are typically the co-polymerization of at least two alkylene oxides using known means.

Hence, suitable copolymer backbones (A) with the alkylene oxides arranged in random order to be employed within the present invention can be obtained easily by standard alkoxylation polymerization processes employing the required alkylene oxides in the required ratios.

In respect of the copolymer backbone (A) of the graft polymers according to the present invention, it is preferred that the copolymer backbone (A) is obtainable by polymerization of
i) at least two monomers selected from the group of ethylene oxide, 1,2-propylene oxide or 1,2-butylene oxide, preferably at least ethylene oxide being selected as one of the monomers, more preferably only ethylene oxide and propylene oxide being selected as monomers, and/or
ii) the relative amount of EO in the polymer backbone A is within 5 to 95%, preferably 10 to 90%, more preferably 15 to 85%, even more preferably at least 20 to 80% (all as weight percent in relation to the total mass of alkylene oxides in the polymer backbone (A)).

In respect of the graft polymer it is further preferred that any of the previously defined preferred options i) and ii) for the polymer backbone may be combined with a third preferred option, i.e. that
iii) essentially no monomer (B2) is employed for the polymerization to obtain the side chains (B).

The graft polymers according to the present invention preferably have a low polydispersity.

It is preferred that the graft polymer of the invention and/or as detailed before has a polydispersity M_{w}/Mₙ of < 5, preferably < 3.5, more preferably < 3, and most preferably in the range from 1.0 to 2.5 (with M_{w} = weight average molecular weight and Mₙ = number average molecular weight; with polydispersity being without unit [^{g}/ₘₒₗ / ^{g}/ₘₒₗ]). The respective values of M_{w} and/or Mₙ can be determined as described within the experimental section below.

The copolymer backbone (A) contained within the graft polymer according to the present invention and/or as detailed before may either be capped or not capped (uncapped) at the respective end-groups of the backbone. By consequence, within the present invention, it is possible that the copolymer backbone (A) is optionally capped at one or both end-groups, preferably the copolymer backbone (A) is not capped at both end-groups or, if the copolymer backbone (A) is capped, the capping is done by C₁-C₂₅-alkyl groups, preferably C1 to C4-groups.

In one specifically preferred embodiment of the present invention, the graft polymer of the invention and/or as detailed before comprises
(A) 55 to 75% by weight (in relation to the total weight of the graft polymer) of the copolymer backbone (A) which is obtainable by polymerization of ethylene oxide and 1,2-propylene oxide as alkylene oxide monomers, the alkylene oxide monomer distribution in the backbone is in random order, and the molecular weight of the copolymer backbone Mn in g/mol is within 1200 to 2500, with the relative amount of EO in the polymer backbone (A) being within 20 to 80% (by weight in relation to the total mass of alkylene oxides in the polymer backbone (A))
   and
(B) 25 to 45% by weight (in relation to the total weight of the graft polymer) of the polymeric sidechains grafted onto the copolymer backbone which are obtained from vinyl acetate as the sole vinyl ester monomer (B1), with essentially no other monomer (B2) being employed

Copolymers (A) can contain different levels of hydrophilic ethylene glycol which influences the overall properties of the graft polymer. The copolymers can be low, medium or high respective %EO which has effects on the biodegradation properties as well as the performance in laundry formulations. Hence, to achieve a good performance upon application but also upon biodegradation, it is preferred that the relative amount of EO in the polymer backbone (A) being within 20 to 80% (by weight in relation to the total mass of alkylene oxides in the polymer backbone (A)).

The polymer backbone may comprise an additional starting block, which is present when the preparation process for the polyalkylene oxide-polymer starts. This starting block reacts with alkylene oxides, and those chains further grow, leading to a polyalkylene oxide containing the starting block within the chain. Suitable starting blocks are such which can reacts with alkylene oxides and possess two hydroxyl groups, such as glycols, and alkylene glycols, and diols; preferably, those starting blocks are selected from glycerine, 2-methyl-1,3-propanediol, neopenthylglycol, diethyleneglycol, triethyleneglycol, dipropylene glycol, 1,3-propanediol, 1,3-butanediol, trismethylol propane, water, pentaerythritol, sorbitol, saccharose, glucose, fructose, lactose, and similar compounds having a similar chemical structure. Possible in principle are also diamines such as ethylene-diamine, propylene diamine, die-ethylene triamine, di-propylene triamine etc., but those amines are not preferred in view of potential problems with ecotoxicity, especially when released again from the polymer structures upon bio-degradation of the inventive graft polymers.

In a more preferred embodiment, such starting blocks are not employed within the polymer backbones of the present invention.

In respect of the polymeric sidechains (B) contained within the graft polymer according to the present invention, it is preferred that the polymeric sidechains (B) are obtained by radical polymerization and/or the at least one vinyl ester monomer (B1).

As vinyl ester monomer (B1) any further vinyl ester besides vinyl acetate, vinyl propionate or vinyl laurate may be employed which are known to a person skilled in the art, such as vinyl valerate, vinyl pivalate, vinyl neodecanoate, vinyl decanoate or vinyl benzoate.

In case an optional further monomer (B2) is employed for preparing the polymeric sidechains (B) within the graft polymers according to the present invention, the ratio of the mandatory vinyl ester monomer (B1) versus said further monomer (B2) may in principle have any value known to a person skilled in the art. The amount of vinyl ester monomer (B1) is usually not smaller than 1% by weight (in relation to the sum of (B1) and (B2)).

However, in a preferred embodiment the graft polymer of the invention and/or as detailed before comprises polymeric sidechains (B) which are obtained or obtainable by radical polymerization of the at least one vinyl ester monomer (B1) and optionally at least one other monomer (B2), in the presence of the polymer backbone A,
wherein preferably at least 10 weight percent of the total amount of vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B1 being employed),
and wherein preferably essentially no monomer (B2) is employed.

Even more so, in a more preferred embodiment, the graft polymer of the invention and/or as detailed before comprises
(A) 55 to 75% by weight (in relation to the total weight of the graft polymer) of the copolymer backbone (A) which is obtainable by polymerization of ethylene oxide and 1,2-propylene oxide as alkylene oxide monomers, the alkylene oxide monomer distribution in the backbone is in random order, and the molecular weight of the copolymer backbone Mn in g/mol is within 1200 to 2500, with the relative amount of EO in the polymer backbone (A) being within 20 to 80% (by weight in relation to the total mass of alkylene oxides in the polymer backbone (A)) and
(B) 25 to 45% by weight (in relation to the total weight of the graft polymer) of the polymeric sidechains grafted onto the copolymer backbone which are obtained from vinyl acetate as the sole vinyl ester monomer (B1), with essentially no monomer (B2) being employed.

The graft polymers of the invention may contain a certain amount of ungrafted polymers ("ungrafted side chains") made of vinyl ester(s), e.g. poly vinyl acetate in case only vinyl acetate is employed, and/or - when further monomers are employed - homo- and copolymers of vinyl ester(s) with the other monomers. The amount of such ungrafted vinylacetate-homo- and copolymers may be high or low, depending on the reaction conditions, but is preferably to be lowered and thus low. By this lowering, the amount of grafted side chains is preferably increased. Such lowering can be achieved by suitable reaction conditions, such as dosing of vinyl ester and radical initiator and their relative amounts and also in relation to the amount of backbone being present. This is generally known to a person of skill in the present field.

The inventive graft polymers maybe characterized by their degree of grafting (number of graft sites of the polymeric sidechains (B) on the copolymer backbone (A)). The degree of graft may be high or low, depending on the reaction conditions. Preferably, the degree of grafting is low to medium, more preferably low. "Low" in this aspect means that statistically less than 2 graft sites per 50 alkylene oxide units are present.

This adjustment of the degree of grafting and this amount of ungrafted polymers can be used to optimize the performance in areas of specific interest, e.g. certain (e.g. detergent-) formulations, application areas or desired cleaning etc. performance.

In another - not preferred - embodiment of the present invention, the polymeric sidechains (B) of the graft polymer according to the present invention are fully or - more preferred - at least partially hydrolyzed after the graft polymer as such is obtained. This means that the full or at least partial hydrolyzation of the polymeric sidechains (B) of the graft polymer is carried out after the polymerization process of the polymeric sidechains (B) is finished.

Due to this full or at least partial hydrolyzation of the polymeric sidechains (B) of the graft polymers according to the present invention, the respective sidechain units originating from the at least one vinyl ester monomer (B1) are changed from the respective ester function into the alcohol function within the polymeric sidechain (B). It has to be noted that the corresponding vinyl alcohol is not suitable to be employed as monomer within the polymerization process of the polymeric sidechains (B) due to stability aspects. In order to obtain an alcohol function (hydroxy substituent) within the polymeric sidechains (B) of the graft polymers according to the present invention, the alcohol function is typically introduced by hydrolyzing the ester function of the sidechains.

From a theoretical point of view, each ester function of the polymeric sidechain (B) may be replaced by an alcohol function (hydroxy group). In such a case, the polymeric sidechain is fully hydrolyzed ("saponified").

The hydrolysis can be carried out by any method known to a person skilled in the art. For example, the hydrolysis can be induced by addition of a suitable base, such as sodium hydroxide or potassium hydroxide.

However, within this embodiment of the present invention it is preferred that the hydrolyzation of the polymeric sidechains (B) is only carried out partially, for example, to an extend of up to 20 wt.%, 40 wt.% or 60 wt.% (in relation to the total weight of the polymeric sidechains). Even more preferred within this embodiment, the polymeric sidechains (B) are fully or partially hydrolyzed after polymerization, preferably to an extent of up to 50% in relation to the amount of the at least one vinyl ester monomer (B1) employed within the polymerization.

However, in a most preferred embodiment of this invention, the polymeric sidechains (B) are not hydrolyzed after polymerization.

It is preferred that in the graft polymers of the invention and/or as detailed before no other monomers besides those as defined above in connection with the at least one vinyl ester monomer (B1) and the optionally present further monomer (B2) are employed within the respective polymerization process for obtaining the polymeric sidechains (B). However, if any further polymeric monomers besides the monomers according to (B1) and optionally (B2) are present, such monomers (other than B1 and B2) are present in an amount of less than 1% of the total amount of monomers employed for obtaining the polymeric sidechains (B). Preferably, the amount of said additional monomers is less than 0.5% by weight, even more preferably less than 0.01% by weight, most preferably, there is a total absence of any additional monomer besides the monomers (B1) and optionally (B2).

In a more preferred embodiment thereof, the weight ratio of monomer (B2) to monomer (B1) is less than 0.5, preferably less than 0.4, more preferably less than 0.3, even more preferably less than 0.2, and most preferably less than 0.1; even more preferably also monomers (B2) are present in an amount of less than 1% of the total amount of monomers employed for obtaining the polymeric sidechains (B). Even more preferably, the amount of monomers (B2) is less than 0.5% by weight, even more preferably less than 0.01% by weight, most preferably, there are essentially no monomers (B2) present besides the monomers (B1).

Monomers (B2) may in principle any monomer polymerizable with vinyl ester-monomers (B1).

Within the present invention, it is particularly preferred that no monomers are employed comprising an acid function. In particular, the monomers employed for obtaining the polymeric sidechains (B) of the graft polymers according to the present invention do not comprise any acid-functional monomers such as acrylic acid, methacrylic acid, maleic acid, itaconic acid, crotonic acid, vinyl-acetic acid or acryloxy-propionic acid and the like.

Inventive polymers have at least one of the following properties, preferably two or more, to be successfully employed in the various fields of applications targeted with this present invention:
a) biodegradability of a certain level, such biodegradability of the graft polymer being at least 30, preferably at least 35, even more preferably at least 40 % within 28 days when tested under OECD301F (measurement method see also experimental section).
b) Water-solubility of the polymers to a certain extent, to be able to employ the polymers within the aqueous environment typically present in the fields of applications as generally targeted with this present invention. Preferably inventive polymers should exhibit a medium to good, more preferably a very good solubility in the environment of an aqueous formulation as typically employed in such fields for the various kinds of formulations, e.g. dish washing, automatic dish-washing, hard surface cleaning, fabric cleaning, fabric care, cosmetic formulations etc.
c) Viscosities of the polymer solutions should optionally be such that at reasonably high solid concentrations of the polymer as to be handled in and after production and to be provided to the user, which could be e.g. as a "pure" (then typically liquid) product, dissolved in a solvent, typically an aqueous solution containing water and organic solvents, only water or only organic solvents, the viscosity of such polymer or polymer solution being in a range that allows typical technical process steps such as pouring, pumping, dosing etc. Hence, the viscosities should be preferably in a range of about up to less than 4000 mPas, more preferably up to 3500 mPas, even more preferably up to 3000 mPas, such as up to 4500, 3750, 3250, 2750 or even 2600 or below such as 2500, 2000, 1750, 1500, 1250, 1000, 750, 500, 250, 200, 150, or 100 mPas, at concentrations of the polymer (based on the total solid content of the polymer in solution, as defined by weight percent of the dry polymer within the total weight of the polymer solution) of preferably at least 10 wt.%, more preferably at least 20, and even more preferably at least 40 wt.%, and most preferably at least 50 wt.%, such as at least 60, 70, 80 or even 90 wt.%. The viscosity may be measured at either 25 °C or at elevated temperature, e.g. temperatures of 50 or even 60 °C. By this a suitable handling of the polymer solutions in commercial scales is possible. It is of course evident that depending on the amount of solvent being added the viscosity is lower when the amount of solvent increases and vice versa, thus allowing for adjustment in case desired. It is also evident that the viscosity being measured depends on the temperature at which it is being measured, e.g. the viscosity of a given polymer with a given solid content of e.g. 80 wt.% will be higher when measured at lower temperature and lower when measured at a higher temperature. In a preferred embodiment the solid content is in between 70 and 99 wt.%, more preferably in between 75 and 85 wt.%, with no additional solvent being added but the polymer as prepared. In a more preferred embodiment, the solid content is in between 70 and 99 wt.%, more preferably in between 75 and 95 wt.%, with no additional solvent being added but the polymer as prepared, and the viscosity is lower than 3000 mPas, more preferably 3250, or even below 2750, 2600, 2500, 2000, 1750, 1500, 1250, 1000, 750, 500 or even 250 mPas, when measured at 60 °C. The viscosity may be determined as generally known for such polymers, preferably as described below in the experimental part.

To achieve these requirements, the following guidance can be given on how to achieve such properties of the inventive polymers:
Biodegradability increases generally with at least one of the following conditions:
- lower molecular weight Mₙ of the random copolymer backbone (A) compared to higher molecular weight;
- lower weight percentage of polymeric side chains (monomer B) being grafted onto the backbone compared to higher weight percentages.

As further criteria of course the individual performance of a specific polymer needs to be evaluated and thus ranked for each individual formulation in a specific field of application. Due to the broad usefulness of the inventive polymers an exhaustive overview is not possible, but the present specification and examples give a guidance on how to prepare and select useful polymers of desired properties and how to tune the properties to the desired needs. One such criteria for the area of home care and especially fabric care of course it he performance upon washing, e.g. subjecting a certain material exhibiting stains of certain materials to a defined washing procedure.

The examples give some guidance for the application for washing of fabrics, i.e. the general area of fabric care.

Depending on the individual needs for a polymer exhibiting a defined degree of biodegradation, water solubility and viscosity (i.e. handling properties) the general and specific teachings herein - without being intended to be limited to the specific examples being given - will guide on how to obtain such polymer.

It is believed that the performance of the graft polymers is better when their cloud point is about the same as the temperature of the applications. Low-temperature washing is an increasing trend, thus graft polymers with lower cloud point might be preferred for such applications. This is believed to be especially true for the benefit in rinse.

### Process

Another subject-matter of the present invention is a process for preparing the inventive graft polymers as described above. Within this process for obtaining at least one graft polymer according to the present invention, at least one monomer (B1) and optionally a further monomer (B2) are polymerized in the presence of at least one copolymer backbone (A).

It has to be noted that the grafting process as such, wherein a polymeric backbone, such as a copolymer backbone, is grafted with polymeric sidechains, is known to a person skilled in the art. Any process known to the skilled person in this respect can be employed within the present invention.

Within the process of the present invention, it is preferred that the polymeric sidechains (B) are obtained by radical polymerization.

The radical polymerization as such is also known to a skilled person. The person skilled in the art also knows that the inventive process can be carried out in the presence of a radical-forming initiator (C) and/or at least one solvent (D). The skilled person knows the respective components as such.

The term "radical polymerization" as used within the context of the present invention comprises besides the free radical polymerization also variants thereof, such as controlled radical polymerization. Suitable control mechanisms are RAFT, NMP or ATRP, which are each known to the skilled person, including suitable control agents.

In a preferred embodiment, the process to produce a graft polymer of the invention and/or as detailed before comprises the polymerization of at least one vinyl ester monomer (B1) and optionally at least one further monomer (B2) in the presence of at least one copolymer backbone (A), a free radical-forming initiator (C) and, if desired, up to 50% by weight, based on the sum of components (A), (B1), optionally (B2), (C), and (D), of at least one organic solvent (D), at a mean polymerization temperature at which the initiator (C) has a decomposition half-life of from 40 to 500 min, in such a way that the fraction of unconverted graft monomers (B1) and optional monomer (B2) and initiator (C) in the reaction mixture is constantly kept in a quantitative deficiency relative to the copolymer backbone (A).

The amount of ((free) radical-forming) initiator (C) is preferably from 0.1 to 5% by weight, in particular from 0.3 to 3.5% by weight, based in each case on the polymeric sidechains (B).

For the process according to the invention, it is preferred that the steady-state concentration of radicals present at the mean polymerization temperature is substantially constant and the graft monomers (B1) or (B2) are present in the reaction mixture constantly only in low concentration (for example of not more than 5% by weight in total). This allows the reaction to be controlled, and graft polymers can be prepared in a controlled manner with the desired low polydispersity.

To assure a safe temperature control although - especially when a polymerization starting in bulk and/or with a large amount of monomers being present from the start on - it is advisable, and thus preferred, to use an additional and efficient measure to control the temperature. This can be done by external or internal cooling; such cooling can be done by internal and/or external coolers such as heat exchangers, and/or using reflux condensers when working at the boiling temperature of the solvent or the solvent mixture.

The same measure could of course be used for the preferred embodiment mentioned before wherein the monomers are added over a prolonged period of time, and thus the monomer concentration in the reaction volume being constantly low over time.

However, under such conditions temperature control is usually not a crucial point, as the temperature is at least partially controlled also by the propagation of the polymerization reaction by controlling the radical concentration and the available amount of polymerizable monomers. Of course, depending on the scale of the polymerisation reaction, such additional cooling as described before may become necessary for both variants - batch reaction or bulk reactions with large amounts of monomer present from the start or semi-continuous or continuous polymerization reactions with typically constantly low monomer concentrations - when the scale gets large enough that the ratio from volume to surface of the polymerization mixture becomes very large.

This however is generally known to a person of skill in the art of commercial scale polymerisations, and thus can be adapted to the needs.

The term "mean polymerization temperature" is intended to mean here that, although the process is substantially isothermal, there may, owing to the exothermicity of the reaction, be temperature variations which are preferably kept within the range of +/- 10°C, more preferably in the range of +/- 5°C.

According to the invention, the (radical-forming) initiator (C) at the mean polymerization temperature should have a decomposition half-life of from 40 to 500 min, preferably from 50 to 400 min and more preferably from 60 to 300 min.

According to the invention, the initiator (C) and the graft monomers (B2) and/or (B2) are advantageously added in such a way that a low and substantially constant concentration of undecomposed initiator and graft monomers (B1) and/or (B2) is present in the reaction mixture. The proportion of undecomposed initiator in the overall reaction mixture is preferably ≤ 15% by weight, in particular ≤ 10% by weight, based on the total amount of initiator metered in during the monomer addition.

In a more preferred embodiment, the process comprises the polymerization of at least one vinyl ester monomer (B1) and optionally at least one other monomer (B2) in the presence of at least one polymer backbone (A), a free radical-forming initiator (C) and, if desired, up to 50% by weight, based on the sum of components (A), (B1), optional (B2), and (C), of at least one organic solvent (D), at a mean polymerization temperature at which the initiator (C) has a decomposition half-life of from 40 to 500 min, in such a way that the fraction of unconverted graft monomers (B1) and optional (B2) and initiator (C) in the reaction mixture is constantly kept in a quantitative deficiency relative to the polymer backbone (A), wherein preferably at least 10 weight percent of the total amount of vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B1 being employed), and wherein - if (B2) is present - the weight ratio of optional monomer (B2) to monomer (B1) is less than 0.5, preferably less than 0.4, more preferably less than 0.3, even more preferably less than 0.2, and most preferably less than 0.1, and even more preferably also monomers (B2) are present in an amount of less than 1%, more preferably less than 0.5%, even more preferably less than 0.01% by weight of the total amount of monomers employed for obtaining the polymeric sidechains (B).

In an even more preferred embodiment, besides the monomer(s) (B1) essentially no monomer (B2) is employed.

The mean polymerization temperature is appropriately in the range from 50 to 140°C, preferably from 60 to 120°C and more preferably from 65 to 110°C.

Examples of suitable initiators (C) whose decomposition half-life in the temperature range from 50 to 140°C is from 20 to 500 min are:
- O-C₂-C₁₂-acylated derivatives of tert-C₄-C₁₂-alkyl hydroperoxides and tert-(C₉-C₁₂-aralkyl) hydroperoxides, such as tert-butyl peroxyacetate, tert-butyl monoperoxymaleate, tert-butyl peroxyisobutyrate, tert-butyl peroxypivalate, tert-butyl peroxyneoheptanoate, tert-butyl peroxy-2-ethylhexanoate, tert-butyl peroxy-3,5,5-trimethylhexanoate, tert-butyl peroxyneodecanoate, tert-amyl peroxypivalate, tert-amyl peroxy-2-ethylhexanoate, tert-amyl peroxyneodecanoate, 1,1,3,3-tetramethylbutyl peroxyneodecanoate, cumyl peroxyneodecanoate, tert-butyl peroxybenzoate, tert-amyl peroxybenzoate and di-tert-butyl diperoxyphthalate;
- di-O-C₄-C₁₂-acylated derivatives of tert-C₈-C₁₄-alkylene bisperoxides, such as 2,5-dimethyl-2,5-di(2-ethylhexanoylperoxy)hexane, 2,5-dimethyl-2,5-di(benzoyl-peroxy)hexane and 1,3-di(2-neodecanoylperoxyisopropyl)benzene;
- di(C₂-C₁₂-alkanoyl) and dibenzoyl peroxides, such as diacetyl peroxide, dipropionyl peroxide, disuccinyl peroxide, dicapryloyl peroxide, di(3,5,5-trimethylhexanoyl) peroxide, didecanoyl peroxide, dilauroyl peroxide, dibenzoyl peroxide, di(4-methylbenzoyl) peroxide, di(4-chlorobenzoyl) peroxide and di(2,4-dichlorobenzoyl) peroxide;
- tert-C₄-C₅-alkyl peroxy(C₄-C₁₂-alkyl)carbonates, such as tert-amyl peroxy(2-ethylhexyl)carbonate;
- di(C₂-C₁₂-alkyl) peroxydicarbonates, such as di(n-butyl) peroxydicarbonate and di(2-ethylhexyl) peroxydicarbonate.

Depending on the mean polymerization temperature, examples of particularly suitable initiators (C) are:
- at a mean polymerization temperature of from 50 to 60°C:
   tert-butyl peroxyneoheptanoate, tert-butyl peroxyneodecanoate, tert-amyl peroxypivalate, tert-amyl peroxyneodecanoate, 1,1,3,3-tetramethylbutyl peroxyneodecanoate, cumyl peroxyneodecanoate, 1,3-di(2-neodecanoyl peroxyisopropyl)benzene, di(n-butyl) peroxydicarbonate and di(2-ethylhexyl) peroxydicarbonate;
- at a mean polymerization temperature of from 60 to 70°C:
   tert-butyl peroxypivalate, tert-butyl peroxyneoheptanoate, tert-butyl peroxyneodecanoate, tert-amyl peroxypivalate and di(2,4-dichlorobenzoyl) peroxide;
- at a mean polymerization temperature of from 70 to 80°C:
   tert-butyl peroxypivalate, tert-butyl peroxyneoheptanoate, tert-amyl peroxypivalate, dipropionyl peroxide, dicapryloyl peroxide, didecanoyl peroxide, dilauroyl peroxide, di(2,4-dichlorobenzoyl) peroxide and 2,5-dimethyl-2,5-di(2-ethylhexanoylperoxy)hexane;
- at a mean polymerization temperature of from 80 to 90°C:
   tert-butyl peroxyisobutyrate, tert-butyl peroxy-2-ethylhexanoate, tert-amyl peroxy-2-ethylhexanoate, dipropionyl peroxide, dicapryloyl peroxide, didecanoyl peroxide, dilauroyl peroxide, di(3,5,5-trimethylhexanoyl) peroxide, dibenzoyl peroxide and di(4-methylbenzoyl) peroxide;
- at a mean polymerization temperature of from 90 to 100°C:
   tert-butyl peroxyisobutyrate, tert-butyl peroxy-2-ethylhexanoate, tert-butyl monoperoxymaleate, tert-amyl peroxy-2-ethylhexanoate, dibenzoyl peroxide and di(4-methylbenzoyl) peroxide;
- at a mean polymerization temperature of from 100 to 110°C:
   tert-butyl monoperoxymaleate, tert-butyl peroxyisobutyrate and tert-amyl peroxy(2-ethylhexyl)carbonate;
- at a mean polymerization temperature of from 110 to 120°C:
   tert-butyl monoperoxymaleate, tert-butyl peroxy-3,5,5-trimethylhexanoate and tert-amyl peroxy(2-ethylhexyl)carbonate.

Preferred initiators (C) are O-C₄-C₁₂-acylated derivatives of tert-C₄-C₅-alkyl hydroperoxides, particular preference being given to tert-butyl peroxypivalate and tert-butyl peroxy-2-ethylhexanoate.

Particularly advantageous polymerization conditions can be established effortlessly by precise adjustment of initiator (C) and polymerization temperature. For instance, the preferred mean polymerization temperature in the case of use of tert-butyl peroxypivalate is from 60 to 80°C, and, in the case of tert-butyl peroxy-2-ethylhexanoate, from 80 to 100°C.

The inventive polymerization reaction can be carried out in the presence of, preferably small amounts of, a solvent (D), which can be an organic solvent and/or water. It is of course also possible to use mixtures of different solvents (D). Preference is given to using water-soluble or water-miscible solvents.

When a solvent (D) is used as a diluent, generally from 1 to 40% by weight, preferably from 1 to 35% by weight, more preferably from 1.5 to 30% by weight, most preferably from 2 to 25% by weight, based in each case on the sum of the components (A), (B1), optionally (B2), and (C), are used.

Examples of suitable solvents (D) include:
- monohydric alcohols, preferably aliphatic C₁-C₁₆-alcohols, more preferably aliphatic C₂-C₁₂-alcohols, most preferably C₂-C₄-alcohols, such as ethanol, propanol, isopropanol, butanol, sec-butanol and tert-butanol;
- polyhydric alcohols, preferably C₂-C₁₀-diols, more preferably C₂-C₆-diols, most preferably C₂-C₄-alkylene glycols, such as ethylene glycol, 1,2-propylene glycol and 1,3-propylene glycol;
- alkylene glycol ethers, preferably alkylene glycol mono(C₁-C₁₂-alkyl) ethers and alkylene glycol di(C₁-C₆-alkyl) ethers, more preferably alkylene glycol mono- and di(C₁-C₂-alkyl) ethers, most preferably alkylene glycol mono(C₁-C₂-alkyl) ethers, such as ethylene glycol monomethyl and -ethyl ether and propylene glycol monomethyl and -ethyl ether;
- polyalkylene glycols, preferably poly(C₂-C₄-alkylene) glycols having 2-20 C₂-C₄-alkylene glycol units, more preferably polyethylene glycols having 2-20 ethylene glycol units and polypropylene glycols having 2-10 propylene glycol units, most preferably polyethylene glycols having 2-15 ethylene glycol units and polypropylene glycols having 2-4 propylene glycol units, such as diethylene glycol, triethylene glycol, dipropylene glycol and tripropylene glycol;
- polyalkylene glycol monoethers, preferably poly(C₂-C₄-alkylene) glycol mono(C₁-C₂₅-alkyl) ethers having 2-20 alkylene glycol units, more preferably poly(C₂-C₄-alkylene) glycol mono(C₁-C₂₀-alkyl) ethers having 2-20 alkylene glycol units, most preferably poly(C₂-C₃-alkylene) glycol mono(C₁-C₁₆-alkyl) ethers having 3-20 alkylene glycol units;
- carboxylic esters, preferably C₁-C₈-alkyl esters of C₁-C₆-carboxylic acids, more preferably C₁-C₄-alkyl esters of C₁-C₃-carboxylic acids, most preferably C₂-C₄-alkyl esters of C₂-C₃-carboxylic acids, such as ethyl acetate and ethyl propionate;
- aliphatic ketones which preferably have from 3 to 10 carbon atoms, such as acetone, methyl ethyl ketone, diethyl ketone and cyclohexanone;
- cyclic ethers, in particular tetrahydrofuran;
- water.

The solvents (D) are advantageously those solvents, which are also used to formulate the inventive graft polymers for use (for example in washing and cleaning compositions) and can therefore remain in the polymerization product.

Preferred examples of these solvents are polyethylene glycols having 2-15 ethylene glycol units, polypropylene glycols having 2-6 propylene glycol units and in particular alkoxylation products of C₆-C₈-alcohols (alkylene glycol monoalkyl ethers and polyalkylene glycol monoalkyl ethers).

Particular preference is given here to alkoxylation products of C₈-C₁₆-alcohols with a high degree of branching, which allow the formulation of polymer mixtures which are free-flowing at 40-70°C and have a very low polymer content at comparatively low viscosity. The branching may be present in the alkyl chain of the alcohol and/or in the polyalkoxylate moiety (copolymerization of at least one propylene oxide, butylene oxide or isobutylene oxide unit). Particularly suitable examples of these alkoxylation products are 2-ethylhexanol or 2-propylheptanol alkoxylated with 1-15 mol of ethylene oxide, C₁₃/C₁₅ oxo alcohol or C₁₂/C₁₄ or C₁₆/C₁₈ fatty alcohol alkoxylated with 1-15 mol of ethylene oxide and 1-3 mol of propylene oxide, preference being given to 2-propylheptanol alkoxylated with 1-15 mol of ethylene oxide and 1-3 mol of propylene oxide.

In an alternative embodiment the polymerization is performed using a mixture of at least one organic solvent and water.

In a further alternative embodiment the polymerization is performed using water as solvent (D).

The radical initiator (C) is preferably employed in the form of a concentrated solution in one of the solvents mentioned before. The concentration of course depends on the solubility of the radical initiator. It is preferred, that the concentration is as high as possible to allow to introduce as little as possible of the organic solvent into the polymerization reaction. In case the initiator is soluble in water, and thus water is used as solvent for introducing the initiator, the concentration is not critical from the viewpoint of residual levels of water.

In a preferred embodiment, the amount of water is low, preferably below 5wt% based on total solvent, more preferably below 1%.

In the process according to the invention, random copolymer backbone (A), graft monomer (B1) and, if appropriate, (B2), initiator (C) and, if appropriate, solvent (D) are usually heated to the selected mean polymerization temperature in a reactor.

According to the invention, the polymerization is carried out in such a way that an excess of polymer (random copolymer backbone (A) and formed graft polymer (B)) is constantly present in the reactor. The quantitative ratio of polymer to ungrafted monomer and initiator is generally ≥ 10:1, preferably ≥ 15:1 and more preferably ≥ 20:1.

The polymerization process according to the invention can in principle be carried out in various reactor types.

The reactor used is preferably a stirred tank in which the random copolymer backbone (A), if appropriate together with portions, of generally up to 15% by weight of the particular total amount, of graft monomers (B1) or (B2), initiator (C) and solvent (D), are initially charged fully or partly and heated to the polymerization temperature, and the remaining amounts of (B), (C) and, if appropriate, (D) are metered in, preferably separately. The remaining amounts of (B), (C) and, if appropriate, (D) are metered in preferably over a period of ≥ 2 h, more preferably of ≥ 4 h and most preferably of ≥ 5 h.

In the case of the particularly preferred, substantially solvent-free process variant, the entire amount of random copolymer backbone (A) is initially charged as a melt and the graft monomers (B1) and, if appropriate, (B2), and also the initiator (C) present preferably in the form of a from 10 to 50% by weight solution in one of the solvents (D), are metered in, the temperature being controlled such that the selected polymerization temperature, on average during the polymerization, is maintained with a range of especially +/- 10°C, in particular +/-5°C.

In a further particularly preferred, low-solvent process variant, the procedure is as described above, except that solvent (D) is metered in during the polymerization in order to limit the viscosity of the reaction mixture. It is also possible to commence with the metered addition of the solvent only at a later time with advanced polymerization, or to add it in portions.

The polymerization can be affected under standard pressure or at reduced or elevated pressure. When the boiling point of the monomers (B1) or (B2) or of any diluent (D) used is exceeded at the selected pressure, the polymerization is carried out with reflux cooling.

A post-polymerization process step may be added after the main polymerization reaction. For that a further amount of initiator (dissolved in the solvent(s)) can be added over a period of 0,5 hour and typically up to 3 hours, preferably about 1 to 2 hours, more preferably about 1 hour, (such duration however also depending on the scale of the reactor) with the radical initiator and the solvent(s) for the initiator typically - and preferred - being the same as the ones for the main polymerization reaction. Of course a different radical initiator and/or different solvent(s) may be employed as well.

The temperature of the post-polymerisation process step may be the same as in the main polymerization reaction (which is preferred in this invention), or may be increased. In case increased, it may be typically higher by about 5 to 40°C, preferably 10 to 20°C.

In between the post-polymerisation and the main polymerization a certain period of time may be waited, where the main polymerization reaction is left to proceed, before the post-polymerisation reaction is started by starting the addition of further radical initiator.

For solvents having a boiling point of approximately less than 110-120 °C at atmospheric pressure, such solvents may - as a purification step - be removed partially or essentially complete by thermal or vacuum distillation or stripping with a gas such as steam or nitrogen, such as stripping with steam made from water, all at ambient or reduced pressure, preferably vacuum distillation, whereas higher boiling solvents will usually stay in the polymer products obtained. When mercaptoethanol is employed as chain transfer regulator, steam distillation is the preferred step of purification. Hence, higher boiling solvents like 1-methoxy-2-propanol, 1,2-propandiol and tripropylene glycol will stay in the polymer product, and thus their amounts should be minimized as far as possible by using as high as possible concentrations of the radical initiator when such solvents are used only for introducing the initiator, unless such solvents form also part of the formulation the graft polymer will be used within.

The graft polymer of this invention, i.e. the polymer solution obtained from the process, may be also subjected to a means of concentration or drying.

The graft polymer solution obtained may be concentrated by removing part of the solvent(s) to increase the solid polymer concentration. This may be achieved by distillation processes such as thermal or vacuum distillation, which is performed until the desired solid content is achieved. Such process can be combined with the purification step as disclosed before wherein the graft polymer solution obtained is purified by removing part or all of the volatile components such as volatile solvents and/or unreacted, volatile monomers, by removing the desired amount of solvent.

The graft polymer solution may be also after the main and/or the optional post-polymerization step and the optional purification step further concentrated or dried by subjecting the graft polymer solution to a means of removing the volatiles partially or fully, such as drying such as roller-drum drying, spray-drying, vacuum drying or freeze-drying, preferably - mainly for cost-reasons - spray-drying. Such drying process may be also combined with an agglomeration or granulation process such as spray-agglomeration or drying in a fluidized-bed dryer.

### Uses

In principle the graft polymers of this invention can be employed in any application to replace conventional graft polymers of the same or very similar composition (in terms of relative amounts of polymer backbone and grafted monomers especially when the type and amounts of grafted monomers is similar or comparable. Such applications are for example:
Cosmetics, Personal Care: Such compositions and formulations include shampoos, lotions, gels, sprays, soap, make-up powder, lipsticks, hairspray.

Technical applications: Such compositions and formulations include glues of any kind, non-water and - preferably - water-based liquid formulations or solid formulations, the use as dispersant in dispersions of any kind, such as in oilfield applications, automotive applications, typically where a solid or a liquid is to be dispersed within another liquid or solid.

Lacquer, paints and colorants formulations: Such compositions and formulations include non-water- and - preferably - water-based lacquer and colourants, paints, finishings.

Agricultural Formulations: Such compositions and formulations include formulations and compositions containing agrochemical actives within a liquid or solid environment.

Aroma Chemical-formulations: Such compositions and formulations include formulations which dissolve or disperse aroma chemicals in liquid or solid compositions, to evenly disperse and/or retain their stability, so as e.g. to retain their aroma profile over extended periods of time; encompassed are also compositions that show a release of aroma chemicals over time, such as extended release or retarded release formulations.

Hence, another subject matter of the present invention is the use of the graft polymers of the invention and/or obtained by or obtainable by a process of the invention and/or as detailed before in fabric and home care products, in cosmetic and personal care formulations, as crude oil emulsion breaker, in technical applications including in pigment dispersions for ink jet inks, in formulations for electro plating, in cementitious compositions, in agrochemical formulations as e.g. dispersants, crystal growth inhibitor and/or solubilizer, in lacquer and colorants formulations, preferably in agrochemical compositions and cleaning compositions and in fabric and home care products, in particular cleaning compositions for improved oily and fatty stain removal, removal of solid dirt such as clay, prevention of greying of fabric surfaces, and/or anti-scale agents, wherein the cleaning composition is preferably a laundry detergent formulation and/or a dish wash detergent formulation, more preferably a liquid laundry detergent formulation and/or a liquid manual dish wash detergent formulation, or alternatively in particular in an agrochemical composition, for use as dispersants, crystal growth inhibitor and/or solubilizer.

Another subject-matter of the present invention is, therefore, also a cleaning composition, fabric and home care product, industrial and institutional cleaning product, cosmetic or personal care product, oil field-formulation such as crude oil emulsion breaker, pigment dispersion for ink jet inks and inks containing the graft polymer, electro plating product, cementitious composition, a lacquer or paint, and dispersant for agrochemical formulations, preferably in laundry detergents, in cleaning compositions and/or in fabric and home care products. comprising at least one graft polymer as defined above or obtained by or obtainable by a process of the invention and/or as detailed before.

A further subject-matter of the present invention is a fabric and home care product, cleaning composition, industrial and institutional cleaning product, cosmetic or personal care product, oil field-formulation such as crude oil emulsion breaker, pigment dispersion for inks such as ink-jet inks, electro plating product, cementitious composition, lacquer, paint, agrochemical formulations, preferably a laundry detergent, a cleaning composition and/or a fabric and home care product, each containing at least one graft polymer of the invention and/or as described above.

Laundry detergents, cleaning compositions and/or fabric and home care products as such are known to a person skilled in the art. Any composition etc. known to a person skilled in the art, in connection with the respective use, can be employed within the context of the present invention.

In a preferred embodiment, it is a cleaning composition and/or fabric and home care product and/or industrial and institutional cleaning product, comprising at least one graft polymer as defined above. In particular, it is a cleaning composition, preferably a laundry detergent formulation and/or a manual dish wash detergent formulation, more preferably a liquid laundry detergent formulation and/or a liquid manual dish wash detergent formulation, for improved cleaning performance and/or anti-redeposition, for example in respect of redeposition of soils and removing of stains, in particular for stain removal such as greasy soil covering sebum and food grease, and/or for particulate soil such as clay, preferably a cleaning composition, more preferably a laundry detergent formulation and/or a manual dish wash detergent formulation, most preferably a liquid laundry detergent formulation and/or a liquid manual dish wash detergent formulation, for improved cleaning/primary washing and/or oily and fatty stain removal, more preferably for stain removal of greasy soil covering sebum and food grease, and for particulate soil such as clay.

Specifically, the graft polymer of the invention support the removal of various hydrophobic and hydrophilic soils, such as body soils, food and grease soil, particulate soil such clay or carbon black, grass soil, make-up, motor oil etc. from textile or hard surfaces by the surfactants and thus improve the washing and cleaning performances of the formulations ("improved cleaning performance").

Also, the graft polymers of the invention bring about better dispersion of the removed soil in the washing or cleaning liquor and prevent its redeposition onto the surfaces of the washed or cleaned materials ("anti-redeposition performance"). Herein, the removed soil include all typical soil that exist in the laundry process, for example, body soil, food and grease soil, particulate soil such clay or carbon black, grass soil, make-up, motor oil etc. Such anti-redeposion effect can be observed on various fabric types, including cotton, polycotton, polyester, copolymer of poly ether / poly urea (Spandex^{™}), etc. In addition, such anti-redeposition effect is also effective on fabrics that have a fabric enhancer history, or when the fabric wash is carried out in the presence of fabric enhancer or other laundry additives such as freshness beads or bleach.

In one embodiment it is also preferred in the present invention that the cleaning composition comprises (besides at least one graft polymer as described above) additionally at least one enzyme, preferably selected from one or more lipases, hydrolases, amylases, proteases, cellulases, mannanases, hemicellulases, phospholipases, esterases, xylanases, DNases, dispersins, pectinases, oxidoreductases, cutinases, lactases and peroxidases, more preferably at least two of the aforementioned types..

Another subject-matter of the present invention is, therefore, a cleaning composition such as a fabric and home care product and an industrial and institutional (I&I) cleaning product, comprising at least one graft polymer as defined above, and in particular a cleaning composition for improved cleaning and anti redeposition performance as detailed before.

At least one graft polymer as described herein is present in said inventive cleaning compositions in an amount ranging from about 0.01% to about 20%, preferably from about 0.05% to 15%, more preferably from about 0.1% to about 10%, and most preferably from about 0.5% to about 5%, in relation to the total weight of such composition or product in relation to the total weight of such composition or product; such cleaning composition may - and preferably does - further comprise a from about 1% to about 70% by weight of a surfactant system.

Preferably, such inventive cleaning composition is a fabric and home care product or an industrial and institutional (I&I) cleaning product, preferably a fabric and home care product, more preferably a laundry detergent or manual dish washing detergent, comprising at least one inventive graft polymer, and optionally further comprising at least one surfactant or a surfactant system, providing improved removal, dispersion and/or emulsification of soils and / or modification of treated surfaces and / or whiteness maintenance of treated surfaces.

Even more preferably, the cleaning compositions of the present invention comprises at least one inventive graft polymer, and optionally further comprises at least one surfactant or a surfactant system - all as detailed before - and exhibit improved cleaning and anti redeposition performance within laundry and manual dish wash applications, even more specifically, for improved cleaning and anti redeposition performance in laundry applications and most preferably in a laundry detergent, and may additionally comprise at least one enzyme selected from the list consisting of lipases, hydrolases, amylases, proteases, cellulases, hemicellulases, phospholipases, esterases, pectinases, lactases and peroxidases, and combinations of at least two of the foregoing types of enzymes.

In one embodiment of the present invention, the inventive graft polymer may be used for improved cleaning and anti-redeposition and/or additionally for whiteness maintenance, preferably in laundry care. In another preferred embodiment the inventive graft polymer may be used for reducing the greying of fabric (anti-greying), preferably in laundry applications.

In one preferred embodiment, the cleaning composition of the present invention is a liquid or solid laundry detergent composition.

In another preferred embodiment, the cleaning composition of the present invention is a liquid or solid (e.g. powder or tab/unit dose) detergent composition for manual or automatic dish wash, preferably a liquid manual dish wash detergent composition. Such compositions are known to a person of skill in the art.

In another embodiment, the cleaning composition of the present invention is a hard surface cleaning composition that may be used for cleaning various surfaces such as hard wood, tile, ceramic, plastic, leather, metal, glass.

In another embodiment, the cleaning composition is designed to be used in cosmetic products, personal care and pet care compositions such as shampoo compositions, body wash formulations, liquid or solid soaps.

In one embodiment, the inventive graft polymers may be utilized in cleaning compositions comprising a surfactant system comprising C10-C15 alkyl benzene sulfonates (LAS) as the primary surfactant and one or more additional surfactants selected from non-ionic, cationic, amphoteric, zwitterionic or other anionic surfactants, or mixtures thereof.

In a further embodiment, the inventive graft polymers may be utilized in cleaning compositions, such as laundry detergents of any kind, comprising C8-C18 linear or branched alkyl ethersulfates with 1-5 ethoxy-units as the primary surfactant and one or more additional surfactants selected from non-ionic, cationic, amphoteric, zwitterionic or other anionic surfactants, or mixtures thereof.

In a further embodiment the inventive graft polymers may be utilized in cleaning compositions, such as laundry detergents of any kind, comprising C12-C18 alkyl ethoxylate surfactants with 5-10 ethoxy-units as the primary surfactant and one or more additional surfactants selected from anionic, cationic, amphoteric, zwitterionic or other non-ionic surfactants, or mixtures thereof.

In one embodiment of the present invention, the graft polymer is a component of a cleaning composition, such as preferably a laundry or a dish wash formulation, more preferably a liquid laundry or manual dish wash formulation, that each additionally comprise at least one surfactant, preferably at least one anionic surfactant.

In a further embodiment, this invention also encompasses a composition comprising a graft polymer as described herein before, further comprises an antimicrobial agent as disclosed hereinafter, preferably selected from the group consisting of 2-phenoxyethanol, more preferably comprising said antimicrobial agent in an amount ranging from 2ppm to 5% by weight of the composition; even more preferably comprising 0.1 to 2% of phenoxyethanol.

In a further embodiment, this invention also encompasses a method of preserving an aqueous composition against microbial contamination or growth, such composition comprising a graft polymer as described herein before, such composition being preferably a detergent composition, such method comprising adding at least one antimicrobial agent selected from the disclosed antimicrobial agents as disclosed hereinafter, such antimicrobial agent preferably being 2-phenoxyethanol.

In a further embodiment, this invention also encompasses a composition, preferably a cleaning composition, more preferably a liquid laundry detergent composition or a liquid hand dish composition, even more preferably a liquid laundry detergent composition, or a liquid softener composition for use in laundry, such composition comprising a graft polymer as described herein before, such composition further comprising 4,4'-dichoro 2-hydroxydiphenylether in a concentration from 0.001 to 3%, preferably 0.002 to 1%, more preferably 0.01 to 0.6%, each by weight of the composition.

In a further embodiment, this invention also encompasses a method of laundering fabric or of cleaning hard surfaces, which method comprises treating a fabric or a hard surface with a cleaning composition, more preferably a liquid laundry detergent composition or a liquid hand dish composition, even more preferably a liquid laundry detergent composition, or a liquid softener composition for use in laundry, such composition comprising a graft polymer as described herein before, such composition further comprising 4,4'-dichoro 2-hydroxydiphenylether.

The selection of the additional surfactants in these embodiments may be dependent upon the application and the desired benefit.

### Description of cleaning compositions, formulations and their ingredients

The phrase "cleaning compositio*n*" as used herein includes compositions and formulations designed for cleaning soiled material. Such compositions and formulations include those designed for cleaning soiled material or surfaces of any kind.

Compositions for "industrial and institutional cleaning" includes such cleaning compositions being designed for use in industrial and institutional cleaning, such as those for use of cleaning soiled material or surfaces of any kind, such as hard surface cleaners for surfaces of any kind, including tiles, carpets, PVC-surfaces, wooden surfaces, metal surfaces, lacquered surfaces.

"Compositions for Fabric and Home Care" include cleaning compositions including but not limited to laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, dish washing compositions, hard surface cleaning compositions, unit dose formulation, delayed delivery formulation, detergent contained on or in a porous substrate or nonwoven sheet, light duty liquid detergents compositions, heavy duty liquid detergent compositions, detergent gels commonly used for laundry, bleaching compositions, laundry additives, fabric enhancer compositions, and other suitable forms that may be apparent to one skilled in the art in view of the teachings herein. Such compositions may be used as a pre-laundering treatment, a post-laundering treatment, or may be added during the rinse or wash cycle of the laundering operation, preferably during the wash cycle of the laundering or dish washing operation. More preferably, such Composition for Fabric and Home Care is a laundry cleaning composition, a laundry care product or laundry washing product, most preferably a liquid laundry detergent formulation or liquid laundry detergent product.

The cleaning compositions of the invention may be in any form, namely, in the form of a "liquid" composition including liquid-containing composition types such as paste, gel, emulsion, foam and mousse; a solid composition such as powder, granules, micro-capsules, beads, noodles, pearlized balls, agglomerates, tablets, granular compositions, sheets, pastilles, beads, fibrous articles, bars, flakes; or a mixture thereof; ;types delivered in single-, udal- or multi-compartment pouches or containers; single-phase or multi-phase unit dose; a spray or foam detergent; premoistened wipes (i.e., the cleaning composition in combination with a nonwoven material such as that discussed in US 6,121,165, Mackey, et al.); dry wipes (i.e., the cleaning composition in combination with a nonwoven materials, such as that discussed in US 5,980,931, Fowler, et al.) activated with water by a user or consumer; and other homogeneous, non-homogeneous or single-phase or multiphase cleaning product forms.

The composition can be encapsulated in a single or multi-compartment pouch. A multi-compartment pouch may have at least two, at least three, or at least four compartments. A multi-compartmented pouch may include compartments that are side-by-side and/or superposed. The composition contained in the pouch or compartments thereof may be liquid, solid (such as powders), or combinations thereof.

Non- limiting examples of "liquids"/"liquid compositions" include light duty and heavy duty liquid detergent compositions, fabric enhancers, detergent gels commonly used for laundry, bleach and laundry additives. Gases, e.g., suspended bubbles, or solids, e.g. particles, may be included within the liquids.

The liquid cleaning compositions of the present invention preferably have a viscosity of from 50 to 10000 mPa*s; liquid manual dish wash cleaning compositions (also liquid manual "dish wash compositions") have a viscosity of preferably from 100 to 10000 mPa*s, more preferably from 200 to 5000 mPa*s and most preferably from 500 to 3000 mPa*s at 20 1/s and 20 °C; liquid laundry cleaning compositions have a viscosity of preferably from 50 to 3000 mPa*s, more preferably from 100 to 1500 mPa*s and most preferably from 200 to 1000 mPa*s at 20 1/s and 20 °C.

The liquid cleaning compositions of the present invention may have any suitable pH-value. Preferably the pH of the composition is adjusted to between 4 and 14. More preferably the composition has a pH of from 6 to 13, even more preferably from 6 to 10, most preferably from 7 to 9. The pH of the composition can be adjusted using pH modifying ingredients known in the art and is measured as a 10% product concentration in demineralized water at 25 °C. For example, NaOH may be used and the actual weight% of NaOH may be varied and trimmed up to the desired pH such as pH 8.0. In one embodiment of the present invention, a pH >7 is adjusted by using amines, preferably alkanolamines, more preferably triethanolamine.

Cleaning compositions such as fabric and home care products and formulations for industrial and institutional cleaning, more specifically such as laundry and manual dish wash detergents, are known to a person skilled in the art. Any composition etc. known to a person skilled in the art, in connection with the respective use, can be employed within the context of the present invention by including at least one inventive polymer, preferably at least one polymer in amounts suitable for expressing a certain property within such a composition, especially when such a composition is used in its area of use.

One aspect of the present invention is also the use of the inventive polymers as additives for detergent formulations, particularly for liquid detergent formulations, preferably concentrated liquid detergent formulations, or single mono doses for laundry.

The cleaning compositions of the invention may - and preferably do - contain adjunct cleaning additives (also abbreviated herein as "adjuncts"), such adjuncts being preferably in addition to a surfactant system as defined before.

Suitable adjunct cleaning additives include builders, co-builders, a surfactant system, fatty acids and/or salts thereof, structurants, thickeners and rheology modifiers, clay/soil removal/anti-redeposition agents, polymeric soil release agents, dispersants such as polymeric dispersing agents, polymeric grease cleaning agents, solubilizing agents, amphiphilic copolymers (including those that are free of vinyl pyrrolidone), chelating agents, enzymes, enzyme stabilizing systems, encapsulated benefit agents such as encapsulated perfume, bleaching compounds, bleaching agents, bleach activators, bleach catalysts, catalytic materials, brighteners, malodor control agents, pigments, dyes, opacifiers, pearlescent agents, hueing agents, dye transfer inhibiting agents, fabric softeners, carriers, suds boosters, suds suppressors (antifoams), color speckles, silver care, anti-tarnish and/or anti-corrosion agents, alkalinity sources, pH adjusters, pH-buffer agents, hydrotropes, scrubbing particles, antibacterial and anti-microbial agents, preservatives, anti-oxidants, softeners, carriers, fillers, solvents, processing aids, pro-perfumes, and perfumes.

The adjunct(s) may be present in the composition at levels suitable for the intended use of the composition. Typical usage levels range from as low as 0.001% by weight of composition for adjuncts such as optical brighteners to 50% by weight of composition for builders.

Liquid cleaning compositions additionally may comprise besides a surfactant system and graft polymer - and preferably do comprise at least one of - rheology control/modifying agents, emollients, humectants, skin rejuvenating actives, and solvents.

Solid compositions additionally may comprise - and preferably do comprise at least one of - fillers, bleaches, bleach activators and catalytic materials.

Suitable examples of such cleaning adjuncts and levels of use are found in WO 99/05242, U.S. Patent Nos. 5,576,282, 6,306,812 B1 and 6,326,348 B1.

Those of ordinary skill in the art will understand that a detersive surfactant encompasses any surfactant or mixture of surfactants that provide cleaning, stain removing, or laundering benefit to soiled material.

Hence, the cleaning compositions of the invention such as fabric and home care products, and formulations for industrial and institutional cleaning, more specifically such as laundry and manual dish wash detergents, preferably additionally comprise a surfactant system and, more preferably, also further adjuncts, as the one described above and below in more detail.

The surfactant system may be composed from one surfactant or from a combination of surfactants selected from anionic surfactants, non-ionic surfactants, cationic surfactants, zwitterionic surfactants, amphoteric surfactants, and mixtures thereof. Those of ordinary skill in the art will understand that a surfactant system for detergents encompasses any surfactant or mixture of surfactants that provide cleaning, stain removing, or laundering benefit to soiled material.

The cleaning compositions of the invention preferably comprise a surfactant system in an amount sufficient to provide desired cleaning properties. In some embodiments, the cleaning composition comprises, by weight of the composition, from about 1% to about 70% of a surfactant system. In other embodiments, the liquid cleaning composition comprises, by weight of the composition, from about 2% to about 60% of the surfactant system. In further embodiments, the cleaning composition comprises, by weight of the composition, from about 5% to about 30% of the surfactant system. The surfactant system may comprise a detersive surfactant selected from anionic surfactants, non-ionic surfactants, cationic surfactants, zwitterionic surfactants, amphoteric surfactants, and mixtures thereof.

### Laundry compositions

In laundry formulations, anionic surfactants contribute usually by far the largest share of surfactants within such formulation. Hence, preferably, the inventive cleaning compositions for use in laundry comprise at least one anionic surfactant and optionally further surfactants selected from any of the surfactants classes described herein, preferably from non-ionic surfactants and/or amphoteric surfactants and/or zwitterionic surfactants and/or cationic surfactants.

Nonlimiting examples of **anionic surfactants** - which may be employed also in combinations of more than one surfactant - useful herein include C9-C20 linear alkylbenzene sulfonates (LAS), C10-C20 primary, branched chain and random alkyl sulfates (AS); C10-C18 secondary (2,3) alkyl sulfates; C10-C18 alkyl alkoxy sulfates (AExS) wherein x is from 1 to 30; C10-C18 alkyl alkoxy carboxylates comprising 1 to 5 ethoxy units; mid-chain branched alkyl sulfates as discussed in US 6,020,303 and US 6,060,443; mid-chain branched alkyl alkoxy sulfates as discussed in US 6,008,181 and US 6,020,303; modified alkylbenzene sulfonate (MLAS) as discussed in WO 99/05243, WO 99/05242 and WO 99/05244; methyl ester sulfonate (MES); and alpha-olefin sulfonate (AOS).

Non-limiting examples of **non-ionic surfactants** - which may be employed also in combinations of more than one other surfactant - include: C8-C18 alkyl ethoxylates, such as, NEODOL^{®} non-ionic surfactants from Shell; ethylenoxide/propylenoxide block alkoxylates as PLURONIC^{®} from BASF; C14-C22 mid-chain branched alkyl alkoxylates, BAEx, wherein x is from 1 to 30, as discussed in US 6,153,577, US 6,020,303 and US 6,093,856; alkylpolysaccharides as discussed in U.S. 4,565,647 Llenado, issued January 26, 1986; specifically alkylpolyglycosides as discussed in US 4,483,780 and US 4,483,779; polyhydroxy fatty acid amides as discussed in US 5,332,528; and ether capped poly(oxyalkylated) alcohol surfactants as discussed in US 6,482,994 and WO 01/42408.

Non-limiting examples of **amphoteric surfactants** - which may be employed also in combinations of more than one other surfactant - include: water-soluble amine oxides containing one alkyl moiety of from about 8 to about 18 carbon atoms and 2 moieties selected from the group consisting of alkyl moieties and hydroxyalkyl moieties containing from about 1 to about 3 carbon atoms; and water-soluble sulfoxides containing one alkyl moiety of from about 10 to about 18 carbon atoms and a moiety selected from the group consisting of alkyl moieties and hydroxyalkyl moieties of from about 1 to about 3 carbon atoms. See WO 01/32816, US 4,681,704, and US 4,133,779. Suitable surfactants include thus so-called amine oxides, such as lauryl dimethyl amine oxide ("lauramine oxide").

Cleaning compositions may also contain **zwitterionic surfactants** - which may be employed also in combinations of more than one other surfactant.

Suitable zwitterionic surfactants include betaines, such as alkyl betaines, alkylamidobetaine, amidazoliniumbetaine, sulfobetaine (INCI Sultaines) as well as the phosphobetaines. Examples of suitable betaines and sulfobetaines are the following (designated in accordance with INCI): Almond amidopropyl of betaines, Apricotamidopropyl betaines, Avocadamidopropyl of betaines, Babassuamidopropyl of betaines, Behenamidopropyl betaines, Behenyl of betaines, Canol amidopropyl betaines, Capryl/Capramidopropyl betaines, Carnitine, Cetyl of betaines, Cocamidoethyl of betaines, Cocamidopropyl betaines, Cocamidopropyl Hydroxysultaine, Coco betaines, Coco Hydroxysultaine, Coco/Oleam idopropyl betaines, Coco Sultaine, Decyl of betaines, Dihydroxyethyl Oleyl Glycinate, Dihydroxyethyl Soy Glycinate, Dihydroxyethyl Stearyl Glycinate, Dihydroxyethyl Tallow Glycinate, Dimethicone Propyl of PG-betaines, Erucamidopropyl Hydroxysultaine, Hydrogenated Tallow of betaines, Isostearamidopropyl betaines, Lauramidopropyl betaines, Lauryl of betaines, Lauryl Hydroxysultaine, Lauryl Sultaine, Milkamidopropyl betaines, Minkamidopropyl of betaines, Myristamidopropyl betaines, Myristyl of betaines, Oleamidopropyl betaines, Oleamidopropyl Hydroxysultaine, Oleyl of betaines, Olivamidopropyl of betaines, Palmamidopropyl betaines, Palmitamidopropyl betaines, Palmitoyl Carnitine, Palm Kernelamidopropyl betaines, Polytetrafluoroethylene Acetoxypropyl of betaines, Ricinoleam idopropyl betaines, Sesamidopropyl betaines, Soyamidopropyl betaines, Stearamidopropyl betaines, Stearyl of betaines, Tallowamidopropyl betaines, Tallowamidopropyl Hydroxysultaine, Tallow of betaines, Tallow Dihydroxyethyl of betaines, Undecylenamidopropyl betaines and Wheat Germamidopropyl betaines.

Preferred betaines are, for example, C₁₂-C₁₈-alkylbetaines and sulfobetaines. The zwitterionic surfactant preferably is a betaine surfactant, more preferable a Cocoamidopropylbetaine surfactant.

Non-limiting examples of **cationic surfactants** - which may be employed also in combinations of more than one other surfactant - include: the quaternary ammonium surfactants, which can have up to 26 carbon atoms include: alkoxylated quaternary ammonium (AQA) surfactants as discussed in US 6,136,769; dimethyl hydroxyethyl quaternary ammonium as discussed in US 6,004,922; dimethyl hydroxyethyl lauryl ammonium chloride; polyamine cationic surfactants as discussed in WO 98/35002, WO 98/35003, WO 98/35004, WO 98/35005, and WO 98/35006; cationic ester surfactants as discussed in US patents Nos. 4,228,042, 4,239,660 4,260,529 and US 6,022,844; and amino surfactants as discussed in US 6,221,825 and WO 00/47708, specifically amido propyldimethyl amine (APA).

Compositions according to the invention may comprise at least one **builder.** In the context of the present invention, no distinction will be made between builders and such components elsewhere called "co-builders". Examples of builders are complexing agents, hereinafter also referred to as complexing agents, ion exchange compounds, dispersing agents, scale inhibiting agents and precipitating agents. Builders are selected from citrate, phosphates, silicates, carbonates, phosphonates, amino carboxylates and polycarboxylates.

In one embodiment of the present invention, builder is selected from polycarboxylates. The term "polycarboxylates" includes non-polymeric polycarboxylates such as succinic acid, C₂-C₁₆-alkyl disuccinates, C₂-C₁₆-alkenyl disuccinates, ethylene diamine N,N'-disuccinic acid, tartaric acid diacetate, alkali metal malonates, tartaric acid monoacetate, propanetricarboxylic acid, butanetetracarboxylic acid and cyclopentanetetracarboxylic acid.

Oligomeric or polymeric polycarboxylates are for example polyaspartic acid and its alkali metal salts, in particular its sodium salt, (meth)acrylic acid homopolymers and (meth)acrylic acid copolymers and their alkali metal salts, in particular their sodium salts.

Suitable co-monomers are monoethylenically unsaturated dicarboxylic acids such as maleic acid, fumaric acid, maleic anhydride, itaconic acid and citraconic acid. A suitable polymer is in particular polyacrylic acid, which preferably has a weight-average molecular weight M_{w} in the range from 2000 to 40 000 g/mol, preferably 2000 to 10 000 g/mol, in particular 3000 to 8000 g/mol. Further suitable copolymeric polycarboxylates are in particular those of acrylic acid with methacrylic acid and of acrylic acid or methacrylic acid with maleic acid and/or fumaric acid or or anhydrides thereof such as maleic anhydride. Suitable copolymers are in particular copolymers of acrylic acid and maleic acid of a weight average molecular weight Mw in the range of 2000 to 100000, preferably 3000 to 80000.

The preferred weight-average molecular weight Mw of the polyaspartic acid lies in the range between 1000 g/mol and 20 000 g/mol, preferably between 1500 and 15 000 g/mol and particularly preferably between 2000 and 10 000 g/mol.

Formulations according to the invention can comprise one or more **alkali carriers**. Alkali carriers ensure, for example, a pH of at least 9 if an alkaline pH is desired. Of suitability are, for example, the alkali metal carbonates, the alkali metal hydrogen carbonates, and alkali metal metasilicates mentioned above, and, additionally, alkali metal hydroxides. A preferred alkali metal is in each case potassium, particular preference being given to sodium. In one embodiment of the present invention, a pH >7 is adjusted by using amines, preferably alkanolamines, more preferably triethanolamine.

In one embodiment of the present invention, the laundry formulation according to the invention comprises additionally at least one enzyme.

Useful enzymes are, for example, one or more hydrolases selected from lipases, amylases, proteases, cellulases, hemicellulases, phospholipases, esterases, pectinases, lactases and peroxidases, and combinations of at least two of the foregoing types.

Such enzyme(s) can be incorporated at levels sufficient to provide an effective amount for cleaning. The preferred amount is in the range from 0.001% to 5 % of active enzyme by weight in the detergent composition according to the invention. Together with enzymes also enzyme stabilizing systems may be used such as for example calcium ions, boric acid, boronic acid, propylene glycol and short chain carboxylic acids. In the context of the present invention, short chain carboxylic acids are selected from monocarboxylic acids with 1 to 3 carbon atoms per molecule and from dicarboxylic acids with 2 to 6 carbon atoms per molecule. Preferred examples are formic acid, acetic acid, propionic acid, oxalic acid, succinic acid, HOOC(CH2)3COOH, adipic acid and mixtures from at least two of the foregoing, as well as the respective sodium and potassium salts.

Preferably, the at least one enzyme is a detergent enzyme.

In one embodiment, the enzyme is classified as an oxidoreductase (EC 1), a transferase (EC 2), a hydrolase (EC 3), a lyase (EC 4), an isomerase (EC 5), or a ligase (EC 6). The EC-numbering is according to Enzyme Nomenclature, Recommendations (1992) of the Nomenclature Committee of the International Union of Biochemistry and Molecular Biology including its supplements published 1993-1999. Preferably, the enzyme is a hydrolase (EC 3).

In a preferred embodiment, the enzyme is selected from the group consisting of
proteases, amylases, lipases, cellulases, mannanases, hemicellulases, phospholipases, esterases, pectinases, lactases, peroxidases, xylanases, cutinases, pectate lyases, keratinases, reductases, oxidases, phenoloxidases, lipoxygenases, ligninases, pullulanases, tannases, pentosanases, malanases, beta-glucanases, arabinosidases, hyaluronidases, chondroitinases, laccases, nucleases, DNase, phosphodiesterases, phytases, carbohydrases, galactanases, xanthanases, xyloglucanases, oxidoreductase, perhydrolases, aminopeptidase, asparaginase, carbohydrase, carboxypeptidase, catalase, chitinase, cyclodextrin glycosyltransferase, alpha-galactosidase, beta-galactosidase, glucoamylase, alpha-glucosidase, beta-glucosidase, invertase, ribonuclease, transglutaminase, and dispersins, and combinations of at least two of the foregoing types. More preferably, the enzyme is selected from the group consisting of proteases, amylases, lipases, cellulases, mannanases, xylanases, DNases, dispersins, pectinases, oxidoreductases, and cutinases, and combinations of at least two of the foregoing types. Most preferably, the enzyme is a protease, preferably, a serine protease, more preferably, a subtilisin protease.

Preferably, the protease is a protease with at least 90% sequence identity to SEQ ID NO: 22 of EP1921147B1 and having the amino acid substitution R101E (according to BPN' numbering). Preferably, the amylase is an amylase with at least 90% sequence identity to SEQ ID NO: 54 of WO2021032881A1.

The composition of the present invention can comprise one type of enzyme or more than one enzyme of different types, e.g., an amylase and a protease, or more than one enzyme of the same type, e.g., two or more different proteases, or mixtures thereof, e.g., an amylase and two different proteases.

The enzyme(s) can be incorporated into the composition at levels sufficient to provide an effective amount for achieving a beneficial effect, preferably for primary washing effects and/or secondary washing effects, like anti-greying or antipilling effects (e.g., in case of cellulases). Preferably, the enzyme is present in the composition at levels from about 0.00001% to about 5%, preferably from about 0.00001% to about 2%, more preferably from about 0.0001% to about 1%, or even more preferably from about 0.001% to about 0.5% enzyme protein by weight of the composition.

Preferably, the enzyme-containing composition further comprises an enzyme stabilizing system. Preferably, the enzyme-containing composition described herein comprises from about 0.001% to about 10%, from about 0.005% to about 8%, or from about 0.01% to about 6%, by weight of the composition, of an enzyme stabilizing system. The enzyme stabilizing system can be any stabilizing system which is compatible with the enzyme.

Preferably, the enzyme stabilizing system comprises at least one compound selected from the group consisting of polyols (preferably, 1,3-propanediol, ethylene glycol, glycerol, 1,2-propanediol, or sorbitol), inorganic salts (preferably, CaCl2, MgCl2, or NaCl), short chain (preferably, C1-C3) carboxylic acids or salts thereof (preferably, formic acid, formate (preferably, sodium formate), acetic acid, acetate, or lactate), borate, boric acid, boronic acids (preferably, 4-formyl phenylboronic acid (4-FPBA)), peptide aldehydes, peptide acetals, and peptide aldehyde hydrosulfite adducts. Preferably, the enzyme stabilizing system comprises a combination of at least two of the compounds selected from the group consisting of salts, polyols, and short chain carboxylic acids and preferably one or more of the compounds selected from the group consisting of borate, boric acid, boronic acids (preferably, 4-formyl phenylboronic acid (4-FPBA)), peptide aldehydes, peptide acetals, and peptide aldehyde hydrosulfite adducts. In particular, if proteases are present in the composition, protease inhibitors may be added, preferably selected from borate, boric acid, boronic acids (preferably, 4-FPBA), peptide aldehydes (preferably, peptide aldehydes like Z-VAL-H or Z-GAY-H), peptide acetals, and peptide aldehyde hydrosulfite adducts.

Compositions according to the invention may comprise one or more bleaching agent (bleaches).

Formulations according to the invention can comprise one or more bleach catalysts.

Formulations according to the invention can comprise one or more **bleach activators.**

Formulations according to the invention can comprise one or more **corrosion inhibitors.**

Formulations according to the invention may also comprise further **cleaning polymers** and/or **soil release polymers and/or anti-graying polymers.**

The further cleaning polymers may include, without limitation, "multifunctional polyethylene imines" (for example BASF's Sokalan^{®} HP20) and/or "multifunctional diamines" (for example BASF's Sokalan^{®} HP96). Such multifunctional polyethylene imines are typically ethoxylated polyethylene imines with a weight-average molecular weight M_{w} in the range from 3000 to 250000, preferably 5000 to 200000, more preferably 8000 to 100000, more preferably 8000 to 50000, more preferably 10000 to 30000, and most preferably 10000 to 20000 g/mol. Suitable multifunctional polyethylene imines have 80 wt% to 99 wt%, preferably 85 wt% to 99 wt%, more preferably 90 wt% to 98 wt%, most preferably 93 wt% to 97 wt% or 94 wt% to 96 wt% ethylene oxide side chains, based on the total weight of the materials. Ethoxylated polyethylene imines are typically based on a polyethylene imine core and a polyethylene oxide shell. Suitable polyethylene imine core molecules are polyethylene imines with a weight-average molecular weight M_{w} in the range of 500 to 5000 g/mol. Preferably employed is a molecular weight from 500 to 1000 g/mol, even more preferred is a M_{w} of 600 to 800 g/mol. The ethoxylated polymer then has on average 5 to 50, preferably 10 to 35 and even more preferably 20 to 35 ethylene oxide (EO) units per NH-functional group.

Suitable multifunctional diamines are typically ethoxylated C2 to C12 alkylene diamines, preferably hexamethylene diamine, which are further quaternized and optionally sulfated.

Typical multifunctional diamines have a weight-average molecular weight M_{w} in the range from 2000 to 10000, more preferably 3000 to 8000, and most preferably 4000 to 6000 g/mol. In a preferred embodiment of the invention, ethoxylated hexamethylene diamine, furthermore quaternized and sulfated, may be employed, which contains on average 10 to 50, preferably 15 to 40 and even more preferably 20 to 30 ethylene oxide (EO) groups per NH-functional group, and which preferably bears two cationic ammonium groups and two anionic sulfate groups.

In a preferred embodiment of the present invention, the cleaning compositions may contain at least one multifunctional polyethylene imine and/or at least one multifunctional diamine to improve the cleaning performance, such as preferably improve the stain removal ability, especially the primary detergency of particulate stains on polyester fabrics of laundry detergents. The multifunctional polyethylene imines or multifunctional diamines or mixtures thereof according to the descriptions above may be added to the laundry detergents and cleaning compositions in amounts of generally from 0.05 to 15 wt%, preferably from 0.1 to 10 wt% and more preferably from 0.25 to 5 wt% and even as low as up to 2 wt.%, based on the particular overall composition, including other components and water and/or solvents.

Suitable further multifunctional polyethylene imines, multifunctional di- and oligo amines include those as claimed in WO2022/136408A1, WO2022/136409A1 and WO2021/165468.

Thus, one aspect of the present invention is a laundry detergent composition, in particular a liquid laundry detergent, comprising (i) at least one inventive polymer and (ii) at least one compound selected from multifunctional polyethylene imines and multifunctional di- and oligo amines and mixtures thereof.

In one embodiment of the present invention, the ratio of the at least one inventive polymer and (ii) the at least one compound selected from multifunctional polyethylene imines and multifunctional di- and oligoamines and mixtures thereof, is from 10:1 to 1:10, preferably from 5:1 to 1:5 and more preferably from 3:1 to 1:3.

Suitable anti-graying polymers comprise copolymers of acrylic or maleic acid and styrene, graft polymers of acrylic acid onto maltodextrin or carboxymethylated cellulose and their alkali metal salts,. in particular their sodium salts.

Laundry formulations comprising the inventive polymer may also comprise at least one **complexing agent.**

Preferred complexing agents are methylglycinediacetic acid (MGDA) and glutamic acid diacetic acid (GLDA) and salts thereof. Particularly preferred complexing agents are methylglycinediacetic acid and salts thereof. According to the invention, preference is given to 1 to 50%, preferably 1 to 20 wt.% by weight of complexing agents.

Laundry formulations comprising the inventive polymer may also comprise at least one **antimicrobial agent.**

An antimicrobial agent is a chemical compound that kills microorganisms or inhibits their growth or reproduction. Microorganisms can be bacteria, yeasts or molds. A preservative is an antimicrobial agent which may be added to aqueous products and compositions to maintain the original performance, characteristics and integrity of the products and compositions by killing contaminating microorganisms or inhibiting their growth.

The composition/formulation may contain one or more antimicrobial agents and/or preservatives as listed in patent WO2021/115912 A1 ("Formulations comprising a hydrophobically modified polyethyleneimine and one or more enzymes") on pages 35 to 39.

Especially of interest for the cleaning compositions and fabric and home care products and specifically in the laundry formulations are any of the following antimicrobial agents and/or preservatives:
4,4'-dichloro 2-hydroxydiphenyl ether (further names: 5-chloro-2-(4-chlorophenoxy) phenol, Diclosan, DCPP), Tinosan^{®} HP 100 (30wt.% of DCPP in in 1,2-propylene glycol); 2-Phenoxyethanol (further names: Phenoxyethanol, Methylphenylglycol, Phenoxetol, ethylene glycol phenyl ether, Ethylene glycol monophenyl ether, 2-(phenoxy) ethanol, 2-phenoxy-1-ethanol); 2-bromo-2-nitropropane-1,3-diol (further names: 2-bromo-2-nitro-1,3-propanediol, Bronopol); Glutaraldehyde (further names: 1-5-pentandial, pentane-1,5-dial, glutaral, glutardialdehyde); Glyoxal (further names: ethandial, oxylaldehyde, 1,2-ethandial); 5-bromo-5-nitro-1,3-dioxane (further names: 5-bromo-5-nitro-m-dioxane, Bronidox ^{®});Phenoxypropanol (further names: propylene glycol phenyl ether, phenoxyisopropanol 1-phenoxy-2-propanol, 2-phenoxy-1-propanol); Glucoprotamine (chemical description: reaction product of glutamic acid and alkylpropylenediamine, further names: Glucoprotamine 50); Cyclohexyl hydroxyl diazenium-1-oxide, potassium salt (further names: N-cyclohexyl-diazenium dioxide, Potassium HDO, Xyligene,);Formic acid (further names: methanoic acid, Protectol^{®} FM, Protectol^{®} FM 75, Protectol^{®} FM 85, Protectol^{®} FM 99, Lutensol^{®} FM) and its salts, e.g. sodium formiate);Tetrahydro-3,5-dimethyl-1,3,5-thiadia-zine-2-thione (further names: 3,5-dimethyl-1,3-5-thiadiazinane-2-thione, Dazomet; 2,4-dichlorobenzyl alcohol (, further names: dichlorobenzyl alcohol, 2,4-dichloro-benzenemethanol, (2,4-dichloro-phenyl)-methanol, DCBA); 1-propanol (further names: n-propanol, propan-1-ol, n-propyl alcohol; 1,3,5-Tris-(2-hydroxyethyl)-hexahydro-1,3,5-triazin (further names: Hexyhydrotriazine, Tris(hydroethyl)-hexyhydrotriazin, hexyhydro-1,3-5-tris(2-hydroxyethyl)-s-triazine, 2,2',2"-(hexahydro-1,3,5-triazine-1,3,5-triyl)triethanol; 2-butyl-benzo[d]isothiazol-3-one ("BBIT"); 2-methyl-2H-isothiazol-3-one (ʺMITʺʺ); 2-octyl-2H-isothiazol-3-one ("OIT"); 5-Chloro-2-methyl-2H-isothiazol-3-one ("CIT" or "CMIT"); Mixture of 5-chloro-2-methyl-2H- isothiazol-3-one ("CMIT") and 2-methyl-2H-isothiazol-3-one ("MIT") (Mixture of CMIT/MIT); 1,2-benzisothiazol-3(2H)-one ("BIT"); Hexa-2,4-dienoic acid (trivial name "sorbic acid") and its salts, e.g., calcium sorbate, sodium sorbate; potassium (E,E)-hexa-2,4-dienoate (Potassium Sorbate); Lactic acid and its salts; L-(+)-lactic acid; especially sodium lactate; Benzoic acid and salts of benzoic acid, e.g., sodium benzoate, ammonium benzo-ate, calcium benzoate, magnesium benzoate, MEA-benzoate, potassium benzoate; Salicylic acid and its salts, e.g., calcium salicylate, magnesium salicylate, MEA salicylate, sodium salicylate, potassium salicylate, TEA salicylate; Benzalkonium chloride, benzalkonium bromide, benzalkonium saccharinate; Didecyldimethylammonium chloride ("DDAC"); N-(3-aminopropyl)-N-dodecylpropane-1,3-diamine ("Diamine"); Peracetic acid; Hydrogen peroxide. At least one antimicrobial agent or preservative may be added to the inventive composition in a concentration of 0.001 to 10% relative to the total weight of the composition.

Preferably, the composition contains 2-phenoxyethanol in a concentration of 0.1 to 2% or 4,4'-dichloro 2-hydroxydiphenyl ether (DCPP) in a concentration of 0.005 to 0.6%.

The inventive laundry formulation may comprise at least one antimicrobial agent from the above list and/or a combination thereof, and/or a combination with at least one further antimicrobial agent not listed here.

Formulations according to the invention may also comprise **water** and/or additional organic **solvents,** e.g. ethanol or propylene glycol, and/or fillers such as sodium sulfate.

Further **optional ingredients** may be but are not limited to viscosity modifiers, cationic surfactants, foam boosting or foam reducing agents, perfumes, dyes, optical brighteners, and dye transfer inhibiting agents.

### Dish wash compositions

Another aspect of the present invention is also a dish wash composition, comprising at least one inventive polymer as described above.

Thus, an aspect of the present invention is also the use of the inventive polymer as described above, in dish wash applications, such as manual or automated dish wash applications.

Dish wash compositions according to the invention can be in the form of a liquid, semi-liquid, cream, lotion, gel, or solid composition, solid embodiments encompassing, for example, powders and tablets. Liquid compositions are typically preferred for manual dish wash applications, whereas solid formulations and pouch formulations (where the pouches may contain also solids in addition to liquid ingredients) are typically preferred for automated dish washing compositions; however, in some areas of the world also liquid automated dish wash compositions are used and are thus of course also encompassed by the term "dish wash composition".

The dish wash compositions are intended for direct or indirect application onto dishware and metal and glass surfaces, such as drinking and other glasses, beakers, dish and cooking ware like pots and pans, and cutlery such as forks, spoons.

The inventive method of cleaning dishware, metal and/or glass surfaces comprises the step of applying the dish wash cleaning composition, preferably in liquid form, onto the surface, either directly or by means of a cleaning implement, i.e., in neat form. The composition is applied directly onto the surface to be treated and/or onto a cleaning device or implement such as a dish cloth, a sponge or a dish brush without undergoing major dilution (immediately) prior to the application. The cleaning device or implement is preferably wet before or after the composition is delivered to it. In the method of the invention, the composition can also be applied in diluted form.

Both neat and dilute application give rise to superior cleaning performance, i.e. the formulations of the invention containing at least one inventive polymer exhibit excellent degreasing properties. The effort of removing fat and/or oily soils from the dishware, metal and/or glass surfaces is decreased due to the presence of the inventive polymer, even when the level of surfactant used is lower than in conventional compositions.

Preferably the composition is formulated to provide superior grease cleaning (degreasing) properties, long-lasting suds and/or improved viscosity control at decreased temperature exposures; preferably at least two, more preferably all three properties are present in the inventive dish wash composition. Optional - preferably present - further benefits of the inventive manual dish wash composition include soil removal, shine, and/or hand care; more preferably at least two and most preferably all three further benefits are present in the inventive dish wash composition.

In one embodiment of the present invention, the inventive polymer is one component of a manual dish wash formulation that additionally comprises at least one surfactant, preferably at least one anionic surfactant.

In another embodiment of the present invention, the inventive polymer is one component of a manual dish wash formulation that additionally comprises at least one anionic surfactant and at least one other surfactant, preferably selected from amphoteric surfactants and/or zwitterionic surfactants. In a preferred embodiment of the present invention, the manual dish wash formulations contain at least one amphoteric surfactant, preferably an amine oxide, or at least one zwitterionic surfactant, preferably a betaine, or mixtures thereof, to aid in the foaming, detergency, and/or mildness of the detergent composition.

Examples of suitable **anionic surfactants** are already mentioned above for laundry compositions.

Dish wash compositions according to the invention may comprise at least one **amphoteric surfactant.** Addition of the amphoteric surfactant provides good foaming properties in the dish wash composition.

Dish wash compositions according to the invention may comprise at least one **zwitterionic surfactant.**

Dish wash compositions according to the invention may comprise at least one **cationic surfactant.**

Dish wash compositions according to the invention may comprise at least one **non-ionic surfactant.**

Dish wash compositions according to the invention may comprise at least one **hydrotrope** in an effective amount, to ensure the compatibility of the liquid manual dish wash detergent compositions with water.

Dish wash compositions according to the invention may comprise at least one **organic solvent.** Dish wash compositions according to the invention may comprise at least one **electrolyte.**

Manual dish wash formulations comprising the inventive polymer may also comprise at least one **antimicrobial agent.**

Examples of suitable antimicrobial agents for dish wash compositions are already mentioned above for laundry compositions.

The antimicrobial agent may be added to the inventive hand dish wash compositon in a concentration of 0.0001 wt% to 10 wt% relative to the total weight of composition. Preferably, the formulation contains 2-phenoxyethanol in a concentration of 0.01 wt% to 5 wt%, more preferably 0.1 wt% to 2 wt% and/or 4,4'-dichloro 2-hydroxydiphenyl ether in a concentration of 0.001 wt% to 1 wt%, more preferably 0.002 wt% to 0.6 wt% (in all cases relative to the total weight of the composition).

Further additional ingredients are such as but not limited to conditioning polymers, cleaning polymers, surface modifying polymers, soil flocculating polymers, rheology modifying polymers, enzymes, structurants, builders, chelating agents, cyclic diamines, emollients, humectants, skin rejuvenating actives, carboxylic acids, scrubbing particles, bleach and bleach activators, perfumes, malodor control agents, pigments, dyes, opacifiers, beads, pearlescent particles, microcapsules, antibacterial agents, pH adjusters including NaOH and alkanolamines such as monoethanolamines and buffering means.

Examples and preferred examples of suitable ingredients mentioned above as ingredient for dish wash compositions are already mentioned for laundry compositions above.

### General cleaning compositions and formulations

As the polymers of the invention are biodegradable, and especially the cleaning formulations typically have a pH of about 7 or higher, and additionally often contain also enzymes - which are included into such cleaning formulations to degrade biodegradable stuff such as grease, proteins, polysaccharides etc which are present in the stains and dirt which shall be removed by the cleaning compositions - some consideration is needed to be taken to formulate those biodegradable polymers of the invention. Such formulations suitable are in principle known, and include the formulation in solids - where he enzymes and the polymers can be separated by coatings or adding them in separate particles which are mixed - and liquids and semi-liquids, where the polymers and the enzymes can be separated by formulating them in different compartments, such as different compartments of multi-chamber-pouches or bottles having different chambers, from which the liquids are poured out at the same time in a predefined amount to assure the application of the right amount per individual point of use of each component from each chamber. Such multi-compartment-pouches and bottles etc are known to a person of skill as well.

The liquid formulations disclosed in this chapter may comprise 0 to 2 % 2-phenoxyethanol, preferably about 1 %, in addition to all other mentioned ingredients.

The above and below disclosed liquid formulations may comprise 0-0,2% 4,4'-dichoro 2-hydroxydiphenylethe, preferably about 0,15 %, in addition to all other mentioned ingredients. The bleach-free solid laundry compositions may comprise 0-0,2% 4,4'-dichoro 2-hydroxydiphenylethe, preferably about 0,15 %, in addition to all other mentioned ingredients.

The formulations disclosed in this chapter may - in addition to all other mentioned ingredients - comprise one or more enzymes selected from those disclosed herein above, more preferably a protease and/or an amylase, wherein even more preferably the protease is a protease with at least 90% sequence identity to SEQ ID NO: 22 of EP1921147B1 and having the amino acid substitution R101 E (according to BPN' numbering) and wherein the amylase is an amylase with at least 90% sequence identity to SEQ ID NO: 54 of WO2021032881A1, such enzyme(s) preferably being present in the formulations at levels from about 0.00001% to about 5%, preferably from about 0.00001% to about 2%, more preferably from about 0.0001% to about 1%, or even more preferably from about 0.001% to about 0.5% enzyme protein by weight of the composition.

The following compositions shown below including those in the tables disclose general cleaning compositions of certain types, which correspond to typical compositions correlating with typical washing conditions as typically employed in various regions and countries of the world. The at least one inventive polymer may be added to such formulation(s) in suitable amounts as outlined herein.

When the shown composition does not comprise an inventive graft polymer, such composition is a comparative composition. When it comprises an inventive graft polymer, especially in the amounts that are described herein as preferred, more preferred etc ranges, such compositions are considered to fall within the scope of the present invention.

In a preferred embodiment the graft polymer according to the present invention is used in a laundry detergent.

Liquid laundry detergents according to the present invention are composed of:

| | |
|---|---|
| 0,05 - 20 % | of at least one inventive polymer |
| 1 - 50% | of surfactants |
| 0,1 - 40 % | of builders, cobuilders and/or chelating agents |
| 0,1 - 50 % | other adjuncts |

water to add up 100 %.

Preferred liquid laundry detergents according to the present invention are composed of:

| | |
|---|---|
| 0,5 - 15 % | of at least one inventive polymer |
| 5 - 40 % | of anionic surfactants selected from C10-C15- LAS and C10-C18 alkyl ethersulfates containing 1-5 ethoxy-units |
| 1,5 - 10 % | of nonioic surfactants selected from C10-C18-alkyl ethoxylates containing 3 - 10 ethoxy-units |
| 2 - 20 % | of soluble organic builders/ cobuilders selected from C10-C18 fatty acids, di- and tricarboxylic acids, hydroxy-di- and hydroxytricaboxylic acids, aminopolycarboxylates and polycarboxylic acids |
| 0,05 - 5 % | of an enzyme system containing at least one enzyme suitable for detergent use and preferably also an enzyme stabilizing system |
| 0,5 - 20 % | of mono- or diols selected from ethanol, isopropanol, ethylenglycol, or propylenglyclol |
| 0,1 - 20 % | other adjuncts |

water to add up to 100%.

Solid laundry detergents (powders, granules or tablets) according to the present invention are composed of:

| | |
|---|---|
| 0,2 - 20 % | of at least one inventive polymer |
| 1 - 50% | of surfactants |
| 0,1 - 90 % | of builders, cobuilders and/or chelating agents |
| 0-50% | of fillers |
| 0 - 40% | of bleach actives |
| 0,1 - 30 % | of other adjuncts and/or water |

wherein the sum of the ingredients adds up 100 %.

Preferred solid laundry detergents according to the present invention are composed of:

| | |
|---|---|
| 0,5 - 10 % | of at least one inventive polymer |
| 5 - 30 % | of anionic surfactants selected from C10-C15- LAS, C10-C18 alkylsulfates and C10-C18 alkyl ethersulfates containing 1-5 ethoxy-units |
| 1,5 - 7,5 % | of non-ionic surfactants selected from C10-C18-alkyl ethoxylates containing 3 - 10 ethoxy-units |
| 20 - 80 % | of inorganic builders and fillers selected from sodium carbonate, sodium bicarbonate, zeolites, soluble silicates, sodium sulfate |
| 0,5 - 15 % | of cobuilders selected from C10-C18 fatty acids, di- and tricarboxylic acids, hydroxydi- and hydroxytricarboxylic acids, aminopolycarboxylates and polycarboxylic acids |
| 0,1 - 5 % | of an enzyme system containing at least one enzyme suitable for detergent use and preferably also an enzyme stabilizing system |
| 0,5 - 30 % | of bleach actives |
| 0,1 - 20 % | other adjuncts |

water to ad up to 100%

In a preferred embodiment the polymer according to the present invention is used in a manual dish wash detergent.

Liquid manual dish wash detergents according to the present invention are composed of:

| | |
|---|---|
| 0,05 - 10 % | of at least one inventive polymer |
| 1 - 50% | of surfactants |
| 0,1 - 50 % | of other adjuncts |

water to add up 100 %.

Preferred liquid manual dish wash detergents according to the present invention are composed of:

| | |
|---|---|
| 0,2 - 5 % | of at least one inventive polymer |
| 5 - 40 % | of anionic surfactants selected from C10-C15- LAS, C10-C18 alkyl ethersulfates containing 1-5 ethoxy-units, and C10-C18 alkylsulfate |
| 2 10 % | of Cocamidopropylbetaine |
| 0 - 10 % | of Lauramine oxide |
| 0 - 2 % | of a non-ionic surfactant, preferably a C10-Guerbet alcohol alkoxylate |
| 0 - 5 % | of an enzyme, preferably Amylase, and preferably also an enzyme stabilizing system |
| 0,5 - 20 % | of mono- or diols selected from ethanol, isopropanol, ethylenglycol, or propylenglyclol |
| 0,1 - 20 % | other adjuncts |

water to add up to 100%

General formula for laundry detergent compositions according to the invention: (wt.%)

| Ingredient | Ranges of Ingredient in Liquid frame formulations |
|---|---|
| Linear alkyl benzene sulphonic acid | 0 to 30 |
| Coco fatty acid | 1 to 12 |
| Fatty alcohol ether sulphate | 0 to 25 |
| NaOH or mono or tri-ethanol amine | Add up to pH 7,5 to 9,0 |
| Alcohol ethoxylate | 3 to 10 |
| 1,2-Propylene glycol | 1 to 10 |
| Ethanol | 0 to 4 |
| Sodium citrate | 0 to 8 |
| water | Up to 100 |

Liquid laundry frame formulations according to the invention: (wt.%)

| **active** | | | | | | |
|---|---|---|---|---|---|---|
| (numbers: wt.% active) | **F1** | **F2** | **F3** | **F4** | **F5** | **F6** |
| alcohol ethoxylat 7EO | 5.40 | 10.80 | 12.40 | 7.30 | 1.60 | 7.60 |
| Coco fatty acid K12-18 | 2.40 | 3.10 | 3.20 | 3.20 | 3.50 | 6.40 |
| Fatty alcohol ether sulphate | 5.40 | 8.80 | 7.10 | 7.10 | 5.40 | 14.00 |
| Linear alkyl benzene sulphonic acid | 5.50 | 0.00 | 14.50 | 15.50 | 10.70 | 0.00 |
| 1,2 Propandiol | 6.00 | 3.50 | 8.70 | 8.70 | 1.10 | 7.80 |
| Triethanolamine | 0 | 0 | 0 | 0 | 0 | 0 |
| Monoethanolamine | 0 | 0 | 4.00 | 4.30 | 0.30 | 0 |
| NaOH | 2.20 | 1.10 | 0 | 0 | 0 | 1.00 |
| Glycerol | 0 | 0.80 | 3.00 | 2.80 | 0 | 0 |
| Ethanol | 2.00 | 0 | 0 | 0 | 0.38 | 0.39 |
| Na citrate | 3.00 | 2.80 | 3.40 | 2.10 | 7.40 | 5.40 |
| **Inventive Polymer (s) (total)** | 0,2 - 15 | 0,2 - 15 | 0,2 - 15 | 0,2 - 15 | 0,2 - 15 | 0,2 - 15 |
| Other polymers | 0-10 | 0-10 | 0-10 | 0-10 | 0-10 | 0-10 |
| At least one enzyme (each) | 0-1 | 0-1 | 0-1 | 0-1 | 0-1 | 0-1 |
| water | **to 100** | **to 100** | **to 100** | **to 100** | **to 100** | **to 100** |

Laundry powder frame formulations according to the invention: (wt.%)

| | Bleach free Powder | | | | | |
|---|---|---|---|---|---|---|
| Alcohol ethoxylate 7EO | 0.6 | 0 | 1 | 0 | 0 | 5.2 |
| Coco fatty acid K12-18 | 1.2 | 0 | 0 | 0 | 0 | 0 |
| Fatty alcohol ether sulphate | 1.5 | 0 | 0 | 0 | 0 | 6 |
| Linear alkyl benzene sulphonic acid | 12.1 | 11.2 | 13.6 | 21.9 | 18.7 | 12.7 |
| Bleach activator | 0 | 0 | 0 | 0 | 0 | 0 |
| Percarbonate | 0 | 0 | 0 | 0 | 0 | 0 |
| AcetateNa | 0 | 0 | 0 | 0.1 | 0 | 0.1 |
| CitrateNa | 0 | 0 | 0 | 0 | 0 | 14 |
| Na Silicate | 27.9 | 5.8 | 6.6 | 2 | 15 | 20.3 |
| Na Carbonate | 17.2 | 35 | 37.3 | 30.1 | 37 | 1 |
| Na Phosphate | 0 | 0 | 0 | 14 | 0.3 | 0 |
| Na Hydrogencarbonate | 0.7 | 0.9 | 0.5 | 2.7 | 0.4 | 10.5 |
| Zeolite4A | 4.2 | 0.1 | 5.1 | 10.2 | 1.8 | 11.6 |
| HEDP | 0 | 0 | 0 | 0 | 0 | 0.13 |
| MGDA | 0 | 1.1 | 0 | 0 | 0 | 0 |
| At least one enzyme (each) | 0-1,5 | 0 - 1,5 | 0 - 1,5 | 0-1,5 | 0 - 1,5 | 0-1,5 |
| Na Sulfate | 30.8 | 1.3 | 33 | 11 | 22 | 3 |
| Na Chloride | 0.2 | 43 | 0.1 | 0 | 0.1 | 0.1 |
| optical brightener | 0.02 | 0 | | 0.1 | 0.06 | |
| Inventive Polymer(s) (total) | 0,2 - 10 | 0,2 - 10 | 0,2 - 10 | 0,2 - 10 | 0,2 - 10 | 0,2 - 10 |
| Other polymers | 0-10 | 0-10 | 0-10 | 0-10 | 0-10 | 0-10 |

Further typical liquid detergent formulations LD1, LD2 and LD3 are shown in the following three tables: (all numbers in wt.%).

[All following three tables: *"graft polymer" = (poly ethylene glycol of Mn 6000 g/mol as graft base, grafted with 60 weight % vinyl acetate (based on total polymer weight; produced following general disclosure of WO2007138054A1)].

Liquid detergent 1- LD1 "excellent" detergent

| Liquid Detergent Formulation | |
|---|---|
| Sodium alkylbenzene sulfonic acid (C₁₀-C₁₃) LAS | 9.5 |
| C₁₃/C₁₅-Oxoalkohol reacted with 7 moles of EO | 4,5 |
| 1,2 propyleneglycol | 6 |
| ethanol | 2 |
| potassium coconut soap | 2.4 |
| NaOH | 2.2 |
| lauryl ether sulphate (Texapon) | 5.0 |
| Sodium citrate | 3 |
| Sokalan HP 20 | 2 |
| Inventive polymer or comparison | 0,2-5 |
| Graft polymer* | 0-2 |
| Water | to 100 |

Liquid detergent 2- LD2 "medium" performance detergent

| Liquid Detergent Formulation | |
|---|---|
| Sodium alkylbenzene sulfonic acid (C₁₀-C₁₃) | 5.5 |
| C₁₃/C₁₅-Oxoalkohol reacted with 7 moles of EO | 5.4 |
| 1,2 propyleneglycol | 6 |
| ethanol | 2 |
| potassium coconut soap | 2.4 |
| Monoethanolamine | 2.5 |
| lauryl ether sulphate | 5.4 |
| Sodium citrate | 3 |
| Sokalan HP96 | 2 |
| Inventive polymer or comparison | 0,1-4 |
| Graft polymer* | 0-2 |
| Water | to 100 |

Liquid detergent 3- LD3 "medium" performance biobased detergent

| Liquid Detergent Formulation | |
|---|---|
| MGDA | 5.5 |
| APG, branched C13 Glucosid | 3.5 |
| 1,2 propyleneglycol | 6 |
| ethanol | 2 |
| potassium coconut soap | 4.4 |
| NaOH | 2.2 |
| lauryl ether sulphate | 9.5 |
| Sodium citrate | 3 |
| Inventive polymer or comparison | 0,1-4 |
| Graft polymer* | 0-2 |
| Water | to 100 |

Liquid manual dish wash frame formulations according to the invention: (wt.%)

| Ingredients | MDW.1 | MDW.2 | MDW.3 | MDW.4 | MDW.5 | MDW.6 | MDW.7 | MDW.8 |
|---|---|---|---|---|---|---|---|---|
| Linear C₁₂-C₁₄-alkylbenzenesulfonic acid | 8 | 0 | 6 | 0 | 6 | 0 | 6 | 0 |
| C₁₂-C₁₄-fatty alcohol x 2 EO sulfate | 8 | 16 | 6 | 12 | 6 | 12 | 6 | 12 |
| Cocamidopropyl betaine | 0 | 0 | 4 | 4 | 0 | 0 | 2 | 2 |
| Lauramine oxide | 0 | 0 | 0 | 0 | 4 | 4 | 2 | 2 |
| 2-Propylheptanol x 4 EO | 0.5 | 0.5 | 0.5 | 0.5 | 0.5 | 0.5 | 0.5 | 0.5 |
| **Inventive Polymer (s) (total)** | 0,5 - 5 | 0,5 - 5 | 0,5 - 5 | 0,5 - 5 | 0,5 - 5 | 0,5 - 5 | 0,5 - 5 | 0,5 - 5 |
| Ethanol | 2 | 2 | 2 | 2 | 2 | 2 | 2 | 2 |
| 2-Phenoxyethanol (preservative) | 1 | 1 | 1 | 1 | 1 | 1 | 1 | 1 |
| Sodium chloride | 1 | 1 | 1 | 1 | 1 | 1 | 1 | 1 |
| Demin. water | add 100 | add 100 | add 100 | add 100 | add 100 | add 100 | add 100 | add 100 |
| Sodium hydroxide | add pH 8 | add pH 8 | add pH 8 | add pH 8 | add pH 8 | add pH 8 | add pH 8 | add pH 8 |

It is preferred, that within the respective laundry detergent, dish wash composition, cleaning composition and/or fabric and home care product, the at least one graft polymer is present at a concentration of from about 0.01% to about 20%, preferably from about 0.05% to 15%, more preferably from about 0.1% to about 10%, and most preferably from about 0.5% to about 5%, in relation to the total weight of such composition or product in relation to the total weight of such composition or product, each in weight % in relation to the total weight of such composition or product, and all numbers in between, and including all ranges resulting from selecting any of the lower limits mentioned and including further 0.2, 0.3, 0.4, 1, 1,5, 2, 2.5, 3, 3.5 and 4, and combing with any of the upper limits mentioned and including 19, 18, 17, 16, 14, 13, 12, 11, 9, 8, 7, and 6.

The specific embodiments as described throughout this disclosure are encompassed by the present invention as part of this invention; the various further options being disclosed in this present specification as "optional", "preferred", "more preferred", "even more preferred" or "most preferred" options of a specific embodiment may be individually and independently (unless such independent selection is not possible by virtue of the nature of that feature or if such independent selection is explicitly excluded) selected and then combined within any of the other embodiments (where other such options and preferences can be also selected individually and independently), with each and any and all such possible combinations being included as part of this invention as individual embodiments.

### Chapter on Most preferred Embodiments

The following specific most preferred embodiments in this chapter also form part of this invention, with all combinations being defined within individual embodiments and with all the combinations among them explicitly forming part of this present invention:
In a first most preferred embodiment, the graft polymer of the invention comprises a graft polymer comprising:
(A) a copolymer backbone as a graft base, wherein said copolymer backbone (A) is obtainable by polymerization of at least two monomers selected from the group of ethylene oxide, 1,2-propylene oxide, 1,2-butylene oxide, 2,3-butylene oxide, 1,2-pentene oxide or 2,3-pentene oxide,
   a. wherein the distribution of the alkylene oxide moieties within the copolymer backbone is in random order, and
   b. wherein the molecular weight of the copolymer backbone Mn in g/mol is within 500 to 7000, preferably not more than 6000, more preferably not more than 5000, even more preferably not more than 4500, even more preferably not more than 4000, even more preferably not more than 3500, even more preferably not more than 3000, and most preferably not more than 2500, and preferably at least 1000, more preferably at least 1200,
   and
(B) polymeric sidechains grafted onto the copolymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1,

comprising in percent by weight in relation to the total weight of the graft polymer 25 to 85%, preferably 30 to 80%, more preferably 35 to 80%, even more preferably 40 to 75%, and most preferably 55 to 75%, of the copolymer backbone (A),
   And
15 to 75%, preferably 20 to 70%, more preferably 20 to 65 %, even more preferably 25 to 60%, most preferably 25 to 45%, of the polymeric sidechains (B).

In a further most preferred embodiment the graft polymer of the of the previous most preferred embodiment comprises a copolymer backbone (A) which is obtainable by polymerization of
i) at least two monomers selected from the group of ethylene oxide, 1,2-propylene oxide or 1,2-butylene oxide, preferably at least ethylene oxide being selected as one of the monomers, more preferably only ethylene oxide and propylene oxide being selected as monomers, and/or
ii) the relative amount of EO in the polymer backbone A is within 5 to 95%, preferably 10 to 90%, more preferably 15 to 85%, even more preferably at least 20 to 80% (all as weight percent in relation to the total mass of alkylene oxides in the polymer backbone (A)), and/or
iii) essentially no monomer (B2) is employed for the polymerization to obtain the side chains (B).

In a further most preferred embodiment, the graft polymer of any of the previous most preferred embodiments
i) has a polydispersity Mw/Mn of < 5, preferably < 3.5, more preferably < 3, and most preferably in the range from 1.0 to 2.5 (with Mw = weight average molecular weight and Mn = number average molecular weight [g/mol / g/mol]), and/or
ii) comprises a copolymer backbone (A) which is optionally capped at one or both end groups, preferably the copolymer backbone (A) is not capped at both end-groups or, if the copolymer backbone (A) is capped, the capping is done by C1-C25-alkyl groups, preferably C1 to C4-groups.

In a further most preferred embodiment, the graft polymer of any of the previous most preferred embodiments comprises polymeric sidechains (B) which are obtained by radical polymerization of the at least one vinyl ester monomer (B1) and optionally at least one other monomer (B2), in the presence of the polymer backbone A,
wherein preferably at least 10 weight percent of the total amount of vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably 90 weight percent, and most preferably essentially only (i.e. about 100wt.% or even 100 wt.%) vinyl acetate is employed as vinyl ester (weight percent being based on the total weight of vinyl ester monomers B1 being employed),
and wherein preferably essentially no monomer (B2) is employed

In a further most preferred embodiment, the graft polymer of any of the previous most preferred embodiments comprises
(A) 55 to 75% by weight (in relation to the total weight of the graft polymer) of the copolymer backbone (A) which is obtainable by polymerization of ethylene oxide and 1,2-propylene oxide as alkylene oxide monomers, the alkylene oxide monomer distribution in the backbone is in random order, and the molecular weight of the copolymer backbone Mn in g/mol is within 1200 to 2500, with the relative amount of EO in the polymer backbone (A) being within 20 to 80% (by weight in relation to the total mass of alkylene oxides in the polymer backbone (A)) and
(B) 25 to 45% by weight (in relation to the total weight of the graft polymer) of the polymeric sidechains grafted onto the copolymer backbone which are obtained from vinyl acetate as the sole vinyl ester monomer (B1), with essentially no monomer (B2) being employed.

In a further most preferred embodiment, the graft polymer of any of the previous most preferred embodiments exhibits a bio-degradability of the graft polymer of at least 30, preferably at least 35, even more preferably at least 40 % within 28 days when tested under OECD301F.

In a further most preferred embodiment, a process for obtaining a graft polymer as detailed in any of the embodiments detailed in this disclosure, and specifically any of the previous most preferred embodiments, is encompassed which comprises the polymerization of at least one vinyl ester monomer (B1) and optionally at least one further monomer (B2) in the presence of at least one copolymer backbone (A), a free radical-forming initiator (C) and, if desired, up to 50% by weight, based on the sum of components (A), (B1), optionally (B2), and (C) of at least one organic solvent (D), at a mean polymerization temperature at which the initiator (C) has a decomposition half-life of from 40 to 500 min, in such a way that the fraction of unconverted graft monomers (B1) and optional monomer (B2) and initiator (C) in the reaction mixture is constantly kept in a quantitative deficiency relative to the copolymer backbone (A).

In an even more preferred embodiment of the process as detailed herein including specifically that of the preceding paragraph, the process comprises the polymerization of at least one vinyl ester monomer (B1) and optionally at least one other monomer (B2) in the presence of at least one polymer backbone (A), a free radical-forming initiator (C) and, if desired, up to 50% by weight, based on the sum of components (A), (B1), optional (B2), and (C), of at least one organic solvent (D), at a mean polymerization temperature at which the initiator (C) has a decomposition half-life of from 40 to 500 min, in such a way that the fraction of unconverted graft monomers (B1) and optional (B2) and initiator (C) in the reaction mixture is constantly kept in a quantitative deficiency relative to the polymer backbone (A), wherein preferably at least 10 weight percent of the total amount of vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B1 being employed), and wherein - if (B2) is present - the weight ratio of optional monomer (B2) to monomer (B1) is less than 0.5, preferably less than 0.4, more preferably less than 0.3, even more preferably less than 0.2, and most preferably less than 0.1.

In a further most preferred embodiment of the process as detailed herein including specifically that most preferred embodiments for such process as detailed before, the process employs besides the monomer(s) (B1) essentially no monomer (B2).

In a further most preferred embodiment of the process as detailed herein including specifically that most preferred embodiments for such process as detailed before, the process comprises at least one further process step selected from i) to iv): i) post-polymerisation; ii) purification; iii) concentration; and iv) drying.

In a further most preferred embodiment of the process as detailed herein including specifically that most preferred embodiments for such process as detailed before, the process comprises at least one further process step selected from:
i) a post-polymerization process step that is performed after the main polymerization reaction, wherein preferably a further amount of initiator (optionally dissolved in the solvent(s)) is added over a period of 0,5 hour and up to 3 hours, preferably about 1 to 2 hours, more preferably about 1 hour, with the radical initiator and the solvent(s) for the initiator typically - and preferred - being the same as the ones for the main polymerization reaction; and wherein after the polymerization reaction and before the post-polymerisation reaction preferably a period is waited when the main polymerization reaction is left to proceed, before the post-polymerisation reaction is started by starting the addition of further radical initiator, such period being preferably from 10 minutes and up to 4 hours, preferably up to 2 hours, even more preferabl up to 1 hour, and most preferably up to 30 minutes; and wherein the temperature of the post-polymerisation process step is - preferably - the same as in the main polymerization reaction, or is increased, such increase being preferably higher by about 5 to 40°C, preferably 10 to 20°C compared to the temperature of the main polymerisation reaction;
ii) a step of subjecting the graft polymer as obtained from the main polymerization or - if performed, the post-polymerisation process - to a means of concentration and/or drying to remove part of or almost all of the remaining solvent(s) (as far as they are removable due to their boiling points) and/or volatiles such as residual monomers, wherein
   a. the concentration is performed by removing part of the solvent(s) and optionally also volatiles to increase the solid polymer concentration, by preferably applying a distillation process such as thermal or vacuum distillation, preferably vacuum distillation, which is performed until the desired solid content is achieved, preferably is performed until the desired part or all of the volatile components such as volatile solvents and/or unreacted, volatile monomers, are removed;
   b. the drying is performed by subjecting the graft polymer containing at least residual amounts of volatiles such as remaining solvent and/or unreacted monomers etc. to a means of removing the volatiles, such as drying using a roller-drum, a spray-dryer, vacuum drying or freeze-drying, preferably - mainly for cost-reasons - spray-drying; and optionally combining such drying process step with a means of agglomeration or granulation to obtain agglomerated or granulated graft polymer particles, such process being preferably selected from spray-agglomeration, granulation or drying in a fluidized-bed dryer, spray-granulation device.

In a further most preferred embodiment of the process as detailed herein including specifically that most preferred embodiments for such process as detailed before, the amount of water is low, preferably below 5wt% based on total solvent, more preferably below 1%.

In a further most preferred embodiment, the graft polymer of or obtained by any of the embodiments disclosed herein, and specifically by any of the previous most preferred embodiments, is used as component in a composition or product which is a fabric and home care product, a cleaning composition, an industrial and institutional cleaning product, a cosmetic or personal care product, an oil field-formulation such as crude oil emulsion breaker, a pigment dispersion for e.g. inks such as ink-jet inks, an electro plating product, a cementitious composition, a lacquer, a paint or an agrochemical formulations, preferably in compositions or products for fabric and home care, a cleaning composition, or an industrial and institutional cleaning product, more preferably in cleaning compositions, and most preferably a laundry detergent formulation, wherein such fabric and home care product, a cleaning composition, an industrial and institutional cleaning product preferably further comprising at least one enzyme, preferably selected from one or more lipases, hydrolases, amylases, proteases, cellulases, hemicellulases, phospholipases, esterases, pectinases, lactases and peroxidases, and combinations of at least two of the foregoing types.

In a further most preferred embodiment, the graft polymer of or obtained by any of the embodiments disclosed herein, and specifically by any of the previous most preferred embodiments, is used in a composition, that is
a fabric and home care product, cleaning composition, industrial and institutional cleaning product, cosmetic or personal care product, oil field-formulation such as crude oil emulsion breaker, pigment dispersion for inks such as ink-jet inks, electro plating product, cementitious composition, lacquer, paint, agrochemical formulations.

In a further most preferred embodiment of the previous most preferred embodiment on the use of the graft polymer, the graft polymer of or obtained by any of the embodiments disclosed herein, and specifically by any of the previous most preferred embodiments, is used in cleaning compositions and/or in fabric and home care products, preferably in cleaning compositions for in fabric and home care, the cleaning composition preferably being a laundry detergent formulation or a dish wash detergent formulation,
- optionally further comprising at least one enzyme, preferably selected from one or more lipases, hydrolases, amylases, proteases, cellulases, hemicellulases, phospholipases, esterases, pectinases, lactases, pectate lyases, mannanases and peroxidases, and combinations of at least two of the foregoing types, preferably at least one enzyme being selected from lipases,
- wherein the at least one graft polymer is present in an amount ranging from about 0.01% to about 20%, preferably from about 0.05% to 15%, more preferably from about 0.1% to about 10%, and most preferably from about 0.5% to about 5%, in relation to the total weight of such composition or product in relation to the total weight of such composition or product,
   and
- such product or composition further comprising from about 1% to about 70% by weight of a surfactant system.

In a further most preferred embodiment, a laundry detergent, a dish wash composition, a cleaning composition or a fabric and home care product comprises at least one graft polymer as detailed in any of the previous most preferred embodiments or obtained by a process as detailed in any such of the embodiments disclosed herein including specifically any of the previous most preferred embodiments disclosing such process.

In a further most preferred embodiment, the graft polymer of or obtained by any of the previous most preferred embodiments is used as component in a composition or product which is a fabric and home care product, a cleaning composition, an industrial and institutional cleaning product, more preferably in cleaning compositions, and most preferably a laundry detergent formulation, preferably further comprising at least one enzyme, preferably selected from one or more lipases, hydrolases, amylases, proteases, cellulases, hemicellulases, phospholipases, esterases, pectinases, cutinases, DNases, xylanases, mannanases, dispersins, ocidoreductases, lactases and peroxidases, and combinations of at least two of the foregoing types, for inhibiting the transfer of dyes, wherein at least one graft polymer is present in such composition or product at a concentration of from 0.05% to about 20%, preferably 0,05 to 10%, more preferably from about 0,1% to 8%, even more preferably from about 0.2% to about 6%, and further more preferably from about 0,2% to about 4%, and most preferably in amounts of up to 2%, each in weight % in relation to the total weight of such composition or product, and all numbers in between, and including all ranges resulting from selecting any of the lower limits and combing with any of the upper limits, each percentage in weight % in relation to the total weight of such composition or product.

In a further most preferred embodiment, the graft polymer of or obtained by any of the embodiments disclosed herein, and specifically by any of the previous most preferred embodiments, is used such product or composition which further comprises from about 1% to about 70% by weight of a surfactant system.

In a further most preferred embodiment, a laundry detergent, a cleaning composition or a fabric and home care product comprises at least one the graft polymer of or obtained by any of the embodiments disclosed herein, and specifically by any of the previous most preferred embodiments, or obtained by a process as detailed in any such of the embodiments disclosed herein including specifically any of the previous most preferred embodiments disclosing such process.

In a further most preferred embodiment, a composition is also included as part of the invention, which is a fabric and home care product, cleaning composition, industrial and institutional cleaning product, cosmetic or personal care product, oil field-formulation such as crude oil emulsion breaker, pigment dispersion for inks such as ink-jet inks, electro plating product, cementitious composition, lacquer, paint, agrochemical formulation, preferably a laundry detergent, a dish wash composition, a cleaning composition and/or a fabric and home care product, each containing at least one graft polymer of or obtained by any of the embodiments disclosed herein, and specifically by any of the previous most preferred embodiments.

Within such laundry detergent, cleaning composition or fabric and home care product as detailed in any of the embodiments of this invention and specifically in the preceding paragraph, at least one graft polymer - as detailed in any such of the embodiments disclosed herein including specifically any of the previous most preferred embodiments disclosing such graft polymer - is present at a concentration of from about 0.05% to about 10%, preferably from about 0.1% to 8%, more preferably from about 0.2% to about 6%, and even more preferably from about 0.2% to about 4%, and most preferably in amounts of up to 2%, each in weight % in relation to the total weight of such composition or product, an all numbers in between, and including all ranges resulting from selecting any of the lower limits and combing with any of the upper limits, each in weight % in relation to the total weight of such composition or product, and optionally further at least one enzyme, preferably selected from one or more lipases, selected from one or more lipases, hydrolases, amylases, proteases, cellulases, hemicellulases, phospholipases, esterases, pectinases, cutinases, DNases, xylanases, mannanases, dispersins, ocidoreductases, lactases and peroxidases, and combinations of at least two of the foregoing types, is comprised, and further optionally an antimicrobial agent selected from the group consisting of 2-phenoxyethanol; preferably comprising said antimicrobial agent in an amount ranging from 2 ppm to 5% by weight of the composition, more preferably comprising 0.1 to 2% of phenoxyethanol, is comprised, and optionally further 4,4'-dichoro 2-hydroxydiphenylether in a concentration from 0.001 to 3%, preferably 0.002 to 1%, more preferably 0.01 to 0.6%, each by weight of the composition is comprised, and further a surfactant system is comprised from about 1% to about 70% by weight of such detergent, composition or product.

In a further embodiment, this invention also encompasses a composition comprising a graft polymer and/or a polymer backbone each as descried herein before, further comprises an antimicrobial agent as disclosed hereinafter, preferably selected from the group consisting of 2-phenoxyethanol, more preferably comprising said antimicrobial agent in an amount ranging from 2ppm to 5% by weight of the composition; even more preferably comprising 0.1 to 2% of phenoxyethanol.

In a further embodiment, this invention also encompasses a method of preserving an aqueous composition against microbial contamination or growth, such composition comprising a graft polymer and/or a polymer backbone each as described herein before, such composition being preferably a detergent composition, such method comprising adding at least one antimicrobial agent selected from the disclosed antimicrobial agents as disclosed hereinafter, such antimicrobial agent preferably being 2-phenoxyethanol.

In a further embodiment, this invention also encompasses a composition, preferably a cleaning composition, more preferably a liquid laundry detergent composition or a liquid hand dish composition, even more preferably a liquid laundry detergent composition, or a liquid softener composition for use in laundry, such composition comprising a graft polymer and/or a polymer backbone each as described herein before, such composition further comprising 4,4'-dichoro 2-hydroxydiphenylether in a concentration from 0.001 to 3%, preferably 0.002 to 1%, more preferably 0.01 to 0.6%, each by weight of the composition.

In a further embodiment, this invention also encompasses a method of laundering fabric or of cleaning hard surfaces, which method comprises treating a fabric or a hard surface with a cleaning composition, more preferably a liquid laundry detergent composition or a liquid hand dish composition, even more preferably a liquid laundry detergent composition, or a liquid softener composition for use in laundry, such composition comprising a graft polymer and/or a polymer backbone each as described herein before, such composition further comprising 4,4'-dichoro 2-hydroxydiphenylether.

The following examples shall further illustrate the present invention.

### Examples

### Polymer measurements

**K-value** measures the relative viscosity of dilute polymer solutions and is a relative measure of the average molecular weight. As the average molecular weight of the polymer increases for a particular polymer, the K-value tends to also increase. The K-value is determined in a 3% by weight NaCl solution at 23°C and a polymer concentration of 1% polymer according to the method of H. Fikentscher in "Cellulosechemie", 1932, 13, 58.

The **number average molecular weight (Mₙ), the weight average molecular weight (M_{w}) and the polydispersity M_{w}/Mₙ** of the inventive graft polymers were determined by gel permeation chromatography in tetrahydrofuran. The mobile phase (eluent) used was tetrahydrofuran comprising 0.035 mol/L diethanolamine. The concentration of graft polymer in tetrahydrofuran was 2.0 mg per mL. After filtration (pore size 0.2 µm), 100 µL of this solution were injected into the GPC system. Four different columns (heated to 60°C) were used for separation (SDV precolumn, SDV 1000A, SDV 100000A, SDV 1000000A). The GPC system was operated at a flow rate of 1 mL per min. A DRI Agilent 1100 was used as the detection system. Poly(ethylene glycol) (PEG) standards (PL) having a molecular weight Mₙ from 106 to 1 378 000 g/mol were used for the calibration.

### Method for measuring polymer biodegradability

Biodegradation in wastewater was tested in triplicate using the OECD 301F manometric respirometry method. 30 mg/mL test substance is inoculated into wastewater taken from Mannheim Wastewater Treatment Plant and incubated in a closed flask at 25°C for 28 days. The consumption of oxygen during this time is measured as the change in pressure inside the flask using an OxiTop C (WTW). Evolved CO2 is absorbed using an NaOH solution. The amount of oxygen consumed by the microbial population during biodegradation of the test substance, after correction using a blank, is expressed as a % of the ThOD (Theoretical Oxygen Demand).

The following procedures were performed using the material and ratios and amounts as further indicated in **Table 1 and 2.**

Other inventive and comparative graft polymers can be synthesized following those procedures by adjusting the type and molecular weight and composition of the polymer backbones and the amounts and types of the monomers for grafting thereon.

### Example 1: graft polymerization of vinyl acetate (20 wt.%) on EO/PO backbone (Mn 2500 g/mol; 60% EO; 80 wt.%)

A polymerization vessel equipped with stirrer and reflux condenser was initially charged with 480 g of EO/PO statistical copolymer under nitrogen atmosphere and melted at 90°C.

Feed 1 containing 2.99 g of tert-butyl peroxy-2-ethylhexanoate, dissolved in 25.73 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (120 g of vinyl acetate) was started and dosed to the reaction vessel within 6:00 h at constant feed rate and 90°C. Upon completion of the feeds, Feed 3 consisting of 1.89 g of tert-butyl peroxy-2-ethylhexanoate, dissolved in 16.27 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 2: graft polymerization of vinyl acetate (30 wt.%) on EO/PO backbone (Mn 2500 g/mol; 60% EO; 70 wt.%)

A polymerization vessel equipped with stirrer and reflux condenser was initially charged with 420 g of EO/PO statistical copolymer under nitrogen atmosphere and melted at 90°C.

Feed 1 containing 2.99 g of tert-butyl peroxy-2-ethylhexanoate, dissolved in 25.73 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (180 g of vinyl acetate) was started and dosed to the reaction vessel within 6:00 h at constant feed rate and 90°C. Upon completion of the feeds, Feed 3 consisting of 1.89 g of tert-butyl peroxy-2-ethylhexanoate, dissolved in 16.27 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 3: graft polymerization of vinyl acetate (40 wt.%) on EO/PO backbone (Mn 2500 g/mol; 60% EO; 60 wt.%)

A polymerization vessel equipped with stirrer and reflux condenser was initially charged with 600 g of EO/PO statistical copolymer under nitrogen atmosphere and melted at 90°C.

Feed 1 containing 4.02 g of tert-butyl peroxy-2-ethylhexanoate, dissolved in 35.38 g of 1,2-propanediol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (400 g of vinyl acetate) was started and dosed to the reaction vessel within 6:00 h at constant feed rate and 90°C. Upon completion of the feeds, Feed 3 consisting of 2.55 g of tert-butyl peroxy-2-ethylhexanoate, dissolved in 22.44 g of 1,2-propanediol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 4: graft polymerization of vinyl acetate (50 wt.%) on EO/PO backbone (Mn 2500 g/mol; 60% EO; 50 wt.%)

A polymerization vessel equipped with stirrer and reflux condenser was initially charged with 500 g of EO/PO statistical copolymer under nitrogen atmosphere and melted at 90°C.

Feed 1 containing 3.98 g of tert-butyl peroxy-2-ethylhexanoate, dissolved in 41.91 g of 1,2-propanediol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (500 g of vinyl acetate) was started and dosed to the reaction vessel within 6:00 h at constant feed rate and 90°C. Upon completion of the feeds, Feed 3 consisting of 2.55 g of tert-butyl peroxy-2-ethylhexanoate, dissolved in 26.85 g of 1,2-propanediol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 5: graft polymerization of vinyl acetate (70 wt.%) on EO/PO backbone (Mn 2500 g/mol; 60% EO; 30 wt.%)

A polymerization vessel equipped with stirrer and reflux condenser was initially charged with 300 g of EO/PO statistical copolymer under nitrogen atmosphere and melted at 90°C.

Feed 1 containing 3.98 g of tert-butyl peroxy-2-ethylhexanoate, dissolved in 41.91 g of 1,2-propanediol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (700 g of vinyl acetate) was started and dosed to the reaction vessel within 6:00 h at constant feed rate and 90°C. Upon completion of the feeds, Feed 3 consisting of 2.55 g of tert-butyl peroxy-2-ethylhexanoate, dissolved in 26.85 g of 1,2-propanediol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 6: graft polymerization of vinyl acetate (40 wt.%) on EO/PO backbone B1 (Mn 2500 g/mol; 90% EO; 60 wt.%)

A polymerization vessel equipped with stirrer and reflux condenser was initially charged with 420 g of EO/PO statistical copolymer under nitrogen atmosphere and melted at 90°C.

Feed 1 containing 3.05 g of tert-butyl peroxy-2-ethylhexanoate, dissolved in 30.02 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (280 g of vinyl acetate) was started and dosed to the reaction vessel within 6:00 h at constant feed rate and 90°C. Upon completion of the feeds, Feed 3 consisting of 1.93 g of tert-butyl peroxy-2-ethylhexanoate, dissolved in 18.98 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 7: graft polymerization of vinyl acetate (40 wt.%) on EO/PO backbone B2 (Mn 2500 g/mol; 75% EO; 60 wt.%)

A polymerization vessel equipped with stirrer and reflux condenser was initially charged with 420 g of EO/PO statistical copolymer under nitrogen atmosphere and melted at 90°C.

Feed 1 containing 3.49 g of tert-butyl peroxy-2-ethylhexanoate, dissolved in 30.02 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (280 g of vinyl acetate) was started and dosed to the reaction vessel within 6:00 h at constant feed rate and 90°C. Upon completion of the feeds, Feed 3 consisting of 2.20 g of tert-butyl peroxy-2-ethylhexanoate, dissolved in 18.98 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 8: graft polymerization of vinyl acetate (40 wt.%) on EO/PO backbone B3 (Mn 2500 g/mol; 55% EO; 60 wt.%)

A polymerization vessel equipped with stirrer and reflux condenser was initially charged with 420 g of EO/PO statistical copolymer under nitrogen atmosphere and melted at 90°C.

Feed 1 containing 3.70 g of tert-butyl peroxy-2-ethylhexanoate, dissolved in 30.02 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (280 g of vinyl acetate) was started and dosed to the reaction vessel within 6:00 h at constant feed rate and 90°C. Upon completion of the feeds, Feed 3 consisting of 2.34 g of tert-butyl peroxy-2-ethylhexanoate, dissolved in 18.98 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 9: graft polymerization of vinyl acetate (40 wt.%) on EO/PO backbone B4 (Mn 2500 g/mol; 35% EO; 60 wt.%)

A polymerization vessel equipped with stirrer and reflux condenser was initially charged with 480 g of EO/PO statistical copolymer under nitrogen atmosphere and melted at 90°C.

Feed 1 containing 4.48 g of tert-butyl peroxy-2-ethylhexanoate, dissolved in 34.30 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (320 g of vinyl acetate) was started and dosed to the reaction vessel within 6:00 h at constant feed rate and 90°C. Upon completion of the feeds, Feed 3 consisting of 2.83 g of tert-butyl peroxy-2-ethylhexanoate, dissolved in 21.69 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 10: graft polymerization of vinyl acetate (40 wt.%) on EO/PO backbone B5 (Mn 2500 g/mol; 20% EO; 60 wt.%)

A polymerization vessel equipped with stirrer and reflux condenser was initially charged with 420 g of EO/PO statistical copolymer under nitrogen atmosphere and melted at 90°C.

Feed 1 containing 4.36 g of tert-butyl peroxy-2-ethylhexanoate, dissolved in 30.02 g of tripropylene glycol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (280 g of vinyl acetate) was started and dosed to the reaction vessel within 6:00 h at constant feed rate and 90°C. Upon completion of the feeds, Feed 3 consisting of 2.75 g of tert-butyl peroxy-2-ethylhexanoate, dissolved in 18.98 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 11: graft polymerization of vinyl acetate (40 wt.%) on EO/PO backbone (Mn 2300 g/mol; 50% EO; 60 wt.%)

A polymerization vessel equipped with stirrer and reflux condenser was initially charged with 600 g of EO/PO statistical copolymer under nitrogen atmosphere and melted at 90°C.

Feed 1 containing 4.02 g of tert-butyl peroxy-2-ethylhexanoate, dissolved in 35.38 g of 1,2-propanediol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (400 g of vinyl acetate) was started and dosed to the reaction vessel within 6:00 h at constant feed rate and 90°C. Upon completion of the feeds, Feed 3 consisting of 2.55 g of tert-butyl peroxy-2-ethylhexanoate, dissolved in 22.44 g of 1,2-propanediol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 12: graft polymerization of vinyl acetate (40 wt.%) on EO/PO backbone (Mn 3000 g/mol; 60% EO; 60 wt.%)

A polymerization vessel equipped with stirrer and reflux condenser was initially charged with 600 g of EO/PO statistical copolymer under nitrogen atmosphere and melted at 90°C.

Feed 1 containing 4.02 g of tert-butyl peroxy-2-ethylhexanoate, dissolved in 35.38 g of 1,2-propanediol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (400 g of vinyl acetate) was started and dosed to the reaction vessel within 6:00 h at constant feed rate and 90°C. Upon completion of the feeds, Feed 3 consisting of 2.55 g of tert-butyl peroxy-2-ethylhexanoate, dissolved in 22.44 g of 1,2-propanediol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 13: graft polymerization of vinyl acetate (20 wt.%) on EO/PO backbone (Mn 4100 g/mol; 60% EO; 80 wt.%)

A 4-I-vessel with stirrer and three feeds was charged with 1000 g of EO/PO statistical copolymer and heated to 90°C and purged with nitrogen. Solution of radical starter (56 g; mixture of tert-butylperoxy-2-ethylhexanoat in n- butyl acetate; 23,8 wt.%) was fed through feed 1 over a period of 7 hours. 15 minutes after the begin of feed 1, an amount of 250 g vinyl acetate was fed continuously through feed 2 within 6 hours. When feed 2 was completed, the reaction mixture was stirred for 2 h at 90 °C. Then feed 3 (2 hours, 44 g solution of radical starter mixture) commenced. When feed 3 had been completed the reaction mixture was stirred 90°C for another 2 hours. Then, the pressure was set to 10 mbar, and volatile components were removed at 100°C and 10 mbar under stirring and then cooled to ambient temperature under stirring. Inventive graft polymer mixture was obtained as a clear liquid, 1270 g.

### Example 14: graft polymerization of vinyl acetate (20 wt.%) on EO/PO backbone (Mn 6400 g/mol; 60% EO; 80 wt.%)

A 4-I-vessel with stirrer and three feeds was charged with 1000 g of EO/PO statistical copolymer and heated to 90°C and purged with nitrogen. Solution of radical starter (56 g; mixture of tert-butylperoxy-2-ethylhexanoat in n- butyl acetate; 23,8 wt.%) was fed through feed 1 over a period of 7 hours. 15 minutes after the begin of feed 1, an amount of 250 g vinyl acetate was fed continuously through feed 2 within 6 hours. When feed 2 was completed, the reaction mixture was stirred for 2 h at 90 °C. Then feed 3 (2 hours, 44 g solution of radical starter mixture) commenced. When feed 3 had been completed the reaction mixture was stirred 90°C for another 2 hours. Then, the pressure was set to 10 mbar, and volatile components were removed at 100°C and 10 mbar under stirring and then cooled to ambient temperature under stirring. Inventive graft polymer mixture was obtained as a clear liquid, 1250 g.

Residual amounts of monomer were removed by vacuum distillation for 1 h at 95°C and 500 mbar.

### Example 15: Graft polymerization of vinyl acetate (40 wt.-%) on glycerin-containing polyalkoxylate-backbone (of Mn 3550 g/mol; 60 wt.-%)

### Ex. 15a: backbone:

The backbone was prepared starting from glycerine and KOH which were dried in vacuo to remove the residual water. Then glycerine was reacted first with ethylene oxide, then a mixture of ethylene oxide and propylene oxide to yield a statistical co-polymer-block, and then again with ethylene oxide, to yield a polymer of the structure
Glycerin[2,25]-PO[5,54]-PO[19,72]/EO[67,49]-EO[5,0],
with the numbers in brackets being the molar amounts of the individual parts.
Then, water and acid (glacial acetic acid) were added (in equimolar amounts), water removed and the crystallizing potassium salt removed by filtration. (Mn 3550 g/mol)
(Commercially available as Lupranol^{®} 2048)

### Ex.15b: Graft polymer

A polymerization vessel equipped with stirrer and reflux condenser was initially charged with 600 g of the backbone of Ex.15a the backbone (Mn 3550 g/mol) under nitrogen atmosphere and melted at 90 °C. Feed 1 containing 5.60 g of tert-butyl peroxy-2-ethylhexanoate, dissolved in 42.88 g of tripropylene glycol, was dosed to the stirred vessel in 6:10 h, at 90 °C. 5.56 wt.-% of Feed 1 were dosed in the first 10 min and the rest was dosed with constant feed rate for 6:00 h. 10 minutes after the start of Feed 1, Feed 2 (400 g of vinyl acetate) was started and dosed to the reaction vessel within 6:00 h at constant feed rate and 90 °C. Upon completion of the feeds, Feed 3 consisting of 3.54 g of tert-butyl peroxy-2-ethylhexanoate, dissolved in 27.11 g of tripropylene glycol, were dosed within 56 min with constant flow rate at 90 °C. The mixture was stirred for one hour at 90 °C upon complete addition of the feed. Residual amounts of monomer were removed by vacuum distillation for 1 h at 95 °C and 500 mbar.

### Example 16: Graft polymerization of vinyl acetate (40 wt.-%) on diethylene glyconl-containing polylakoxylate-backbone (of Mn 2200 g/mol; 60 wt.-%)

### Ex. 16a: backbone:

The backbone was prepared starting from diethylene glycol and KOH which were dried in vacuo to remove the residual water. Then diethylene glycol (DEG) was reacted first with ethylene oxide, then a mixture of ethylene oxide and propylene oxide to yield a statistical co-polymer-block, and then again with ethylene oxide, to yield a polymer of the structure
DEG[4,9]-EO[12,4]-PO[20,9]/EO[47,5]-EO[14,3],
with the numbers in brackets being the molar amounts of the individual parts.
Then, water and acid (glacial acetic acid) were added (in equimolar amounts), water removed and the crystallizing potassium salt removed by filtration. (Mn 2200 g/mol).
(Commercially available as Lupranol^{®} 6000/1)

### Ex.16b: Graft polymer

A polymerization vessel equipped with stirrer and reflux condenser was initially charged with 360 g of the backbone of Ex.16a under nitrogen atmosphere and melted at 90 °C. Feed 1 containing 3.36 g of tert-butyl peroxy-2-ethylhexanoate, dissolved in 25.73 g of tripropylene glycol, was dosed to the stirred vessel in 6:10 h, at 90 °C. 5.56 wt.-% of Feed 1 were dosed in the first 10 min and the rest was dosed with constant feed rate for 6:00 h. 10 minutes after the start of Feed 1, Feed 2 (240 g of vinyl acetate) was started and dosed to the reaction vessel within 6:00 h at constant feed rate and 90 °C. Upon completion of the feeds, Feed 3 consisting of 2.12 g of tert-butyl peroxy-2-ethylhexanoate, dissolved in 16.27 g of tripropylene glycol, were dosed within 56 min with constant flow rate at 90 °C. The mixture was stirred for one hour at 90 °C upon complete addition of the feed. Residual amounts of monomer were removed by vacuum distillation for 1 h at 95 °C and 500 mbar.

### Synthesis procedures for Backbones B1-B5

### Backbone B1: ethylene oxide and propylene oxide random copolymer with 90 wt% EO, molecular weight 2500 g/mol

### Backbone B1a: Diethylene glycol, ethoxylated with 14.4 moles ethylene oxide and propoxylated with 1.26 moles propylene oxide (random)

In a 2 l autoclave 106.1 g diethylene glycol and 1.63 g potassium tert.-butylate were mixed. The autoclave was purged 3 times with nitrogen and heated to 140°C. A mixture of 634.4 g ethylene oxide and 73.2 g propylene oxide was added within 13 hours. The mixture was stirred for additional 5 h at 140°C to complete the reaction. The reaction mixture was stripped with nitrogen and volatile compounds were removed in vacuo at 80°C. After filtration 815.0 g of a light brown wax was obtained. ¹H-NMR in CDCl₃ confirmed the expected structure.

### Backbone B1b: Ethylene oxide and propylene oxide random copolymer with 90 wt% ethylene oxide, molecular weight Mn=2500 g/mol

### (diethylene glycol, ethoxylated with 48.0 moles ethylene oxide and propoxylated with 4.2 moles propylene oxide (random))

In a 2 l autoclave 366.1 g diethylene glycol, ethoxylated with 14.4 moles ethylene oxide and propoxylated with 1.26 moles propylene oxide (random, example 1 a) and 1.49 g potassium tert.-butylate were mixed. The autoclave was purged 3 times with nitrogen and heated to 140°C. A mixture of 661.1 g ethylene oxide and 76.8 g propylene oxide was added within 15 hours. The mixture was stirred for additional 5 h at 140°C to complete the reaction. The reaction mixture was stripped with nitrogen and volatile compounds were removed in vacuo at 80°C. After filtration 1105.0 g of a light brown wax was obtained. ¹H-NMR in CDCl₃ confirmed the expected structure.

### Backbone B2: ethylene oxide and propylene oxide random copolymer with 75 wt% ethylene oxide, molecular weight Mn=2500 g/mol

### Backbone B2a: diethylene glycol, ethoxylated with 12.1 moles ethylene oxide and propoxylated with 3.2 moles propylene oxide (random)

In a 2 l autoclave 106.1 g diethylene glycol and 1.65 g potassium tert.-butylate were mixed. The autoclave was purged 3 times with nitrogen and heated to 140°C. A mixture of 532.6 g ethylene oxide and 186.4 g propylene oxide was added within 13 hours. The mixture was stirred for additional 5 h at 140°C to complete the reaction. The reaction mixture was stripped with nitrogen and volatile compounds were removed in vacuo at 80°C. After filtration 825.0 g of a light brown oil was obtained. ¹H-NMR in CDCl₃ confirmed the expected structure.

### Backbone B2b: ethylene oxide and propylene oxide random copolymer with 75 wt% ethylene oxide, molecular weight Mn=2500 g/mol

### (diethylene glycol, ethoxylated with 40.3 moles ethylene oxide and propoxylated with 10.7 moles propylene oxide (random))

In a 2 l autoclave 370.1 g diethylene glycol, ethoxylated with 12.1 moles ethylene oxide and propoxylated with 3.2 moles propylene oxide (random, example 2a) and 1.50 g potassium tert.-butylate were mixed. The autoclave was purged 3 times with nitrogen and heated to 140°C. A mixture of 559.2 g ethylene oxide and 195.8 g propylene oxide was added within 15 hours. The mixture was stirred for additional 5 h at 140°C to complete the reaction. The reaction mixture was stripped with nitrogen and volatile compounds were removed in vacuo at 80°C. After filtration 1130.0 g of a light brown oil was obtained. ¹H-NMR in CDCl₃ confirmed the expected structure.

### Backbone B3: ethylene oxide and propylene oxide random copolymer with 55 wt% ethylene oxide, molecular weight Mn=2500 g/mol

### Backbone B3a diethylene glycol, ethoxylated with 8.7 moles ethylene oxide and propoxylated with 5.8 moles propylene oxide (random)

In a 2 l autoclave 106.1 g diethylene glycol and 1.65 g potassium tert.-butylate were mixed. The autoclave was purged 3 times with nitrogen and heated to 140°C. A mixture of 381.9 g ethylene oxide and 334.5 g propylene oxide was added within 13 hours. The mixture was stirred for additional 5 h at 140°C to complete the reaction. The reaction mixture was stripped with nitrogen and volatile compounds were removed in vacuo at 80°C. After filtration 822.0 g of a light brown oil was obtained. ¹H-NMR in CDCl₃ confirmed the expected structure.

### Backbone B3b: ethylene oxide and propylene oxide random copolymer with 55 wt% ethylene oxide, molecular weight Mn=2500g/mol

### (diethylene glycol, ethoxylated with 28.9 moles ethylene oxide and propoxylated with 19.2 moles propylene oxide (random))

In a 2 l autoclave 370.1 g diethylene glycol, ethoxylated with 8.7 moles ethylene oxide and propoxylated with 5.8 moles propylene oxide (random, example 3 a) and 1.50 g potassium tert.-butylate were mixed. The autoclave was purged 3 times with nitrogen and heated to 140°C. A mixture of 370.2 g ethylene oxide and 351.6 g propylene oxide was added within 15 hours. The mixture was stirred for additional 5 h at 140°C to complete the reaction. The reaction mixture was stripped with nitrogen and volatile compounds were removed in vacuo at 80°C. After filtration 1128.0 g of a light brown oil was obtained. ¹H-NMR in CDCl₃ confirmed the expected structure.

### Backbone B4: ethylene oxide and propylene oxide random copolymer with 35 wt% ethylene oxide, molecular weight Mn=2500 g/mol

### Backbone B4a: Diethylene glycol, ethoxylated with 5.3 moles ethylene oxide and propoxylated with 8.3 moles propylene oxide (random)

In a 2 l autoclave 106.1 g diethylene glycol and 1.65 g potassium tert.-butylate were mixed. The autoclave was purged 3 times with nitrogen and heated to 140°C. A mixture of 233.9 g ethylene oxide and 482.6 g propylene oxide was added within 13 hours. The mixture was stirred for additional 5 h at 140°C to complete the reaction. The reaction mixture was stripped with nitrogen and volatile compounds were removed in vacuo at 80°C. After filtration 820.0 g of a light brown oil was obtained. ¹H-NMR in CDCl₃ confirmed the expected structure.

### Backbone B4b: Ethylene oxide and propylene oxide random copolymer with 35 wt% ethylene oxide, molecular weight Mn=2500g/mol

### (diethylene glycol, ethoxylated with 17.7 moles ethylene oxide and propoxylated with 27.7 moles propylene oxide (random))

In a 2 l autoclave 370.2 g diethylene glycol, ethoxylated with 5.3 moles ethylene oxide and propoxylated with 8.3 moles propylene oxide (random, example 4 a) and 1.51 g potassium tert.-butylate were mixed. The autoclave was purged 3 times with nitrogen and heated to 140°C. A mixture of 245.6 g ethylene oxide and 506.7 g propylene oxide was added within 15 hours. The mixture was stirred for additional 5 h at 140°C to complete the reaction. The reaction mixture was stripped with nitrogen and volatile compounds were removed in vacuo at 80°C. After filtration 1119.0 g of a light brown oil was obtained. ¹H-NMR in CDCl₃ confirmed the expected structure.

### Backbone B5: ethylene oxide and propylene oxide random copolymer with 20 wt% ethylene oxide, molecular weight Mn=2500 g/mol

### Backbone B5a: Diethylene glycol, ethoxylated with 2.8 moles ethylene oxide and propoxylated with 10.3 moles propylene oxide (random)

In a 2 l autoclave 106.1 g diethylene glycol and 1.65 g potassium tert.-butylate were mixed. The autoclave was purged 3 times with nitrogen and heated to 140°C. A mixture of 122.9 g ethylene oxide and 595.9 g propylene oxide was added within 13 hours. The mixture was stirred for additional 5 h at 140°C to complete the reaction. The reaction mixture was stripped with nitrogen and volatile compounds were removed in vacuo at 80°C. After filtration 821.0 g of a light brown oil was obtained. ¹H-NMR in CDCl₃ confirmed the expected structure.

### Backbone B5b: Ethylene oxide and propylene oxide random copolymer with 20 wt% ethylene oxide, molecular weight Mn=2500g/mol

### (diethylene glycol, ethoxylated with 9.3 moles ethylene oxide and propoxylated with 34.2 moles propylene oxide (random))

In a 2 l autoclave 371.2 g diethylene glycol, ethoxylated with 2.8 moles ethylene oxide and propoxylated with 10.3 moles propylene oxide (random, example 5 a) and 1.51 g potassium tert.-butylate were mixed. The autoclave was purged 3 times with nitrogen and heated to 140°C. A mixture of 129.0 g ethylene oxide and 625.7 g propylene oxide was added within 15 hours. The mixture was stirred for additional 5 h at 140°C to complete the reaction. The reaction mixture was stripped with nitrogen and volatile compounds were removed in vacuo at 80°C. After filtration 1135.0 g of a light brown oil was obtained. ¹H-NMR in CDCl₃ confirmed the expected structure.

### Synthesis procedures for comparative examples:

### Comp. Ex. 1: graft polymerization of vinyl acetate (10 wt.%) on EO/PO backbone (Mn=2500 g/mol; 60% EO; 90 wt.%)

A polymerization vessel equipped with stirrer and reflux condenser was initially charged with 900 g of EO/PO statistical copolymer under nitrogen atmosphere and melted at 90°C.

Feed 1 containing 4.02 g of tert-butyl peroxy-2-ethylhexanoate, dissolved in 35.38 g of 1,2-propanediol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (100 g of vinyl acetate) was started and dosed to the reaction vessel within 6:00 h at constant feed rate and 90°C. Upon completion of the feeds, Feed 3 consisting of 2.55 g of tert-butyl peroxy-2-ethylhexanoate, dissolved in 22.44 g of 1,2-propanediol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Comp. Ex. 2: graft polymerization of vinyl acetate (80 wt.%) on EO/PO backbone (Mn=2500 g/mol; 60% EO; 20 wt.%)

A polymerization vessel equipped with stirrer and reflux condenser was initially charged with 200 g of EO/PO statistical copolymer under nitrogen atmosphere and melted at 90°C.

Feed 1 containing 4.02 g of tert-butyl peroxy-2-ethylhexanoate, dissolved in 35.38 g of 1,2-propanediol, was dosed to the stirred vessel in 6:10 h, at 90°C. 5.56% of Feed 1 were dosed in the first 10 min and the rest was dosed with constant feed rate for 6:00 h. 10 minutes after the start of Feed 1, Feed 2 (800 g of vinyl acetate) was started and dosed to the reaction vessel within 6:00 h at constant feed rate and 90°C. Upon completion of the feeds, Feed 3 consisting of 2.55 g of tert-butyl peroxy-2-ethylhexanoate, dissolved in 22.44 g of 1,2-propanediol, were dosed within 56 min with constant flow rate at 90°C. The mixture was stirred for one hour at 90°C upon complete addition of the feed.

**Table 1**

| Example | Polymer Backbone Mₙ [g/mol] | Polymer Backbone wt.%EO | Polymer Backbone Structure | Sidechain Monomer (B) | Weight Ratio of Polymer Backbone to Sidechain Monomers (A):(B1) | Bio-degradation [%], 28d |
|---|---|---|---|---|---|---|
| Comp. Ex. 1 | 2500 | 60 | random | VAc | 90 : 10 | 70 |
| Comp. Ex. 2 | 2500 | 60 | random | VAc | 20 : 80 | 10 |

**Table 2**

| Example | Polymer Backbone Mₙ [g/mol] | Polymer Backbone wt.%EO | Polymer Backbone Structure | Sidechain Monomer (B) | Weight Ratio of Polymer Backbone to Sidechain Monomers (A):(B1) | Biodegradation [%], 28d |
|---|---|---|---|---|---|---|
| Ex.1 | 2500 | 60 | random ; 1) | VAc | 80 : 20 | - |
| Ex.2 | 2500 | 60 | random; 1) | VAc | 70 : 30 | - |
| Ex.3 | 2500 | 60 | random ; 1) | VAc | 60 : 40 | 39 |
| Ex.4 | 2500 | 60 | random; 1) | VAc | 50 : 50 | 29 |
| Ex.5 | 2500 | 60 | random; 1) | VAc | 30 : 70 | 18 |
| Ex.6 | 2500 | 90 | **B1,** random | VAc | 60 : 40 | 47 |
| Ex.7 | 2500 | 75 | **B2,** random | VAc | 60 : 40 | 47 |
| Ex.8 | 2500 | 55 | **B3,** random | VAc | 60 : 40 | 43 |
| Ex.9 | 2500 | 35 | **B4,** random | VAc | 60 : 40 | 44 |
| Ex.10 | 2500 | 20 | **B5,** random | VAc | 60 : 40 | 48 |
| Ex.11 | 2300 | 50 | random; 2) | VAc | 60 : 40 | 35 |
| Ex.12 | 3000 | 60 | random; 3) | VAc | 60 : 40 | 34 |
| Ex.13 | 4100 | 60 | random; 4) | VAc | 80 : 20 | 33 |
| Ex.14 | 6400 | 60 | random; 5) | VAc | 80 : 20 | 22 |

Annotation: 1) Backbones were prepared following the recipe as described for backbone B1, only the amount of EO and PO were varied.

2), 3), 4), 5): Backbones were prepared following the recipe as described for backbone B1, only the amount of EO and PO and the reaction times were varied (shortened for 2) and increased for 3), 4) and 5)); also available as commercial products: 1) Breox 60D220; 2) Breox 50A140; 3): Breox 60D320; 4): Breox 60D460; 5) Breox 60D1100;

| | MW | Backbone: EO-content (wt%) | Backbone type | Sidechains Monomer | Backbone / VAc ratio | Biodeg / % |
|---|---|---|---|---|---|---|
| Ex. 15 | 3550 | 72 | Ex.15a | VAc | 60 / 40 | 19 |
| Ex. 16 | 2200 | 80 | Ex.16a | VAc | 60 / 40 | 39 |

The cloud point of some inventive polymers is shown in Table 3 below. The inventive polymers show lower cloud point by increasing PO content in the backbone.

**Table 3:**

| Graft polymer | Backbone composition (wt.% EO) | Mn g/mol | VAc grafting, wt.% | Cloud point, °C |
|---|---|---|---|---|
| Ex.6 | EO/PO random (90% EO) | 2500 | 40 | 61 |
| Ex.7 | EO/PO random (75% EO) | 2500 | 40 | 46 |
| Ex.8 | EO/PO random (55% EO) | 2500 | 40 | 37 |
| Ex.9 | EO/PO random (35% EO) | 2500 | 40 | 22 |

### Application Tests of Graft Polymers

### Polymer Whiteness and Cleaning Performance in Liquid Detergent

Water Soluble Unit Dose (SUD) detergent composition A and B below are prepared by traditional means known to those of ordinary skill in the art by mixing the listed ingredients (Table 4).

The whiteness maintenance of the inventive polymers is evaluated according to the method for evaluating whiteness performance of polymers by directly comparing the whiteness performance of reference composition A and test composition B. ΔWI(CIE) of composition A vs composition B is reported in Table 6 as an indication of polymer whiteness performance benefit.

**Table 4: Laundry composition**

| Ingredients | SUD A (Reference composition) | SUD B (Test composition: reference composition + Inventive polymer) |
|---|---|---|
| LAS (wt%) | 23.29 | 23.29 |
| AES (wt%) | 11.99 | 11.99 |
| AE NI (wt%) | 1.92 | 1.92 |
| Suds Suppressor (wt%) | 0.25 | 0.25 |
| Polymer Example (wt%) | 0.00 | 5.53 |
| DTPA (wt%) | 0.49 | 0.49 |
| HEDP (wt%) | 2.12 | 2.12 |
| Monoethanolamine (wt%) | 7.68 | 7.68 |
| 1,2 PropaneDiol (wt%) | 8.52 | 8.52 |
| DiPropyleneGlycol (wt%) | 1.53 | 1.53 |
| Sodium Bisulphite (wt%) | 0.17 | 0.17 |
| K₂SO₃ (wt%) | 0.37 | 0.37 |
| MgCl₂ (wt%) | 0.30 | 0.30 |
| Citric Acid (wt%) | 0.66 | 0.66 |
| Fatty Acid (wt%) | 1.53 | 1.53 |
| Glycerine (wt%) | 4.49 | 4.49 |
| Brightener (wt%) | 0.37 | 0.37 |
| Blue dye (wt%) | 0.0059 | 0.0059 |
| Enzyme (including Protease, Amylase, and Mannanase) (wt%) | 0.0657 | 0.0657 |
| Preservative (wt%) | 0.009 | 0.009 |
| Hydrogenated castor oil (wt%) | 0.09 | 0.09 |
| Perfume (wt%) | 2.17 | 2.17 |
| Hueing Dye (wt%) | 0.053 | 0.053 |
| Water / minors (wt%) | Balance | Balance |

### Method for evaluating the whiteness maintenance performance in detergents

### Test preparation:

The following fabrics are provided for the whiteness benefit test:
- NA Polyester : PW19, available from Empirical Manufacturing Company (Cincinnati, OH, USA)
- Knitted Cotton 1: Test fabrics, Inc 403 cotton interlock knit tubular
- CW120, available from Empirical Manufacturing Company (Cincinnati, OH, USA).
- Polycotton

"Washed and FE Treated" fabrics were prepared according to the following method: 400g fabrics are washed in a WE Miniwasher (3.5 litre water) twice using the short program (45 minute wash cycle followed by three rinse cycles; total program is 90 minutes) at 60°C with 18.6g Ariel^{™} Compact powder detergent, twice using the short program, at 60°C nil detergent, and then three times using the short program at 40°C with 8.2 g Lenor^{™} Concentrate (a fabric enhancer) into each main wash. Fabrics are then dried in a tumble dryer on extra dry until dry. "Washed" fabrics were prepared according to the following method: 400g fabrics are washed in a WE Miniwasher (3.5 litre water) twice using the short program (45 minute wash cycle followed by three rinse cycles; total program is 90 minutes) at 60°C with 18.6g Ariel^{™} Compact powder detergent and twice using the short program, at 60°C nil detergent. Fabrics are then dried in a tumble dryer on extra dry until dry.

### Test Method:

Four fabric samples are prepared: Polycotton, washed; Knitted Cotton, washed; NA Polyester washed and FE treated, Knitted washed and FE treated.

Each sample is run in a 96 well plate simulated washing system that uses magnetized bearings to simulate the agitation of a typical full scale washing machine according to the following conditions: 750 ppm detergent concentration, 150 µL water per well, 25°C, water hardness of 2.5 mM (2:1 Ca+2 : Mg+2 molar ratio), wash pH of 8.3, 3000 ppm Arizona test dust (supplied by PTI, Powder Technology Inc).

Each polymer listed in table 5 / 6 is added at 15 ppm of the wash solution. Each fabric is washed for 60 minutes and dried in the dark under ambient conditions. For each wash condition, there are two 96 well plates, and eight internal replicates per 96 well plate, for a total of 16 replicates per wash condition.

When the samples are dry, L*, a*, b* and CIE WI are measured on each 96 well plate spot using a Spectrolino imaging system (Gretag Macbeth, Spectro Scan 3.273). For each treatment, the average CIE WI is determined. Delta CIE WI, as reported in Table below, is the difference of the average CIE WI of the sample vs. the average CIE WI of a control sample without the tested polymer.

The whiteness index (WI-index) as determined on several different fibre materials (see following table) was calculated as follow:
For the whiteness index, the CIE whiteness index formula was used and delta WI was calculated as follows: delta WI on a substrate = WI technology - WI nil .

"Comparable scaling indicator" (for example listed) = (Sum (WI all fabric tested with technology A) x100 ) / Sum (all WI fabric tested with nil technology) with this comparison being set at "100" for the test using no graft polymer.

**Table 5: comparable scaling indicator**

| Ingredients | Comparable scaling indicator |
|---|---|
| nil | 100 |
| Comp. Ex. 3 | 103 |
| Ex. 6 | 115 |

**Table 6: Delta WI-Index and Comparable scaling as determined for several different fabric types**

| Inventive Examples | Delta WI | | | | Comparable scaling indicator |
|---|---|---|---|---|---|
| | Polycotton washed | NA Polyester washed and FE treated | cotton washed and FE treated | cotton washed | |
| nil | 0 | 0 | 0 | 0 | 100 |
| Comp. Ex. 1 | 3.4 | 3.3 | 4.1 | 2.1 | 109 |
| Comp. Ex. 2 | 2.9 | 4.1 | 4.7 | 1.6 | 109 |
| Comp. Ex. 3 (only B1) | 1.9 | 1.0 | -0.5 | 1.7 | 103 |
| Comp. Ex. 4 (only B2) | 1.9 | 1.3 | 0.7 | 1.8 | 104 |
| Comp. Ex. 5 (only B3) | 2.5 | 1.2 | 1.3 | 1.8 | 105 |
| Comp. Ex. 6 (only B4) | 1.1 | 3.2 | 6.4 | 2.8 | 109 |
| Comp. Ex. 6 (only B5) | 0.0 | 3.3 | 7.3 | -0.1 | 107 |
| Ex.3 | 5.1 | 5.0 | 8.6 | 3.8 | 116 |
| Ex.4 | 3.7 | 6.4 | 8.5 | 2.1 | 114 |
| Ex.5 | 3.7 | 3.5 | 6.4 | 2.1 | 111 |
| Ex.6 | 4.3 | 5.0 | 9.8 | 2.1 | 115 |
| Ex.7 | 4.1 | 5.1 | 9.7 | 1.9 | 115 |
| Ex.8 | 3.1 | 6.3 | 11.0 | 3.2 | 117 |
| Ex.9 | 1.9 | 6.7 | 11.4 | 2.5 | 116 |
| Ex.10 | 0.4 | 6.2 | 9.6 | 0.9 | 112 |
| Ex.11 | 3.4 | 4.6 | 7.8 | 2.3 | 113 |
| Ex.12 | 4.2 | 5.1 | 7.7 | 2.8 | 114 |
| Ex.13 | 4.6 | 3.9 | 6.9 | 3.0 | 113 |
| Ex.14 | 5.1 | 5.5 | 10.9 | 2.6 | 117 |
| Ex.16 | 5.9 | 4.1 | 6.2 | 5.3 | 113 |

## Claims

1. A graft polymer comprising:
(A) a copolymer backbone as a graft base, wherein said copolymer backbone (A) is obtainable by polymerization of at least two monomers selected from the group of ethylene oxide, 1,2-propylene oxide, 1,2-butylene oxide, 2,3-butylene oxide, 1,2-pentene oxide or 2,3-pentene oxide,
a. wherein the distribution of the alkylene oxide moieties within the copolymer backbone is in random order, and
b. wherein the molecular weight of the copolymer backbone Mn in g/mol is within 500 to 7000, preferably not more than 6000, more preferably not more than 5000, even more preferably not more than 4500, even more preferably not more than 4000, even more preferably not more than 3500, even more preferably not more than 3000, and most preferably not more than 2500, and preferably at least 1000, more preferably at least 1200,
and
(B) polymeric sidechains grafted onto the copolymer backbone, wherein said polymeric sidechains (B) are obtainable by polymerization of at least one vinyl ester monomer (B1), and optionally at least one other monomer (B2), wherein - if present - the weight ratio of monomer (B2) to monomer (B1) is less than 0.5, preferably less than 0.4, more preferably less than 0.3, even more preferably less than 0.2, and most preferably less than 0.1,
comprising in percent by weight in relation to the total weight of the graft polymer
25 to 85%, preferably 30 to 80%, more preferably 35 to 80%, even more preferably 40 to 75%, and most preferably 55 to 75%, of the copolymer backbone (A),
And
15 to 75%, preferably 20 to 70%, more preferably 20 to 65 %, even more preferably 25 to 60%, most preferably 25 to 45%, of the polymeric sidechains (B).

2. The graft polymer according to claim 1, wherein the copolymer backbone (A) is obtainable by polymerization of
i) at least two monomers selected from the group of ethylene oxide, 1,2-propylene oxide or 1,2-butylene oxide, preferably at least ethylene oxide being selected as one of the monomers, more preferably only ethylene oxide and propylene oxide being selected as monomers, and/or
ii) the relative amount of EO in the polymer backbone A is within 5 to 95%, preferably 10 to 90%, more preferably 15 to 85%, even more preferably at least 20 to 80%, all as weight percent in relation to the total mass of alkylene oxides in the polymer backbone (A), and/or
iii) essentially no monomer (B2) is employed for the polymerization to obtain the side chains (B).

3. The graft polymer according to any of claims 1 or 2, wherein at least one of the following is fulfilled:
i) the graft polymer has a polydispersity Mw/Mn of < 5, preferably < 3.5, more preferably < 3, and most preferably in the range from 1.0 to 2.5 (with Mw = weight average molecular weight and Mn = number average molecular weight [g/mol / g/mol]),
ii) the copolymer backbone (A) is optionally capped at one or both end groups, preferably the copolymer backbone (A) is not capped at both end groups or, if the copolymer backbone (A) is capped, the capping is done by C1-C25-alkyl groups, preferably C1 to C4-groups;
iii) the polymeric sidechains (B) are obtained by radical polymerization of the at least one vinyl ester monomer (B1) and optionally at least one other monomer (B2), in the presence of the polymer backbone A,
wherein preferably at least 10 weight percent of the total amount of vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably 90 weight percent, and most preferably essentially only (i.e. about 100wt.% or even 100 wt.%) vinyl acetate is employed as vinyl ester (weight percent being based on the total weight of vinyl ester monomers B1 being employed),
and wherein preferably essentially no monomer (B2) is employed;.

4. The graft polymer according to any of claims 1 to 3, comprising
(A) 55 to 75% by weight (in relation to the total weight of the graft polymer) of the copolymer backbone (A) which is obtainable by polymerization of ethylene oxide and 1,2-propylene oxide as alkylene oxide monomers, the alkylene oxide monomer distribution in the backbone is in random order, and the molecular weight of the copolymer backbone Mn in g/mol is within 1200 to 2500, with the relative amount of EO in the polymer backbone (A) being within 20 to 80% by weight, in relation to the total mass of alkylene oxides in the polymer backbone (A), and
(B) 25 to 45% by weight (in relation to the total weight of the graft polymer) of the polymeric sidechains grafted onto the copolymer backbone which are obtained from vinyl acetate as the sole vinyl ester monomer (B1), with essentially no monomer (B2) being employed.

5. The graft polymer according to any of claims 1 to 4, wherein the biodegradability of the graft polymer is at least 30, preferably at least 35, even more preferably at least 40 % within 28 days when tested under OECD301F.

6. Process to produce a graft polymer according to any of claims 1 to 5, comprising the polymerization of at least one vinyl ester monomer (B1) and optionally at least one further monomer (B2) in the presence of at least one copolymer backbone (A), a free radical-forming initiator (C) and, if desired, up to 50% by weight, based on the sum of components (A), (B1), optionally (B2), and (C) of at least one organic solvent (D), at a mean polymerization temperature at which the initiator (C) has a decomposition half-life of from 40 to 500 min, in such a way that the fraction of unconverted graft monomers (B1) and optional monomer (B2) and initiator (C) in the reaction mixture is constantly kept in a quantitative deficiency relative to the copolymer backbone (A);
preferably comprising the polymerization of at least one vinyl ester monomer (B1) and optionally at least one other monomer (B2) in the presence of at least one polymer backbone (A), a free radical-forming initiator (C) and, if desired, up to 50% by weight, based on the sum of components (A), (B1), optional (B2), and (C), of at least one organic solvent (D), at a mean polymerization temperature at which the initiator (C) has a decomposition half-life of from 40 to 500 min, in such a way that the fraction of unconverted graft monomers (B1) and optional (B2) and initiator (C) in the reaction mixture is constantly kept in a quantitative deficiency relative to the polymer backbone (A), wherein preferably at least 10 weight percent of the total amount of vinyl ester monomer (B1) is selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 60, more preferably at least 70, even more preferably at least 80, even more preferably at least 90 weight percent, and most preferably essentially only (i.e. about 100wt.% or even 100 wt.%) vinyl acetate is employed as vinyl ester (weight percent being based on the total weight of vinyl ester monomers B1 being employed), and wherein - if (B2) is present - the weight ratio of optional monomer (B2) to monomer (B1) is less than 0.5, preferably less than 0.4, more preferably less than 0.3, even more preferably less than 0.2, and most preferably less than 0.1.

7. Process according to claim 6, wherein besides the monomer(s) (B1) essentially no monomer (B2) is employed.

8. Process according to any of claims 6 to 7, wherein the process comprises at least one further process step selected from i) to iv) with i) post-polymerisation; ii) purification; iii) concentration; and iv) drying.

9. Process according to any of claims 6 to 8, wherein the process comprises at least one further process step selected from:
i) a post-polymerization process step that is performed after the main polymerization reaction, wherein preferably a further amount of initiator (optionally dissolved in the solvent(s)) is added over a period of 0,5 hour and up to 3 hours, preferably about 1 to 2 hours, more preferably about 1 hour, with the radical initiator and the solvent(s) for the initiator typically - and preferred - being the same as the ones for the main polymerization reaction; and wherein after the polymerization reaction and before the post-polymerisation reaction preferably a period is waited when the main polymerization reaction is left to proceed, before the post-polymerisation reaction is started by starting the addition of further radical initiator, such period being preferably from 10 minutes and up to 4 hours, preferably up to 2 hours, even more preferably up to 1 hour, and most preferably up to 30 minutes; and wherein the temperature of the post-polymerisation process step is - preferably - the same as in the main polymerization reaction, or is increased, such increase being preferably higher by about 5 to 40°C, preferably 10 to 20°C compared to the temperature of the main polymerisation reaction;
ii) a step of subjecting the graft polymer as obtained from the main polymerization or - if performed, the post-polymerisation process - to a means of concentration and/or drying to remove part of or almost all of the remaining solvent(s) (as far as they are removable due to their boiling points) and/or volatiles such as residual monomers, wherein
a. the concentration is performed by removing part of the solvent(s) and optionally also volatiles to increase the solid polymer concentration, by preferably applying a distillation process such as thermal or vacuum distillation, preferably vacuum distillation, which is performed until the desired solid content is achieved, preferably is performed until the desired part or all of the volatile components such as volatile solvents and/or unreacted, volatile monomers, are removed;
b. the drying is performed by subjecting the graft polymer containing at least residual amounts of volatiles such as remaining solvent and/or unreacted monomers etc. to a means of removing the volatiles, such as drying using a roller-drum, a spray-dryer, vacuum drying or freeze-drying, preferably - mainly for cost-reasons - spray-drying; and optionally combining such drying process step with a means of agglomeration or granulation to obtain agglomerated or granulated graft polymer particles, such process being preferably selected from spray-agglomeration, granulation or drying in a fluidized-bed dryer, spray-granulation device.

10. Process according to any of claims 6 to 9, wherein the amount of water is low, preferably below 5wt% based on total solvent, more preferably below 1%.

11. Use of at least one graft polymer according to any of claims 1 to 5 or obtained by or obtainable by the process according to any of claims 6 to 10 in a composition, that is a fabric and home care product, cleaning composition, industrial and institutional cleaning product, cosmetic or personal care product, oil field-formulation such as crude oil emulsion breaker, pigment dispersion for inks such as ink-jet inks, electro plating product, cementitious composition, lacquer, paint, agrochemical formulations,
preferably in cleaning compositions and/or in fabric and home care products,
more preferably in cleaning compositions for in fabric and home care, the cleaning composition preferably being a laundry detergent formulation or a dish wash detergent formulation,
such cleaning compositions preferably further comprising at least one enzyme, preferably selected from one or more lipases, hydrolases, amylases, proteases, cellulases, hemicellulases, phospholipases, esterases, pectinases, lactases, pectate lyases, cutinases, DNases, xylanases, oxicoreductases, dispersins, mannanases and peroxidases, and combinations of at least two of the foregoing types, preferably at least one enzyme being selected from one or more lipases, hydrolases, amylases, proteases, cellulases, more preferably at least one lipase,
wherein the at least one graft polymer is present in an amount ranging from about 0.01% to about 20%, preferably from about 0.05% to 15%, more preferably from about 0.1% to about 10%, and most preferably from about 0.5% to about 5%, in relation to the total weight of such composition or product in relation to the total weight of such composition or product,
and such product or composition further comprising from about 1% to about 70% by weight of a surfactant system.

12. A composition being a laundry detergent, a dish wash composition, a cleaning composition and/or a fabric and home care product containing at least one graft polymer according to any of claims 1 to 5 or obtained by or obtainable by the process according to any of claims 6 to 10.

13. A composition according to claim 12 further comprising at least one of i) and ii), with
i) an antimicrobial agent selected from the group consisting of 2-phenoxyethanol; preferably comprising said antimicrobial agent in an amount ranging from 2ppm to 5% by weight of the composition; more preferably comprising 0.1 to 2% of phenoxyethanol, and
ii) 4,4'-dichloro 2-hydroxydiphenylether in a concentration from 0.001 to 3%, preferably 0.002 to 1%, more preferably 0.01 to 0.6%, each by weight of the composition.

14. A method of preserving a composition according to any of claims 12 or 13ii) against microbial contamination or growth, which method comprises addition of an antimicrobial agent selected from the group consisting of 2-phenoxyethanol to the composition which is an aqueous composition comprising water as solvent.

15. A method of laundering fabric or of cleaning hard surfaces, which method comprises treating a fabric or a hard surface with a composition according to any of claims 12 or 13i), wherein the composition comprises 4,4'-dichloro 2-hydroxydiphenylether, preferably comprising 4,4'-dichloro 2-hydroxydiphenylether in a concentration from 0.001 to 3%, preferably 0.002 to 1%, more preferably 0.01 to 0.6%, each by weight of the composition.

## Patentansprüche

1. Pfropfpolymer, umfassend:
(A) eine Copolymer-Hauptkette als Pfropfgrundlage, wobei die Copolymer-Hauptkette (A) durch Polymerisation von mindestens zwei aus der Gruppe Ethylenoxid, 1,2-Propylenoxid, 1,2-Butylenoxid, 2,3-Butylenoxid, 1,2-Pentenoxid oder 2,3-Pentenoxid ausgewählten Monomeren erhältlich ist,
a. wobei die Verteilung der Alkylenoxidgruppierungen in der Copolymer-Hauptkette zufällig ist und
b. wobei das Molekulargewicht der Copolymer-Hauptkette Mn in g/mol 500 bis 7000, vorzugsweise nicht mehr als 6000, weiter bevorzugt nicht mehr als 5000, noch weiter bevorzugt nicht mehr als 4500, noch weiter bevorzugt nicht mehr als 4000, noch weiter bevorzugt nicht mehr als 3500, noch weiter bevorzugt nicht mehr als 3000 und ganz besonders bevorzugt nicht mehr als 2500 und vorzugsweise mindestens 1000, weiter bevorzugt mindestens 1200, beträgt,
und
(B) auf der Copolymer-Hauptkette aufgepfropfte polymere Seitenketten, wobei die polymeren Seitenketten (B) durch Polymerisation von mindestens einem Vinylester-Monomer (B1) und gegebenenfalls mindestens einem anderen Monomer (B2) erhältlich sind, wobei - sofern vorhanden - das Gewichtsverhältnis von Monomer (B2) zu Monomer (B1) weniger als 0,5, vorzugsweise weniger als 0,4, weiter bevorzugt weniger als 0,3, noch weiter bevorzugt weniger als 0,2 und ganz besonders bevorzugt weniger als 0,1 beträgt,
umfassend in Gewichtsprozent, bezogen auf das Gesamtgewicht des Pfropfpolymers
25 bis 85 %, vorzugsweise 30 bis 80 %, weiter bevorzugt 35 bis 80 %, noch weiter bevorzugt 40 bis 75 % und ganz besonders bevorzugt 55 bis 75 %, der Copolymer-Hauptkette (A)
und
15 bis 75 %, vorzugsweise 20 bis 70 %, weiter bevorzugt 20 bis 65 %, noch weiter bevorzugt 25 bis 60 %, ganz besonders bevorzugt 25 bis 45 %, der polymeren Seitenketten (B).

2. Pfropfpolymer nach Anspruch 1, wobei die Copolymer-Hauptkette (A) erhältlich ist durch Polymerisation von
i) mindestens zwei aus der Gruppe Ethylenoxid, 1,2-Propylenoxid oder 1,2-Butylenoxid ausgewählten Monomeren, wobei vorzugsweise mindestens Ethylenoxid als eines der Monomere ausgewählt wird und weiter bevorzugt nur Ethylenoxid und Propylenoxid als Monomere ausgewählt werden, und/oder
ii) die relative Menge von EO in der Polymer-Hauptkette A 5 bis 95 %, vorzugsweise 10 bis 90 %, weiter bevorzugt 15 bis 85 %, noch weiter bevorzugt mindestens 20 bis 80 %, beträgt, jeweils als Gewichtsprozent bezogen auf die Gesamtmasse von Alkylenoxiden in der Polymer-Hauptkette (A), und/oder
iii) für die Polymerisation zum Erhalt der Seitenketten (B) im Wesentlichen kein Monomer (B2) eingesetzt wird.

3. Pfropfpolymer nach Anspruch 1 oder 2, wobei mindestens einer der folgenden Punkte erfüllt ist:
i) das Pfropfpolymer weist eine Polydispersität Mw/Mn von < 5, vorzugsweise < 3,5, weiter bevorzugt < 3 und ganz besonders bevorzugt im Bereich von 1,0 bis 2,5 auf (mit Mw = gewichtsmittleres Molekulargewicht und Mn = zahlenmittleres Molekulargewicht [g/mol / g/mol]) auf,
ii) die Copolymer-Hauptkette (A) ist gegebenenfalls an einer oder beiden Endgruppen endgruppenverschlossen, vorzugsweise ist die Copolymer-Hauptkette (A) nicht an beiden Endgruppen endgruppenverschlossen oder erfolgt dann, wenn die Copolymer-Hauptkette (A) endgruppenverschlossen ist, der Endgruppenverschluss mit C1-C25-Alkylgruppen, vorzugsweise C1- bis C4-Gruppen;
iii) die polymeren Seitenketten (B) werden durch Radikalpolymerisation des mindestens einen Vinylester-Monomers (B1) und gegebenenfalls mindestens eines anderen Monomers (B2) in Gegenwart der Polymer-Hauptkette A erhalten,
wobei vorzugsweise mindestens 10 Gewichtsprozent der Gesamtmenge von Vinylester-Monomer (B1) aus Vinylacetat, Vinylpropionat und Vinyllaurat, weiter bevorzugt aus Vinylacetat und Vinyllaurat und ganz besonders bevorzugt Vinylacetat ausgewählt sind und wobei die verbleibende Menge von Vinylester ein beliebiger anderer bekannter Vinylester sein kann, wobei vorzugsweise mindestens 60, weiter bevorzugt mindestens 70, noch weiter bevorzugt mindestens 80, noch weiter bevorzugt 90 Gewichtsprozent und ganz besonders im Wesentlichen nur (d. h. etwa 100 Gew.-% oder sogar 100 Gew.-%) Vinylacetat als Vinylester eingesetzt werden bzw. wird (Gewichtsprozent bezogen auf das Gesamtgewicht der eingesetzten Vinylester-Monomere B1),
und wobei vorzugsweise im Wesentlichen kein Monomer (B2) eingesetzt wird.

4. Pfropfpolymer nach einem der Ansprüche 1 bis 3, umfassend
(A) 55 bis 75 Gew.-% (bezogen auf das Gesamtgewicht des Pfropfpolymers) der Copolymer-Hauptkette (A), die durch Polymerisation von Ethylenoxid und 1,2-Propylenoxid als Alkylenoxid-Monomeren erhältlich ist, wobei die Verteilung der Alkylenoxidgruppierungen in der Copolymer-Hauptkette statistisch ist und das Molekulargewicht der Copolymer-Hauptkette Mn in g/mol 1200 bis 2500 beträgt, wobei die relative Menge von EO in der Polymer-Hauptkette (A) 20 bis 80 Gew.-%, bezogen auf die Gesamtmasse von Alkylenoxiden in der Polymer-Hauptkette (A), beträgt, und
(B) 25 bis 45 Gew.-% (bezogen auf das Gesamtgewicht des Pfropfpolymers) der auf die Copolymer-Hauptkette aufgepfropften polymeren Seitenketten, die aus Vinylacetat als alleinigem Vinylester-Monomer (B1) erhalten werden, wobei im Wesentlichen kein Monomer (B2) eingesetzt wird.

5. Pfropfpolymer nach einem der Ansprüche 1 bis 4, wobei die biologische Abbaubarkeit des Pfropfpolymers bei Prüfung gemäß OECD301F mindestens 30, vorzugsweise mindestens 35 und noch weiter bevorzugt mindestens 40 % innerhalb von 28 Tagen beträgt.

6. Verfahren zur Herstellung eines Pfropfpolymers nach einem der Ansprüche 1 bis 5, umfassend die Polymerisation von mindestens einem Vinylester-Monomer (B1) und gegebenenfalls mindestens einem weiteren Monomer (B2) in Gegenwart von mindestens einer Copolymer-Hauptkette (A), einem Radikale bildenden Initiator (C) und, falls gewünscht, bis zu 50 Gew.-%, bezogen auf die Summe der Komponenten (A), (B1), gegebenenfalls (B2) und (C), mindestens eines organischen Lösungsmittels (D) bei einer mittleren Polymerisationstemperatur, bei der der Initiator (C) eine Zersetzungshalbwertszeit von 40 bis 500 min aufweist, derart, dass der Anteil an nicht umgesetzten Pfropfmonomeren (B1) und gegebenenfalls Monomer (B2) und Initiator (C) in der Reaktionsmischung ständig in mengenmäßigem Unterschuss gegenüber der Copolymer-Hauptkette (A) gehalten wird;
vorzugsweise umfassend die Polymerisation von mindestens einem Vinylester-Monomer (B1) und gegebenenfalls mindestens einem anderen Monomer (B2) in Gegenwart mindestens einer Polymer-Hauptkette (A), eines Radikale bildenden Initiators (C) und, falls gewünscht, bis zu 50 Gew.-%, bezogen auf die Summe der Komponenten (A), (B1), gegebenenfalls (B2) und (C), mindestens eines organischen Lösungsmittels (D), bei einer mittleren Polymerisationstemperatur, bei der der Initiator (C) eine Zersetzungshalbwertszeit von 40 bis 500 min aufweist, derart, dass der Anteil an nicht umgesetzten Pfropfmonomeren (B1) und gegebenenfalls (B2) und Initiator (C) in der Reaktionsmischung ständig in mengenmäßigem Unterschuss gegenüber der Copolymer-Hauptkette (A) gehalten wird, wobei vorzugsweise mindestens 10 Gewichtsprozent der Gesamtmenge von Vinylester-Monomer (B1) aus Vinylacetat, Vinylpropionat und Vinyllaurat, weiter bevorzugt aus Vinylacetat und Vinyllaurat und ganz besonders bevorzugt Vinylacetat ausgewählt werden und wobei die verbleibende Menge von Vinylester ein beliebiger anderer bekannter Vinylester sein kann, wobei vorzugsweise mindestens 60, weiter bevorzugt mindestens 70, noch weiter bevorzugt mindestens 80, noch weiter bevorzugt mindestens 90 Gew.-% und ganz besonders im Wesentlichen nur (d. h. etwa 100 Gew.-% oder sogar 100 Gew.-%) Vinylacetat als Vinylester eingesetzt werden bzw. wird (Gewichtsprozent bezogen auf das Gesamtgewicht der eingesetzten Vinylester-Monomere B1) und wobei - sofern (B2) vorhanden ist - das Gewichtsverhältnis von fakultativen Monomer (B2) zu Monomer (B1) weniger als 0,5, vorzugsweise weniger als 0,4, weiter bevorzugt weniger als 0,3, noch weiter bevorzugt weniger als 0,2 und ganz besonders bevorzugt weniger als 0,1 beträgt.

7. Verfahren nach Anspruch 6, wobei neben dem Monomer bzw. den Monomeren (B1) im Wesentlichen kein Monomer (B2) eingesetzt wird.

8. Verfahren nach einem der Ansprüche 6 bis 7, wobei das Verfahren mindestens einen weiteren Verfahrensschritt umfasst, der aus i) bis iv) ausgewählt ist, mit i) Nachpolymerisation; ii) Reinigung; iii) Aufkonzentration und iv) Trocknen.

9. Verfahren nach einem der Ansprüche 6 bis 8, wobei das Verfahren mindestens einen weiteren Verfahrensschritt umfasst, der ausgewählt ist aus:
i) einem nach der Hauptpolymerisationsreaktion durchgeführten Nachpolymerisationsverfahrensschritt, wobei vorzugsweise eine weitere Menge Initiator (gegebenenfalls in dem Lösungsmittel bzw. den Lösungsmitteln gelöst) über einen Zeitraum von 0,5 Stunden und bis zu 3 Stunden, vorzugsweise etwa 1 bis 2 Stunden, weiter bevorzugt etwa 1 Stunde, zugegeben wird, wobei der Radikalinitiator und das Lösungsmittel bzw. die Lösungsmittel für den Initiator typischerweise - und bevorzugt - die gleichen sind wie diejenigen für die Hauptpolymerisationsreaktion; und wobei nach der Polymerisationsreaktion und vor der Nachpolymerisationsreaktion vorzugsweise eine Zeitdauer gewartet wird, in der die Hauptpolymerisationsreaktion fortschreiten gelassen wird, bevor die Nachpolymerisationsreaktion durch Starten der Zugabe von weiterem Radikalinitiator gestartet wird, wobei diese Zeitdauer vorzugsweise 10 Minuten und bis zu 4 Stunden, vorzugsweise bis zu 2 Stunden, noch weiter bevorzugt bis zu 1 Stunde und ganz besonders bevorzugt bis zu 30 Minuten beträgt; und wobei die Temperatur des Nachpolymerisationsverfahrensschritts - vorzugsweise - die gleiche wie bei der Hauptpolymerisationsreaktion ist oder erhöht wird, wobei eine solche Erhöhung vorzugsweise um etwa 5 bis 40 °C, vorzugsweise 10 bis 20 °C, im Vergleich zur Temperatur der Hauptpolymerisationsreaktion höher ist;
ii) einen Schritt, bei dem das Pfropfpolymer, wie es aus der Hauptpolymerisation oder - sofern durchgeführt, dem Nachpolymerisationsverfahren - erhalten wird, einem Aufkonzentrierungs- und/oder Trocknungsmittel unterzogen wird, um das verbleibende Lösungsmittel bzw. die verbleibenden Lösungsmittel (soweit sie aufgrund ihrer Siedepunkte entfernbar sind) und/oder flüchtige Bestandteile wie Restmonomere teilweise oder nahezu vollständig zu entfernen, wobei
a. die Aufkonzentrierung durchgeführt wird, indem ein Teil des Lösungsmittels bzw. der Lösungsmittel und gegebenenfalls auch flüchtige Bestandteile entfernt werden, um die Polymerfeststoffkonzentration zu erhöhen, vorzugsweise indem ein Destillationsverfahren wie thermische Destillation oder Vakuumdestillation, vorzugsweise Vakuumdestillation, angewendet wird, die bis zum Erreichen des gewünschten Feststoffgehalts durchgeführt wird, vorzugsweise bis der gewünschte Teil oder die Gesamtheit der flüchtigen Bestandteile wie flüchtige Lösungsmittel und/oder nicht umgesetzte flüchtige Monomere entfernt sind;
b. die Trocknung durchgeführt wird, indem das Pfropfpolymer, das mindestens Restmengen an flüchtigen Bestandteilen wie verbleibendes Lösungsmittel und/oder nicht umgesetzte Monomere usw. enthält, einem Mittel zur Entfernung der flüchtigen Bestandteile, wie Trocknung mit einer Rollentrommel, einem Sprühtrockner, Vakuumtrocknung oder Gefriertrocknung, vorzugsweise - hauptsächlich aus Kostengründen - Sprühtrocknung, unterzogen wird; und gegebenenfalls Vereinigen eines solchen Trocknungsverfahrensschritts mit einem Agglomerierungs- oder Granuliermittel zum Erhalt von agglomerierten bzw. granulierten Pfropfpolymerpartikeln, wobei dieses Verfahren vorzugsweise aus Sprühagglomeration, Granulierung oder Trocknung in einem Wirbelschichttrockner oder einer Sprühgranuliervorrichtung ausgewählt wird.

10. Verfahren nach einem der Ansprüche 6 bis 9, wobei die Menge an Wasser gering ist und vorzugsweise unter 5 Gew.-%, bezogen auf das gesamte Lösungsmittel, weiter bevorzugt unter 1 %, liegt.

11. Verwendung mindestens eines Pfropfpolymers nach einem der Ansprüche 1 bis 5 oder eines nach dem Verfahren nach einem der Ansprüche 6 bis 10 erhaltenen oder erhältlichen Pfropfpolymers in einer Zusammensetzung, bei der es sich um
ein Textil- und Haushaltspflegeprodukt, ein Reinigungsmittel, ein industrielles und institutionelles Reinigungsprodukt, ein Kosmetik- oder Körperpflegeprodukt, eine Ölfeldformulierung wie einen Rohölemulsionsbrecher, eine Pigmentdispersion für Tinten wie Tintenstrahltinten, ein Galvanisierungsprodukt, eine zementöse Zusammensetzung, einen Lack, ein Anstrichmittel oder agrochemische Formulierungen handelt,
vorzugsweise in Reinigungsmitteln und/oder in Textil- und Haushaltspflegeprodukten,
weiter bevorzugt in Reinigungsmitteln für die Textil- und Haushaltspflege, wobei es sich bei dem Reinigungsmittel vorzugsweise um eine Waschmittelformulierung oder eine Geschirrspülmittelformulierung handelt,
wobei solche Reinigungsmittel vorzugsweise ferner mindestens ein Enzym, das vorzugsweise aus einer oder mehreren Lipasen, Hydrolasen, Amylasen, Proteasen,
Cellulasen, Hemicellulasen, Phospholipasen, Esterasen, Pectinasen, Lactasen, Pectatlyasen, Cutinasen, DNasen, Xylanasen, Oxidoreduktasen, Dispersinen, Mannanasen und Peroxidasen und Kombinationen von mindestens zwei der vorstehenden Typen ausgewählt sind, vorzugsweise mindestens ein Enzym, das aus einer oder mehreren Lipasen, Hydrolasen, Amylasen, Proteasen und Cellulasen ausgewählt ist, weiter bevorzugt mindestens eine Lipase, umfassen,
wobei das mindestens eine Pfropfpolymer in einer Menge im Bereich von etwa 0,01 % bis etwa 20 %, vorzugsweise von etwa 0,05 % bis 15 %, weiter bevorzugt von etwa 0,1 % bis etwa 10 % und ganz besonders bevorzugt von etwa 0,5 % bis etwa 5 %, bezogen auf das Gesamtgewicht einer solchen Zusammensetzung oder eines solchen Produkts, bezogen auf das Gesamtgewicht einer solchen Zusammensetzung oder eines solchen Produkts, vorliegt, und wobei ein solches Produkt oder eine solche Zusammensetzung ferner etwa 1 bis etwa 70 Gew.-% eines Tensidsystems umfasst.

12. Zusammensetzung, bei der es sich um ein Waschmittel, ein Geschirrspülmittel, ein Reinigungsmittel und/oder ein Textil- und Haushaltspflegeprodukt handelt, das mindestens ein Pfropfpolymer nach einem der Ansprüche 1 bis 5 oder ein durch das Verfahren nach einem der Ansprüche 6 bis 10 erhaltenes oder erhältliches Pfropfpolymer enthält.

13. Zusammensetzung nach Anspruch 12, ferner umfassend mindestens eines von i) und ii), mit
i) ein antimikrobielles Mittel, das aus der Gruppe bestehend aus 2-Phenoxyethanol ausgewählt ist; vorzugsweise umfassend das antimikrobielle Mittel in einer Menge im Bereich von 2 ppm bis 5 %, bezogen auf das Gewicht der Zusammensetzung; weiter bevorzugt umfassend 0,1 bis 2 % Phenoxyethanol, und
ii) 4,4'-Dichlor-2-hydroxydiphenylether in einer Konzentration von 0,001 bis 3 %, vorzugsweise 0,002 bis 1 %, weiter bevorzugt 0,01 bis 0,6 %, jeweils bezogen auf das Gewicht der Zusammensetzung.

14. Verfahren zum Konservieren einer Zusammensetzung nach einem der Ansprüche 12 oder 13ii) gegen Mikrobenkontamination oder -wachstum, wobei das Verfahren das Zugeben eines antimikrobiellen Mittels, das aus der Gruppe bestehend aus 2-Phenoxyethanol ausgewählt wird, zu der Zusammensetzung umfasst, bei welchem es sich um eine wässrige Zusammensetzung handelt, die Wasser als Lösungsmittel umfasst.

15. Verfahren zum Waschen von Textilien oder zum Reinigen harter Oberflächen, wobei das Verfahren das Behandeln einer Textilie oder einer harten Oberfläche mit einer Zusammensetzung nach einem der Ansprüche 12 oder 13i) umfasst, wobei die Zusammensetzung 4,4'-Dichlor-2-hydroxydiphenylether umfasst, vorzugsweise 4,4'-Dichlor-2-hydroxydiphenylether in einer Konzentration von 0,001 bis 3 %, vorzugsweise 0,002 bis 1 %, besonders bevorzugt 0,01 bis 0,6 %, jeweils bezogen auf das Gewicht der Zusammensetzung.

## Revendications

1. Polymère greffé comprenant :
(A) un squelette de copolymère comme une base de greffe, dans lequel ledit squelette de copolymère (A) peut être obtenu par polymérisation d'au moins deux monomères sélectionnés dans le groupe de l'oxyde d'éthylène, l'oxyde de 1,2-propylène, l'oxyde de 1,2-butylène, l'oxyde de 2,3-butylène, l'oxyde de 1,2-pentène ou l'oxyde de 2,3-pentène,
a. dans lequel la distribution des fragments oxyde d'alkylène dans le squelette de copolymère est dans un ordre aléatoire, et
b. dans lequel le poids moléculaire du squelette de copolymère Mn en g/mole est compris entre 500 et 7 000, de préférence pas plus de 6 000, plus préférablement pas plus de 5 000, encore plus préférablement pas plus de 4 500, encore plus préférablement pas plus de 4 000, encore plus préférablement pas plus de 3 500, encore plus préférablement pas plus de 3 000, et encore plus préférablement pas plus de 2 500, et de préférence au moins 1 000, plus préférablement au moins 1 200,
et
(B) des chaînes latérales polymériques greffées sur le squelette de copolymère, lesdites chaînes latérales polymériques (B) pouvant être obtenues par polymérisation d'au moins un monomère d'ester vinylique (B1), et éventuellement d'au moins un autre monomère (B2), le rapport pondéral du monomère (B2) sur le monomère (B1) étant, s'il est présent, inférieur à 0,5, de préférence inférieur à 0,4, plus préférablement inférieur à 0,3, encore plus préférablement inférieur à 0,2, et le plus préférablement inférieur à 0,1,
comprenant en pourcentage en poids par rapport au poids total du polymère greffé
25 à 85 %, de préférence 30 à 80 %, plus préférablement 35 à 80 %, encore plus préférablement 40 à 75 %, et le plus préférablement 55 à 75 %, du squelette de copolymère (A),
et
15 à 75 %, de préférence 20 à 70 %, plus préférablement 20 à 65 %, plus préférablement 25 à 60 %, le plus préférablement 25 à 45 %, des chaînes latérales polymériques (B).

2. Polymère greffé selon la revendication 1, dans lequel le squelette de copolymère (A) peut être obtenu par polymérisation de
i) au moins deux monomères choisis dans le groupe constitué par l'oxyde d'éthylène, l'oxyde de 1,2-propylène ou l'oxyde de 1,2-butylène, de préférence au moins l'oxyde d'éthylène étant choisi comme l'un des monomères, plus préférablement seulement l'oxyde d'éthylène et l'oxyde de propylène étant choisis comme monomères, et/ou
ii) la quantité relative d'EO dans le squelette de polymère A est dans la plage de 5 à 95 %, de préférence 10 à 90 %, plus préférablement 15 à 85 %, encore plus préférablement 20 à 80 %, tous en pourcentage en poids par rapport à la masse totale d'oxydes d'alkylène dans le squelette de polymère (A), et/ou
iii) essentiellement aucun monomère (B2) n'est employé pour la polymérisation pour obtenir les chaînes latérales (B).

3. Polymère greffé selon l'une quelconque des revendications 1 ou 2, dans lequel au moins l'un des énoncés suivants est satisfait :
i) le polymère greffé à une polydispersité Mw/Mn de < 5, préférablement < 3,5, plus préférablement < 3 et le plus préférablement dans la plage de 1,0 à 2,5 (avec Mw = poids moléculaire moyen en poids et Mn = poids moléculaire moyen en nombre [g/mole / g/mole]),
ii) le squelette de copolymère (A) est éventuellement coiffé au niveau d'un ou des deux groupes terminaux, de préférence le squelette de copolymère (A) n'est pas coiffé au niveau des deux groupes terminaux ou, si le squelette de copolymère (A) est coiffé, le coiffage est effectué par des groupes alkyle en C1-C25, de préférence des groupes en C1-C4 ;
iii) les chaînes latérales polymériques (B) sont obtenues par polymérisation radicalaire de l'au moins un monomère d'ester vinylique (B1) et éventuellement d'au moins un autre monomère (B2), en présence du squelette de polymère A,
dans lequel, de préférence, au moins 10 pour cent en poids de la quantité totale de monomère d'ester vinylique (B1) est choisi parmi l'acétate de vinyle, le propionate de vinyle et le laurate de vinyle, plus préférablement parmi l'acétate de vinyle et le laurate de vinyle et le plus préférablement l'acétate de vinyle, et dans lequel la quantité restante d'ester vinylique peut être tout autre ester vinylique connu, dans lequel de préférence au moins 60, plus préférablement au moins 70, encore plus préférablement au moins 80, encore plus préférablement 90 pour cent en poids, et, le plus préférablement essentiellement seulement (c'est-à-dire environ 100 % en poids ou même 100 % en poids) de l'acétate de vinyle est utilisé comme ester vinylique (le pourcentage en poids étant basé sur le poids total des monomères d'ester vinylique B1 employés),
et dans lequel, de préférence, essentiellement aucun monomère (B2) n'est utilisé.

4. Polymère greffé selon l'une quelconque des revendications 1 à 3, comprenant
(A) 55 à 75 % en poids (par rapport au poids total du polymère greffé) du squelette de copolymère (A) qui peut être obtenu par polymérisation d'oxyde d'éthylène et d'oxyde de 1,2-propylène comme monomères d'oxyde d'alkylène, la distribution des monomères d'oxyde d'alkylène dans le squelette étant dans un ordre aléatoire, et le poids moléculaire du squelette de copolymère Mn en g/mole est dans la plage de 1 200 à 2 500, la quantité relative d'EO dans le squelette de polymère (A) étant comprise entre 20 et 80 % en poids, par rapport à la masse totale d'oxydes d'alkylène dans le squelette de polymère (A), et
(B) 25 à 45 % en poids (par rapport au poids total du polymère greffé) des chaînes latérales polymériques greffées sur le squelette de copolymère obtenues à partir d'acétate de vinyle comme seul monomère d'ester vinylique (B1), sans qu'essentiellement aucun monomère (B2) ne soit employé.

5. Polymère greffé selon l'une quelconque des revendications 1 à 4, dans lequel la biodégradabilité du polymère greffé est d'au moins 30, de préférence d'au moins 35, encore plus préférablement d'au moins 40 % en 28 jours lorsqu'il est testé sous OECD301F.

6. Procédé de production d'un polymère greffé selon l'une quelconque des revendications 1 à 5, comprenant la polymérisation d'au moins un monomère d'ester vinylique (B1) et éventuellement d'au moins un autre monomère (B2) en présence d'au moins un squelette de copolymère (A), d'un initiateur de formation de radicaux libres (C) et, si cela est souhaité, jusqu'à 50 % en poids, par rapport à la somme des composants (A), (B1), éventuellement (B2) et (C) d'au moins un solvant organique (D), à une température moyenne de polymérisation à laquelle l'initiateur (C) a une demi-vie de décomposition de 40 à 500 min, de telle sorte que la fraction de monomères greffés non convertis (B1) et éventuellement de monomère (B2) et d'initiateur (C) dans le mélange réactionnel soit constamment maintenue en un défaut quantitatif par rapport au squelette de copolymère (A) ;
comprenant de préférence la polymérisation d'au moins un monomère d'ester vinylique (B1) et éventuellement d'au moins un autre monomère (B2) en présence d'au moins un squelette de polymère (A), d'un initiateur de formation de radicaux libres (C) et, si cela est souhaité, jusqu'à 50 % en poids, par rapport à la somme des composants (A), (B1), (B2) éventuel, et (C), d'au moins un solvant organique (D), à une température moyenne de polymérisation à laquelle l'initiateur (C) a une demi-vie de décomposition de 40 à 500 min, de telle sorte que la fraction de monomères greffés non convertis (B1) et (B2) éventuel et d'initiateur (C) dans le mélange réactionnel soit constamment maintenue en un défaut quantitatif par rapport au squelette de polymère (A), de préférence au moins 10 % en poids de la quantité totale de monomère d'ester vinylique (B1) étant choisi parmi l'acétate de vinyle, le propionate de vinyle et le laurate de vinyle, plus préférablement parmi l'acétate de vinyle et le laurate de vinyle, et le plus préférablement l'acétate de vinyle, et dans lequel la quantité restante d'ester vinylique peut être tout autre ester vinylique connu, dans lequel de préférence au moins 60, plus préférablement au moins 70, encore plus préférablement au moins 80, encore plus préférablement au moins 90 pour cent en poids, et le plus préférablement essentiellement seulement (c'est-à-dire environ 100 % en poids ou même 100 % en poids) d'acétate de vinyle est utilisé comme ester vinylique (le pourcentage en poids étant basé sur le poids total des monomères d'ester vinylique B1 utilisés), et dans lequel - si (B2) est présent - le rapport pondéral du monomère éventuel (B2) sur le monomère (B1) est inférieur à 0,5, de préférence inférieur à 0,4, plus préférablement inférieur à 0,3, encore plus préférablement inférieur à 0,2, et le plus préférablement inférieur à 0,1.

7. Procédé selon la revendication 6, dans lequel, outre le ou les monomères (B1), essentiellement aucun monomère (B2) n'est utilisé.

8. Procédé selon l'une quelconque des revendications 6 à 7, dans lequel le procédé comprend au moins une étape de procédé supplémentaire choisie parmi i) à iv) avec i) post-polymérisation ; ii) purification ; iii) concentration ; et iv) séchage.

9. Procédé selon l'une quelconque des revendications 6 à 8, dans lequel le procédé comprend au moins une étape de procédé supplémentaire choisie parmi :
i) une étape de procédé de post-polymérisation qui est effectuée après la réaction de polymérisation principale, dans lequel de préférence une quantité supplémentaire d'initiateur (éventuellement dissous dans le ou les solvants) est ajoutée sur une période de 0,5 heure et jusqu'à 3 heures, de préférence environ 1 à 2 heures, plus préférablement environ 1 heure, l'initiateur de radicaux et le ou les solvants de l'initiateur étant généralement - et de préférence - identiques à ceux de la réaction de polymérisation principale ; et dans lequel, après la réaction de polymérisation et avant la réaction de post-polymérisation, on attend de préférence une période pendant laquelle on laisse la réaction de polymérisation principale se poursuivre, avant de commencer la réaction de post-polymérisation en commençant l'ajout d'un autre initiateur de radicaux, cette période allant de préférence de 10 minutes à 4 heures, de préférence jusqu'à 2 heures, encore plus préférablement jusqu'à 1 heure, et le plus préférablement jusqu'à 30 minutes ; et dans lequel la température de l'étape de post-polymérisation est - de préférence - la même que dans la réaction de polymérisation principale, ou est augmentée, cette augmentation étant de préférence supérieure d'environ 5 à 40 °C, de préférence de 10 à 20 °C par rapport à la température de la réaction de polymérisation principale ;
ii) une étape de soumission du polymère greffé tel qu'obtenu à partir de la polymérisation principale ou - s'il est réalisé, le procédé de post-polymérisation - à un moyen de concentration et/ou de séchage pour éliminer une partie ou presque la totalité du ou des solvants restants (dans la mesure où ils sont éliminables en raison de leurs points d'ébullition) et/ou des composés volatils tels que des monomères résiduels, dans lequel
a. la concentration est effectuée en éliminant une partie du ou des solvants et éventuellement aussi des composés volatils pour augmenter la concentration en polymères solides, en appliquant de préférence un procédé de distillation tel que la distillation thermique ou sous vide, de préférence la distillation sous vide, qui est effectuée jusqu'à ce que la teneur en solides souhaitée soit atteinte, de préférence jusqu'à ce que la partie souhaitée ou la totalité des composants volatils tels que les solvants volatils et/ou les monomères volatils n'ayant pas réagi soient éliminés ;
b. le séchage est effectué en soumettant le polymère greffé contenant au moins des quantités résiduelles de composés volatils, telles que le solvant restant et/ou les monomères n'ayant pas réagi, etc., à un moyen d'élimination des composés volatils, tel qu'un séchage en utilisant un tambour à rouleaux, un séchoir par pulvérisation, un séchage sous vide ou une lyophilisation, de préférence - principalement pour des raisons de coût - un séchage par pulvérisation ; et éventuellement en combinant cette étape de procédé de séchage avec un moyen d'agglomération ou de granulation pour obtenir des particules de polymère greffé agglomérées ou granulées, un tel procédé étant de préférence choisi parmi l'agglomération par pulvérisation, la granulation ou le séchage dans un séchoir à lit fluidisé, un dispositif de granulation par pulvérisation.

10. Procédé selon l'une quelconque des revendications 6 à 9, dans lequel la quantité d'eau est faible, de préférence inférieure à 5 % en poids par rapport au solvant total, plus préférablement inférieure à 1 %.

11. Utilisation d'au moins un polymère greffé selon l'une quelconque des revendications 1 à 5 ou obtenu par ou pouvant être obtenu par le procédé selon l'une quelconque des revendications 6 à 10 dans une composition, c'est-à-dire
un produit d'entretien des tissus et ménager, une composition de nettoyage, un produit de nettoyage industriel et institutionnel, un produit de soins cosmétiques ou personnels, une formulation pour champs pétrolifères telle qu'un briseur d'émulsion de pétrole brut, une dispersion de pigments pour encres telles que les encres pour jet d'encre, un produit de galvanoplastie, une composition cimentaire, une laque, une peinture, des formulations agrochimiques,
de préférence dans des compositions de nettoyage et/ou dans des produits d'entretien de tissus et ménager, plus préférablement, dans des compositions de nettoyage pour l'entretien des textiles et ménager, la composition de nettoyage étant de préférence une formulation de détergent pour lessive ou une formulation de détergent pour lave-vaisselle,
de telles compositions de nettoyage comprenant en outre de préférence au moins une enzyme, de préférence choisie parmi une ou plusieurs lipases, hydrolases, amylases, protéases, cellulases, hémicellulases, phospholipases, estérases, pectinases, lactases, pectate lyases, cutinases, DNases, xylanases, oxicoreductases, dispersines, mannanases et peroxydases, et des combinaisons d'au moins deux des types précédents, de préférence au moins une enzyme étant choisie parmi une ou plusieurs lipases, hydrolases, amylases, protéases, cellulases, plus préférablement au moins une lipase,
dans lequel l'au moins un polymère greffé est présent en une quantité allant d'environ 0,01 % à environ 20 %, de préférence d'environ 0,05 % à 15 %, plus préférablement d'environ 0,1 % à environ 10 %, et plus préférablement d'environ 0,5 % à environ 5 %, par rapport au poids total d'une telle composition ou d'un tel produit,
et un tel produit ou une telle composition comprenant en outre d'environ 1 % à environ 70 % en poids d'un système de tensioactif.

12. Composition qui est un détergent pour lessive, une composition de lavage de la vaisselle, une composition de nettoyage et/ou un produit d'entretien de tissus et ménager contenant au moins un polymère greffé selon l'une des revendications 1 à 5 ou obtenu par le procédé selon l'une quelconque des revendications 6 à 10.

13. Composition selon la revendication 12, comprenant en outre au moins l'un parmi i) et ii),
i) un agent antimicrobien choisi dans le groupe constitué par le 2-phénoxyéthanol ; comprenant de préférence ledit agent antimicrobien en une quantité allant de 2 ppm à 5 % en poids de la composition ; comprenant de préférence 0,1 à 2 % de phénoxyéthanol, et
ii) 4,4'-dichloro 2-hydroxydiphényléther à une concentration de 0,001 à 3 %, de préférence de 0,002 à 1 %, plus préférablement de 0,01 à 0,6 %, chacun en poids de la composition.

14. Procédé de conservation d'une composition selon l'une quelconque des revendications 12 ou 13ii) contre la contamination ou la croissance microbienne, lequel procédé comprend l'ajout d'un agent antimicrobien choisi dans le groupe constitué par le 2-phénoxyéthanol à la composition qui est une composition aqueuse comprenant de l'eau comme solvant.

15. Procédé de lessivage de tissu ou de nettoyage de surfaces dures, lequel procédé comprend le traitement d'un tissu ou d'une surface dure avec une composition selon l'une quelconque des revendications 12 ou 13i), dans lequel la composition comprend du 4,4'-dichloro 2-hydroxydiphényléther, de préférence comprenant du 4,4'-dichloro 2-hydroxydiphényléther en une concentration de 0,001 à 3 %, de préférence de 0,002 à 1 %, plus préférablement de 0,01 à 0,6 %, chacun en poids de la composition.
